# EUROPEAN PATENT APPLICATION

(11) **EP 4 462 938 A1**
(43) Date of publication of application: **13.11.2024**
(21) Application number: 22923367.1
(22) Date of filing: 31.10.2022
(51) Int. Cl.: H04W 76/00

(54) **COMMUNICATION METHOD AND APPARATUS, AND READABLE STORAGE MEDIUM AND CHIP SYSTEM**

(30) Priority: 30.01.2022 CN 202210113786
(71) Applicant: Huawei Technologies Co., Ltd., Shenzhen, Guangdong 518129 (CN)
(72) Inventor: ZHOU, Xiaoyun, Shenzhen, Guangdong 518129 (CN); ZONG, Zaifeng, Shenzhen, Guangdong 518129 (CN); LIAO, Ting, Shenzhen, Guangdong 518129 (CN); ZHENG, Xiaochun, Shenzhen, Guangdong 518129 (CN)
(74) Representative: Maiwald GmbH
(86) International application number: PCT/CN2022/128661
(87) International publication number: WO 2023/142569

(57) **Abstract**

A communication method and apparatus, a readable storage medium, and a chip system are provided, and relate to the field of communication technologies, to manage a passive or semi-passive terminal device by using an access network device. A first network element receives a first message. The first message is for requesting to perform a target operation on one or more terminal devices. The first network element sends request information to an access network device. The request information is for requesting to obtain identification information of the one or more terminal devices. The first network element receives identification information of a first terminal device from the first terminal device. Because a distance between the access network device and the terminal device can be longer, when passive or semi-passive terminal devices are deployed on a large scale, management of the passive or semi-passive terminal devices can be improved by using the access network device.

## Description

### CROSS-REFERENCE TO RELATED APPLICATIONS

This application claims priority to Chinese Patent Application No. 202210113786.2, filed with the China National Intellectual Property Administration on January 30, 2022 and entitled "COMMUNICATION METHOD AND APPARATUS, READABLE STORAGE MEDIUM, AND CHIP SYSTEM", which is incorporated herein by reference in its entirety.

### TECHNICAL FIELD

This application relates to the field of communication technologies, and in particular, to a communication method and apparatus, a readable storage medium, and a chip system.

### BACKGROUND

Radio frequency identification (radio frequency identification, RFID) terminal devices (for example, tags) are widely used. For example, the RFID terminal device may be deployed in a logistics and warehousing scenario. The deployed RFID terminal device can be for implementing cargo inventorying and tracking, monitoring of an environment and a cargo status during transportation of high-value cargoes (for example, a vaccine), and the like. For another example, the RFID terminal device may be deployed in an industrial manufacturing scenario. The deployed RFID terminal device can monitor an environment and a device status.

The radio frequency identification (radio frequency identification, RFID) terminal devices (for example, the tags) have a prospect of large-scale deployment and application. It is predicted that hundreds of billions of devices will be covered in the future. A working technical principle of a passive RFID or semi-passive terminal device is as follows: The terminal device converts a wireless signal sent by a reader (or referred to as a card reader) into energy, and drives the terminal device to work by using the energy.

Information sent by a passive or semi-passive terminal device relies on external excitation, and the excitation is generally from a reader. In addition, a communication distance between the reader and the passive or semi-passive terminal device needs to meet a specific condition, and cannot excessively long. In this case, how to manage passive or semi-passive terminal devices in a scenario in which the passive or semi-passive terminal devices are deployed on a large scale becomes an urgent problem to be resolved.

### SUMMARY

This application provides a communication method and apparatus, a readable storage medium, and a chip system, to manage a terminal device.

According to a first aspect, an embodiment of this application provides a communication method. The method is applicable to a first network element. The first network element receives a first message. The first message is for requesting to perform a target operation on one or more terminal devices. The first network element sends request information to an access network device. The request information is for requesting to obtain identification information of the one or more terminal devices. The first network element receives a second message from a first terminal device. The second message includes identification information of the first terminal device, and the first terminal device is a terminal device in the one or more terminal devices.

It can be learned from the foregoing content that, in this application, the access network device can send a message to a terminal device, to obtain identification information of the terminal device. Compared with that in a solution in which the terminal device is managed by using a card reader, in the solution in which the terminal device is managed by using the access network device and that is provided in this application, because a distance between the access network device and the terminal device can be longer, when passive or semi-passive terminal devices are deployed on a large scale, management of the passive or semi-passive terminal devices can be improved by using the access network device.

In a possible implementation, the first network element sends first indication information to the access network device. The first indication information indicates at least one of the following content: indicating that the target operation performed on the first terminal device is completed, indicating to query identification information of a next terminal device, or indicating to perform a next random access procedure.

In this application, after obtaining identification information of one terminal device, the first network element can continue to indicate the access network device to query identification information of a next terminal device. This can avoid signal interference caused when a plurality of terminal devices simultaneously report identification information to the access network device.

In a possible implementation, the target operation includes a first operation. The first operation is an operation of querying terminal device identification information for the one or more terminal devices.

In this way, after receiving the first message, the first network element can send the request information to the access network device based on the first message. Then, the access network device can query identification information of each terminal device, to implement a purpose of counting the terminal device by using the access network device.

In a possible implementation, the method further includes: The first network element obtains second indication information. The second indication information indicates to perform a second operation on the one or more terminal devices. After that the first network element receives a second message from a first terminal device and before that the first network element sends first indication information to the access network device, the method further includes: The first network element sends the second indication information to the first terminal device, and the first network element receives execution result information that corresponds to the second operation and that is from the first terminal device.

In this way, the first network element can not only query the identification information of the terminal device by using the access network device, but also perform the second operation on the terminal device. Consequently, the first network element can have more management rights for the terminal device.

In a possible implementation, the first indication information further indicates that a second operation performed on the first terminal device is completed.

In other words, when the first network element further performs the second operation on the first terminal device, the first network element may deliver the first indication information to the access network device after completing the second operation performed on the first terminal device. After receiving the first indication information, the access network device may determine that the identification information of the terminal device is obtained currently and completes the second operation performed on the first terminal device, and then start to perform a similar operation on the next terminal device. This can avoid signal interference caused when the plurality of terminal devices simultaneously send information.

In a possible implementation, that the first network element obtains second indication information includes: The first network element obtains the second indication information from the first message. The target operation includes the second operation.

In this way, an application function network element can deliver the indication information of the second operation before querying the identification information of the terminal device. For example, the application function network element may carry, by using a piece of signaling, information for requesting to query the identification information of the terminal device and the second indication information. In this way, signaling interaction can be reduced.

In a possible implementation, after receiving the second message, the first network element receives the second indication information from an application function network element.

In this way, the application function network element can send, by using a plurality of pieces of signaling, the information for requesting to query the identification information of the terminal device and the second indication information. This can improve flexibility of the solution. In another possible implementation, after receiving the second message, the first network element may send the identification information of the first terminal device to an application function network element. Subsequently, the application function network element may deliver the second indication information to the first terminal device after receiving the identification information of the first terminal device. In this way, the application function network element can separately deliver, to each queried terminal device, second indication information corresponding to the terminal device. Consequently, the application function network element can more flexibly perform a corresponding second operation on each terminal device.

In a possible implementation, the second operation includes at least one of the following content: a read operation, a write operation, an access operation, a kill operation, a lock operation, a block write operation, or a block erase operation.

In this way, the application function network element can implement a large quantity of types of operations on the terminal device by using the access network device. This can improve a capability of the application function network element to manage the terminal device by using the access network device.

In a possible implementation, the target operation includes a third operation. The request information further includes indication information of the third operation. The second message further includes execution result information corresponding to the third operation.

After receiving the first message, the first network element also delivers the indication information of the third operation to the access network device. Therefore, the first terminal device can carry, in the second message, the execution result information corresponding to the third operation. This can increase a speed of obtaining, by the first network element, the execution result information corresponding to the third operation.

In a possible implementation, the third operation includes a read operation, a write operation, an access operation, a kill operation, a lock operation, a block write operation, or a block erase operation.

When the third operation is the read operation, the execution result information corresponding to the third operation includes data read from the first terminal device. After receiving the first message, the first network element also delivers the indication information of the third operation to the access network device. Therefore, the first terminal device can carry, in the second message, the execution result information corresponding to the third operation. This can increase the speed of obtaining, by the first network element, the execution result information corresponding to the third operation. The first network element further needs to send, to the application function network element, the data read through the read operation. Therefore, when the first network element obtains the read data earlier, the first network element can send the read data to the application function network element earlier. This can increase an execution speed of a counting procedure of the first terminal device.

In a possible implementation, the first message further includes indication information of a target area and/or application identification information, and the access network device is an access network device in the target area. After that the first network element receives a first message and before that the first network element sends request information to an access network device, the method further includes: The first network element determines the access network device based on the indication information of the target area and/or the application identification information.

In this way, the first network element can determine, based on the indication information of the target area, the access network device deployed in the target area, and then count the terminal device by using the determined access network device. Alternatively, the first network element can determine, based on the application identification information, a deployment area of a terminal device corresponding to the application identification information, subsequently determine an access network device in the deployment area of the terminal device, and then count the terminal device based on the determined access network device. In addition, the application function network element can enable, in a manner of indicating the target area or indicating the application identification information, the access network device to query each terminal device that needs to be counted. Therefore, a requirement on a parameter that needs to be input by the application function network element can be reduced, and difficulty in sending a counting request instruction by a user at the application function network element can be reduced.

In a possible implementation, the first message and/or the request information further includes terminal device indication information. The terminal device indication information includes at least one of the following content:
a terminal device identifier value interval, where the terminal device in the one or more terminal devices is a terminal device corresponding to an identifier in the terminal device identifier value interval;
a terminal device identifier list, where the terminal device in the one or more terminal devices is a terminal device corresponding to an identifier included in the terminal device identifier list;
a terminal device group identifier, where the terminal device in the one or more terminal devices is a terminal device included in a terminal device group corresponding to the terminal device group identifier;
user identification information, where the terminal device in the one or more terminal devices is a terminal device corresponding to the user identification information;
application identification information, where the terminal device in the one or more terminal devices is a terminal device corresponding to an application corresponding to the application identification information; or
indication information for indicating any queried terminal device, where the terminal device in the one or more terminal devices is any terminal device in the terminal device queried by the access network device.

In this way, a user can indicate, on the application function network element in a plurality of possible manners, a terminal device that needs to be counted. This can improve flexibility of the solution.

In a possible implementation, the second message is for requesting to register the first terminal device.

After the first network element sends a request message to the access network device, the first terminal device can initiate a registration procedure after receiving a message sent by the access network device. Therefore, when the first terminal device is a passive or semi-passive terminal device, the terminal device may also be considered as a regular terminal device for registration. This can implement a solution of managing the passive or semi-passive terminal device by using a core network element.

In a possible implementation, after that the first network element receives a second message from a first terminal device, the method further includes: The first network element sends a first authentication request message. The first authentication request message is for requesting to perform authentication on the first terminal device, and/or is used by the first terminal device to perform authentication on a network accessed by the first terminal device.

In this way, the first network element can initiate a procedure of authentication between the first terminal device and an authentication server. This can improve network security.

In a possible implementation, the application function network element determines to perform authentication on the one or more terminals, and may carry a first authentication random number in the first message. The first authentication random number is for performing authentication on the one or more terminal devices. The application function network element may obtain the first authentication random number by interacting with the authentication server.

Further, after receiving the first authentication random number, the first network element may further send the first authentication random number to the access network device. Then, the access network device sends the first random number to the first terminal device. The second message sent by the first terminal device to the first network element includes a first ciphertext. The first ciphertext is obtained by encrypting the first authentication random number. In this application, the first ciphertext may also be understood as being obtained after digital signature is performed on the first authentication random number.

When the first authentication request message sent by the first network element is for requesting to perform authentication on the first terminal device, the first authentication request message may include the first ciphertext. It may also be understood that, when the first authentication request message includes the first ciphertext, it may indicate that the first authentication request message is for requesting to perform authentication on the first terminal device.

Further, when the first authentication request message is for requesting to perform authentication on the first terminal device, the authentication server decrypts the first ciphertext based on a configured key and then determines that a decrypted first ciphertext is the first authentication random number. In this case, it may be determined that authentication succeeds. The authentication server may send an authentication success indication to the AMF. On the contrary, if the authentication server decrypts the first ciphertext based on a configured key and then determines that a decrypted first ciphertext is not the first authentication random number, it may be determined that authentication fails.

In a possible implementation, the second message further includes a second authentication random number. The second authentication random number is used by the first terminal device to authenticate the network accessed by the first terminal device. The second authentication random number may be generated by the first terminal device.

When the first authentication request message is for requesting to perform authentication on the network accessed by the first terminal device, the first authentication request message includes the second authentication random number. It may also be understood that, when the first authentication request message includes the second authentication random number, it may indicate that the first authentication request message is for requesting to perform authentication on the network accessed by the first terminal device.

Further, when the first authentication request message is for requesting to perform authentication on the network accessed by the first terminal device, the authentication server may encrypt the second authentication random number based on a configured key, to generate a second ciphertext, and send the second ciphertext to the AMF. Then, the AMF sends the second ciphertext to the first terminal device. The first terminal device decrypts the second ciphertext based on the configured key and then determines that a decrypted second ciphertext is the second random number. In this case, authentication succeeds. Then, the first terminal device sends an authentication success indication to the AMF.

In another possible implementation, a second authentication request message may include a second authentication random number and a first ciphertext. In this case, the first authentication request message is for requesting to perform authentication on the first terminal device, and is also for requesting to perform authentication on a network accessed by the first terminal device. For related content, refer to the foregoing content. Details are not described again.

In a possible implementation, when the method is performed by a management function network element, after that the first network element receives a second message from a first terminal device, the method further includes: The first network element sends a second authentication request message to an access and mobility management function network element. The second authentication request message is for requesting the access and mobility management function network element to initiate authentication to be performed on the first terminal device and/or authentication to be performed on the network accessed by the first terminal device.

In this way, the first network element can trigger the access and mobility management function network element to initiate the procedure of authentication between the first terminal device and the authentication server. This can improve network security.

In a possible implementation, the first message further includes address information of the authentication server and/or third indication information. The third indication information indicates to perform authentication on the first terminal device and/or perform authentication on the network accessed by the first terminal device. After that the first network element receives a second message from a first terminal device, the method further includes: The first network element determines, based on the address information of the authentication server and/or the third indication information, to perform authentication on the first terminal device and/or to perform authentication on the network accessed by the first terminal device.

In this way, the first network element can determine, based on the address information of the authentication server and/or the third indication information, whether the first terminal device needs to be authenticated. In one aspect, network security can be improved. In another aspect, because the terminal device that needs to be authenticated can be flexibly indicated by using the address information of the authentication server and/or the third indication information, flexibility of managing the terminal device can be improved.

In a possible implementation, after that the first network element receives a second message from a first terminal device, the method further includes: The first network element receives an authentication success response message. The authentication success response message indicates that the first terminal device is successfully authenticated, and/or the network accessed by the first terminal device is successfully authenticated. The first network element sends the identification information of the first terminal device to the application function network element.

The first network element returns the identification information of the first terminal device to the application function network element only after determining that the first terminal device is successfully authenticated. This can improve reliability of information fed back by the first network element to the application function network element, and reduce occurrence of an incorrect counting phenomenon.

In a possible implementation, after that the first network element sends first indication information to the access network device, the method further includes: The first network element sends a sixth message to the application function network element. The sixth message includes the identification information of the first terminal device and identification information of another terminal device in the one or more terminal devices.

In this way, after obtaining the identification information of the plurality of terminal devices, the first network element can feed back the identification information of the plurality of terminal devices to the application function network element by using one piece of signaling. In one aspect, this can improve flexibility of the solution. In another aspect, this can also reduce signaling interaction between the first network element and the application function network element.

In a possible implementation, the target operation includes the second operation. After that the first network element receives a second message from a first terminal device, the method further includes: The first network element receives an authentication success response message. The authentication success response message indicates that the authentication server successfully authenticates the first terminal device, and/or successfully authenticates the network accessed by the first terminal device. The first network element sends the identification information of the first terminal device to the application function network element. The first network element sends, to the application function network element, the execution result information obtained by performing the second operation on the first terminal device.

The first network element returns the identification information of the first terminal device and the execution result information of the second operation to the application function network element only after determining that the first terminal device is successfully authenticated. This can improve reliability of information fed back by the first network element to the application function network element, and reduce occurrence of an incorrect counting phenomenon.

In a possible implementation, after that the first network element sends first indication information to the access network device, the method further includes: The first network element sends a seventh message to the application function network element. The seventh message includes the identification information of the first terminal device, the execution result information obtained by performing the second operation on the first terminal device, the identification information of the another terminal device in the one or more terminal devices, and execution result information obtained by performing the second operation on the another terminal device in the one or more terminal devices.

In this way, after obtaining the identification information of the plurality of terminal devices and execution result information obtained by performing the second operation on the plurality of terminal devices, the first network element can feed back, to the application function network element by using one piece of signaling, the identification information of the plurality of terminal devices and the execution result information obtained by performing the second operation on the plurality of terminal devices. In one aspect, this can improve flexibility of the solution. In another aspect, this can also reduce signaling interaction between the first network element and the application function network element.

In a possible implementation, the second operation includes the read operation, and the execution result information corresponding to the second operation includes data obtained after the read operation is performed. Before that the first network element sends, to the application function network element, the execution result information obtained by performing the second operation on the first terminal device, the method further includes: The first network element receives a key from the authentication server. The first network element sends the key to the first terminal device. The data in the execution result information that corresponds to the second operation and that is received from the first terminal device is encrypted by using the key.

In this way, security of the data can be improved.

In a possible implementation, after that the first network element sends first indication information to the access network device, the method further includes: The first network element receives fourth indication information from the access network device. The fourth indication information indicates that the target operation performed on a terminal device that corresponds to the access network device and that is in the one or more terminal devices is completed.

In a possible implementation, the first network element sends fifth indication information to the application function network element. The fifth indication information indicates that the target operation performed on the one or more terminal devices is completed.

In this way, the application function network element can determine, based on the fifth indication information, that counting requested this time has ended, and then may present a counting result to the user based on all currently obtained information.

In a possible implementation, the terminal device in the one or more terminal devices includes a passive or semi-passive (passive) tag.

In this way, the first network element can manage the passive or semi-passive tag by using the access network device. Compared with that in a manner in which the card reader manages the tag, in this solution, the passive or semi-passive tag can be considered as an ordinary terminal device, and the passive or semi-passive tag is enabled to access the network. Compared with that in the solution in which the card reader manages the terminal device, in the solution in which the access network device manages the terminal device and that is provided in this application, because a distance between the access network device and the terminal device can be longer, when passive or semi-passive terminal devices are deployed on a large scale, management of the passive or semi-passive terminal devices can be improved by using the access network device.

According to a second aspect, an embodiment of this application provides a communication method. The method is applicable to a terminal device. An example in which the first terminal device performs the method is used for description. The method includes: The first terminal device receives a third message from an access network device. The third message is for requesting to obtain identification information of one or more terminal devices. The first terminal device sends a second message to a first network element. The second message includes identification information of the first terminal device. The first terminal device is a terminal device in the one or more terminal devices.

In this way, in this application, the access network device can send a message to a terminal device, to obtain identification information of the terminal device. Compared with that in a solution in which the terminal device is managed by using a card reader, in the solution in which the terminal device is managed by using the access network device and that is provided in this application, because a distance between the access network device and the terminal device can be longer, when passive or semi-passive terminal devices are deployed on a large scale, management of the passive or semi-passive terminal devices can be improved by using the access network device.

In a possible implementation, the second message may be a registration request message, and the registration request message is for requesting to register the first terminal device.

The first terminal device can initiate a registration procedure after receiving a message sent by the access network device. Therefore, when the first terminal device is a passive or semi-passive terminal device, the terminal device may also be considered as a regular terminal device for registration. This can implement a solution of managing the passive or semi-passive terminal device by using a core network element.

In a possible implementation, the first terminal device sends a first identifier to the access network device. The first identifier is randomly generated by the first terminal device. The first terminal device receives the first identifier from the access network device. The first identifier from the access network device indicates that random access of the first terminal device succeeds.

In this way, in a process in which the first terminal device and the access network device can send random numbers to each other, the access network device selects the first terminal device, and indicates to the first terminal device that random access of the first terminal device succeeds, and then the first terminal device initiates the registration procedure. In this way, terminal devices in an area managed by the access network device can be enabled to perform a random access process one by one rather than a plurality of terminal devices perform the random access process together. This can avoid an interference problem caused when the plurality of terminal devices simultaneously perform the random access process.

In a possible implementation, before that the first terminal device receives a third message from an access network device, the method further includes: The first terminal device receives a selection message from the access network device. The selection message is for selecting a terminal device in the one or more terminal devices, and the selection message includes a first authentication random number for authenticating the one or more terminal devices.

In a possible implementation, the registration request message sent by the first terminal device includes a first ciphertext, and the first ciphertext is obtained by encrypting the first authentication random number. In this application, the first ciphertext may also be understood as being obtained after digital signature is performed on the first authentication random number.

In this way, when determining that authentication needs to be performed on the first terminal device, the first network element can send a first authentication request message to an authentication server. The first authentication request message may include the first ciphertext. It may also be understood that, when the first authentication request message includes the first ciphertext, it may indicate that the first authentication request message is for requesting to perform authentication on the first terminal device.

Further, when the first authentication request message is for requesting to perform authentication on the first terminal device, the authentication server decrypts the first ciphertext based on a configured key and then determines that a decrypted first ciphertext is the first authentication random number. In this case, it may be determined that authentication succeeds. The authentication server may send an authentication success indication to an AMF. On the contrary, if the authentication server decrypts the first ciphertext based on a configured key and then determines that a decrypted first ciphertext is not the first authentication random number, it may be determined that authentication fails.

In a possible implementation, the registration request message further includes a second authentication random number. The second authentication random number is used by the first terminal device to authenticate a network accessed by the first terminal device. The second authentication random number may be generated by the first terminal device.

When the first authentication request message is for requesting to perform authentication on the network accessed by the first terminal device, the first authentication request message includes the second authentication random number. It may also be understood that, when the first authentication request message includes the second authentication random number, it may indicate that the first authentication request message is for requesting to perform authentication on the network accessed by the first terminal device.

Further, when the first authentication request message is for requesting to perform authentication on the network accessed by the first terminal device, the authentication server may encrypt the second authentication random number based on a configured key, to generate a second ciphertext, and send the second ciphertext to the AMF. Then, the AMF sends the second ciphertext to the first terminal device. The first terminal device decrypts the second ciphertext based on the configured key and then determines that a decrypted second ciphertext is the second random number. In this case, authentication succeeds. Then, the first terminal device sends an authentication success indication to the AMF.

In another possible implementation, the registration request message may include a second authentication random number and a first ciphertext. In this case, the first authentication request message is for requesting to perform authentication on the first terminal device, and is also for requesting to perform authentication on a network accessed by the first terminal device. For related content, refer to the foregoing content. Details are not described again.

In a possible implementation, the method further includes: The first terminal device receives second indication information. The second indication information indicates to perform a second operation on the one or more terminal devices. The first terminal device sends execution result information corresponding to the second operation to the first network element.

In this way, the first network element can not only query the identification information of the terminal device by using the access network device, but also perform the second operation on the terminal device. Consequently, the first network element can have more management rights for the terminal device.

In a possible implementation, the second operation includes at least one of the following content: a read operation, a write operation, an access operation, a kill operation, a lock operation, a block write operation, or a block erase operation.

In this way, an application function network element can implement a large quantity of types of operations on the terminal device by using the access network device. This can improve a capability of the application function network element to manage the terminal device by using the access network device.

In a possible implementation, the third message includes indication information indicating to perform a third operation on the first terminal device. The second message further includes execution result information corresponding to the third operation.

The access network device also delivers the indication information of the third operation to the first terminal device. Therefore, the first terminal device can carry, in the second message, the execution result information corresponding to the third operation. This can increase a speed of obtaining, by the first network element, the execution result information corresponding to the third operation.

In a possible implementation, the third operation includes a read operation, a write operation, an access operation, a kill operation, a lock operation, a block write operation, or a block erase operation.

When the third operation is the read operation, the execution result information corresponding to the third operation includes data read from the first terminal device. After receiving the first message, the first network element also delivers the indication information of the third operation to the access network device. Therefore, the first terminal device can carry, in the second message, the execution result information corresponding to the third operation. This can increase the speed of obtaining, by the first network element, the execution result information corresponding to the third operation. The first network element further needs to send, to the application function network element, the data read through the read operation. Therefore, when the first network element obtains the read data earlier, the first network element can send the read data to the application function network element earlier. This can increase an execution speed of a counting procedure of the first terminal device.

In a possible implementation, before that the first terminal device sends execution result information corresponding to the second operation to the first network element, the method further includes: The first terminal device receives a key from the authentication server. The key is for encrypting to-be-sent information.

In this way, security of the data can be improved.

In a possible implementation, the first terminal device includes a passive or semi-passive (passive) tag.

For related beneficial effects, refer to the related descriptions in the possible implementation of the first aspect. Details are not described again.

According to a third aspect, an embodiment of this application provides a communication method. The method is applicable to an access network device. The method includes: The access network device receives request information from a first network element. The request information is for requesting to obtain identification information of one or more terminal devices. The access network device sends a third message to a first terminal device. The third message is for requesting to obtain the identification information of the one or more terminal devices. The access network device receives a fourth message from the first terminal device. The fourth message includes identification information of the first terminal device. The first terminal device is a terminal device in the one or more terminal devices. The access network device sends an eighth message to the first network element. The eighth message includes the identification information of the first terminal device.

It can be learned from the foregoing content that, in this application, the access network device can send a message to a terminal device, to obtain identification information of the terminal device. Compared with that in a solution in which the terminal device is managed by using a card reader, in the solution in which the terminal device is managed by using the access network device and that is provided in this application, because a distance between the access network device and the terminal device can be longer, when passive or semi-passive terminal devices are deployed on a large scale, management of the passive or semi-passive terminal devices can be improved by using the access network device.

In a possible implementation, after that the access network device sends an eighth message to the first network element, the method further includes: The access network device receives first indication information from the first network element. The first indication information indicates at least one of the following content: indicating to that a target operation performed on the first terminal device is completed, indicating to query identification information of a next terminal device, or indicating to perform a next random access procedure. The access network device sends a fifth message to the one or more terminal devices. The fifth message is for requesting to obtain the identification information of the one or more terminal devices.

In this application, after obtaining identification information of one terminal device, the first network element can continue to indicate the access network device to query identification information of a next terminal device. This can avoid signal interference caused when a plurality of terminal devices simultaneously report identification information to the access network device.

In a possible implementation, before that the access network device receives first indication information from the first network element, the method further includes: The access network device receives second indication information from the first network element. The second indication information indicates to perform a second operation on the one or more terminal devices. The access network device sends the second indication information to the first terminal device. The access network device receives execution result information that corresponds to the second operation and that is from the first terminal device. The access network device sends the execution result information corresponding to the second operation to the first network element.

In this way, the first network element can not only query the identification information of the terminal device by using the access network device, but also perform the second operation on the terminal device. Consequently, the first network element can have more management rights for the terminal device.

In a possible implementation, the second operation includes at least one of the following content: a read operation, a write operation, an access operation, a kill operation, a lock operation, a block write operation, or a block erase operation.

In other words, when the first network element further performs the second operation on the first terminal device, the first network element may deliver the first indication information to the access network device after completing the second operation performed on the first terminal device. After receiving the first indication information, the access network device may determine that the identification information of the terminal device is obtained currently and completes the second operation performed on the first terminal device, and then start to perform a similar operation on the next terminal device. This can avoid signal interference caused when the plurality of terminal devices simultaneously send information.

In a possible implementation, the request information includes indication information indicating a third operation. The fourth message further includes execution result information corresponding to the third operation. The eighth message further includes the execution result information corresponding to the third operation.

The first network element also delivers the indication information of the third operation to the access network device. Therefore, the first terminal device can feed back, to the first network element by using the access network device, the identification information of the first terminal device and the execution result information corresponding to the third operation. This can increase a speed of obtaining, by the first network element, the execution result information corresponding to the third operation.

In a possible implementation, the third operation includes a read operation, a write operation, an access operation, a kill operation, a lock operation, a block write operation, or a block erase operation.

When the third operation is the read operation, the execution result information corresponding to the third operation includes data read from the first terminal device. The first network element also delivers the indication information of the third operation to the access network device after receiving the first message. Therefore, the first terminal device feeds back, to the first network element by using the access network device, the identification information of the first terminal device and the execution result information corresponding to the third operation. This can increase the speed of obtaining, by the first network element, the execution result information corresponding to the third operation. The first network element further needs to send, to an application function network element, the data read through the read operation. Therefore, when the first network element obtains the read data earlier, the first network element can send the read data to the application function network element earlier. This can increase an execution speed of a counting procedure of the first terminal device.

In a possible implementation, the request information further includes terminal device indication information. For related content of the terminal device indication information, refer to the related descriptions in the possible implementation of the first aspect. Details are not described again.

In a possible implementation, after that the access network device receives a fourth message from the first terminal device, the method further includes: After the access network device determines that the target operation on a terminal device that corresponds to the access network device and that is in the one or more terminal devices is completed, the access network device sends fourth indication information to the first network element. The fourth indication information indicates that the target operation performed on the terminal device that corresponds to the access network device and that is in the one or more terminal devices is completed.

In this way, the first network element can determine, based on the fourth indication information, that the access network device completes counting all the terminal devices, and then can end current counting of the access network device.

In a possible implementation, the terminal device in the one or more terminal devices includes a passive or semi-passive (passive) tag. For related beneficial effects, refer to the related descriptions in the possible implementation of the first aspect. Details are not described again.

In a possible implementation, the request information further includes a first authentication random number. The first authentication random number for performing authentication on the one or more terminal devices. Before the access network device sends the third message to the one or more terminal devices, the access network device may further send the first authentication random number to the one or more terminal devices.

In this way, when the first terminal device needs to be authenticated, the first terminal device can be authenticated based on the first authentication random number.

Corresponding to any communication method according to the first aspect to the third aspect, this application further provides a communication apparatus. The communication apparatus may be any transmit end device or receive end device that performs data transmission in a wireless manner, for example, a communication chip, a terminal device, or a network device (for example, a first network element or an access network device, where the first network element may be a core network device). In a communication process, the transmit end device and the receive end device are relative concepts. In some communication processes, the communication apparatus may be used as the foregoing network device or a communication chip that may be used in the network device. In some communication processes, the communication apparatus may be used as the foregoing terminal device or a communication chip that may be used in the terminal device.

According to a fourth aspect, a communication apparatus is provided. The communication apparatus is the foregoing first network element, terminal device (for example, the first terminal device), or access network device. The apparatus may include a communication unit and a processing unit, to perform any implementation of any communication method according to the first aspect to the third aspect. The communication unit is configured to perform functions related to sending and receiving. Optionally, the communication unit includes a receiving unit and a sending unit. In a design, the communication apparatus is a communication chip, and the communication unit may be an input/output circuit or a port of the communication chip.

In another design, the communication unit may be a transmitter and a receiver. Alternatively, the communication unit may be a transmitting machine and a receiving machine.

Optionally, the communication apparatus further includes modules that may be configured to perform any implementation of any communication method according to the first aspect to the third aspect.

According to a fifth aspect, a communication apparatus is provided. The communication apparatus is the foregoing first network element, terminal device (for example, the first terminal device), or access network device. The apparatus may include a processor and a memory. Optionally, the apparatus further includes a transceiver. The memory is configured to store a computer program or instructions. The processor is configured to: invoke the computer program or the instructions from the memory and run the computer program or the instructions. When the processor executes the computer program or the instructions in the memory, the communication apparatus is enabled to perform any implementation of any communication method according to the first aspect to the third aspect.

Optionally, there are one or more processors, and there are one or more memories.

Optionally, the memory may be integrated with the processor, or the memory is disposed separately from the processor.

Optionally, the transceiver may include a transmitting machine (transmitter) and a receiving machine (receiver).

According to a sixth aspect, a communication apparatus is provided. The communication apparatus is the foregoing first network element, terminal device (for example, the first terminal device), or access network device. The apparatus may include a processor. The processor is coupled to a memory, and may be configured to perform the method according to any one of the first aspect to the third aspect and the possible implementations of the first aspect to the third aspect. Optionally, the communication apparatus further includes a memory. Optionally, the communication apparatus further includes a communication interface, and the processor is coupled to the communication interface.

In an implementation, the communication apparatus is a terminal device. When the communication apparatus is a terminal device, the communication interface may be a transceiver or an input/output interface. Optionally, the transceiver may be a transceiver circuit. Optionally, the input/output interface may be an input/output circuit.

In another implementation, the communication apparatus is a network device. When the communication apparatus is a network device, the communication interface may be a transceiver or an input/output interface. Optionally, the transceiver may be a transceiver circuit. Optionally, the input/output interface may be an input/output circuit.

In still another implementation, the communication apparatus is a chip or a chip system. When the communication apparatus is a chip or a chip system, the communication interface may be an input/output interface, an interface circuit, an output circuit, an input circuit, a pin, a related circuit, or the like on the chip or the chip system. The processor may alternatively be embodied as a processing circuit or a logic circuit.

According to a seventh aspect, a system is provided. The system includes one or more of the foregoing first network element and the access network device.

Optionally, the system further includes a terminal device (for example, a first terminal device).

According to an eighth aspect, a computer program product is provided. The computer program product includes a computer program (which may also be referred to as code or instructions). When the computer program is run, a computer is enabled to perform the method according to any possible implementation of the first aspect, or a computer is enabled to perform the method according to any implementation of the first aspect to the third aspect.

According to a ninth aspect, a computer-readable storage medium is provided. The computer-readable storage medium stores a computer program (which may also be referred to as code or instructions). When the computer program is run on a computer, the computer is enabled to perform the method according to any possible implementation of the first aspect, or the computer is enabled to perform the method according to any implementation of the first aspect to the third aspect.

According to a tenth aspect, a chip system is provided. The chip system may include a processor. The processor is coupled to a memory, and may be configured to: perform the method according to any one of the first aspect to the third aspect and the possible implementations of the first aspect to the third aspect. Optionally, the chip system further includes a memory. The memory is configured to store a computer program (which may also be referred to as code or instructions). The processor is configured to: invoke the computer program from the memory and run the computer program, to enable a device equipped with chip system to perform the method according to any one of the first aspect to the third aspect and the possible implementations of the first aspect to the third aspect.

According to an eleventh aspect, a processing apparatus is provided, including an input circuit, an output circuit, and a processing circuit. The processing circuit is configured to: receive a signal through the input circuit, and transmit a signal through the output circuit, so that the method according to any one of the first aspect to the third aspect and the possible implementations of the first aspect to the third aspect is implemented.

In a specific implementation process, the processing apparatus may be a chip, the input circuit may be an input pin, the output circuit may be an output pin, and the processing circuit may be a transistor, a gate circuit, a trigger, any logic circuit, or the like. An input signal received by the input circuit may be received and input by, for example, but not limited to, a receiver, a signal output by the output circuit may be output to, for example, but not limited to, a transmitter and transmitted by the transmitter, and the input circuit and the output circuit may be a same circuit, where the circuit separately is used as the input circuit and the output circuit at different moments. Specific implementations of the processor and the various circuits are not limited in embodiments of this application.

### BRIEF DESCRIPTION OF DRAWINGS

FIG. 1 is a schematic diagram of an architecture of an RFID system;
FIG. 2 is a schematic diagram of an architecture of a communication network system according to an embodiment of this application;
FIG. 3a is a schematic diagram of an architecture of another communication network system according to an embodiment of this application;
FIG. 3b is a schematic diagram of an architecture of still another communication network system according to an embodiment of this application;
FIG. 4a is a schematic diagram of an architecture of still another communication network system according to an embodiment of this application;
FIG. 4b is a schematic diagram of an architecture of still another communication network system according to an embodiment of this application;
FIG. 4c is a schematic diagram of an architecture of still another communication network system according to an embodiment of this application;
FIG. 4d is a schematic diagram of an architecture of still another communication network system according to an embodiment of this application;
FIG. 4e is a schematic diagram of an architecture of still another communication network system according to an embodiment of this application;
FIG. 4f is a schematic diagram of an architecture of still another communication network system according to an embodiment of this application;
FIG. 4g is a schematic diagram of an architecture of still another communication network system according to an embodiment of this application;
FIG. 5 is a schematic flowchart of a communication method according to an embodiment of this application;
FIG. 6A and FIG. 6B are a schematic flowchart of another communication method according to an embodiment of this application;
FIG. 7A and FIG. 7B are a schematic flowchart of still another communication method according to an embodiment of this application;
FIG. 8A and FIG. 8B are a schematic flowchart of still another communication method according to an embodiment of this application;
FIG. 9A and FIG. 9B are a schematic flowchart of still another communication method according to an embodiment of this application;
FIG. 10A and FIG. 10B are a schematic flowchart of still another communication method according to an embodiment of this application;
FIG. 11A and FIG. 11B are a schematic flowchart of still another communication method according to an embodiment of this application;
FIG. 12A and FIG. 12B are a schematic flowchart of still another communication method according to an embodiment of this application;
FIG. 13A and FIG. 13B are a schematic flowchart of still another communication method according to an embodiment of this application;
FIG. 14 is a schematic diagram of a structure of a communication apparatus according to an embodiment of this application;
FIG. 15 is a schematic diagram of a structure of a communication apparatus according to an embodiment of this application; and
FIG. 16 is a schematic diagram of a structure of a communication apparatus according to an embodiment of this application.

### DESCRIPTION OF EMBODIMENTS

The following describes a conventional radio frequency identification (Radio Frequency Identification, RFID) system.

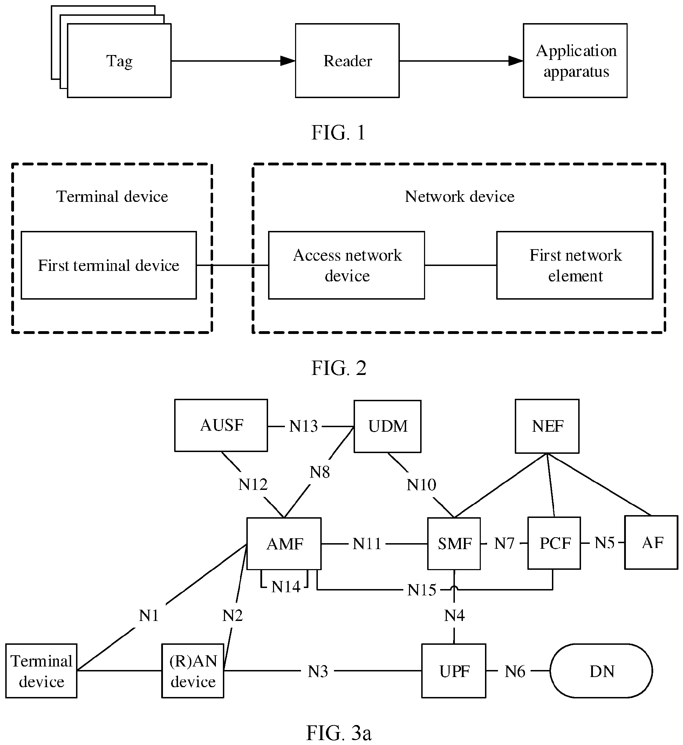

FIG. 1 is a schematic diagram of an architecture of a conventional RFID system, including a terminal device (which is presented in FIG. 1 by using an example in which the terminal device is a tag (Tag)), a reader (Reader), an application apparatus, and the like.

The terminal device may include a passive terminal device, a semi-passive terminal device, and an active terminal device (or referred to as an active terminal device). The passive terminal device or the semi-passive terminal device may be referred to as a passive (passive) terminal device.

For example, the terminal device is a tag. A working power supply of the passive (passive) tag needs to be provided by the reader. When the tag is outside a read range of the reader, the tag is in a passive state. When the tag is within a read range of the reader, the reader sends an excitation signal to generate a magnetic field around the reader. The tag may obtain an induced current in the magnetic field, and then send a response signal (for example, send product information stored in a chip) externally.

The solutions provided in embodiments of this application are applicable to the passive (passive) terminal device, for example, the passive terminal device or the semi-passive terminal device. The solutions provided in embodiments of this application may be used to manage the passive (passive) terminal device by using an access network device. The following provides further descriptions with reference to the accompanying drawings.

FIG. 2 shows an example of a schematic diagram of a possible system architecture to which an embodiment of this application is applicable. The system architecture shown in FIG. 1 includes a network device and a terminal device.

In FIG. 2, an example in which the network device includes an access network device and a first network element, and a terminal device is a first terminal device is used for description. In a possible implementation, the first network element in this embodiment of this application may be a core network element.

It should be understood that a quantity of network devices and a quantity of terminal devices in the system architecture are not limited in embodiments of this application. Moreover, in addition to the network device and the terminal device, the system architecture to which this embodiment of this application is applicable may further include another device, for example, a core network device, a wireless relay device, or a wireless backhaul device. This is not limited in embodiments of this application either. In addition, the network device in this embodiment of this application may integrate all functions into one independent physical device, or may distribute functions to a plurality of independent physical devices. This is not limited in embodiments of this application either. In addition, the terminal device in this embodiment of this application may be connected to the network device in a wireless manner.

As shown in FIG. 2, the first network element receives a first message. The first message is for requesting to perform a target operation on one or more terminal devices. The first network element sends request information to the access network device. The request information is for requesting to obtain identification information of the one or more terminal devices. Correspondingly, the access network device receives the request information from the first network element, and sends a third message to the first terminal device. The third message is for requesting to obtain the identification information of the one or more terminal devices. The first terminal device receives the third message from the access network device, and sends a second message to the first network element. The second message includes identification information of the first terminal device. The first terminal device is a terminal device in the one or more terminal devices. The first network element sends first indication information to the access network device. The first indication information indicates at least one of the following content: indicating that a target operation performed on the first terminal device is completed, indicating to query identification information of a next terminal device, or indicating to perform a next random access procedure.

Because a distance between the access network device and the terminal device can be longer, when passive or semi-passive terminal devices are deployed on a large scale, management of the passive or semi-passive terminal devices can be improved by using the access network device.

The technical solutions in embodiments of this application may be applied to various communication systems, for example, a global system for mobile communications (Global System of Mobile Communications, GSM), a code division multiple access (Code Division Multiple Access, CDMA) system, a wideband code division multiple access (Wideband Code Division Multiple Access, WCDMA) system, a general packet radio service (General Packet Radio Service, GPRS) system, a long term evolution (Long Term Evolution, LTE) system, an LTE frequency division duplex (Frequency Division Duplex, FDD) system, an LTE time division duplex (Time Division Duplex, TDD) system, a universal mobile telecommunications system (Universal Mobile Telecommunications System, UMTS), a worldwide interoperability for microwave access (Worldwide Interoperability for Microwave Access, WiMAX) communication system, a 5th generation communication technology (5th Generation Mobile Communication Technology, 5G) system, and a 6th generation mobile communication technology (6th Generation Mobile Communication Technology, 6G) system.

The following uses an example in which the technical solutions in embodiments of this application are applied to the 5G communication system for description.

FIG. 3a is a schematic diagram of an architecture of a 5G 3rd generation partnership project (3rd Generation Partnership Project, 3GPP) system, including a terminal device, a (radio) access network ((Radio) Access Network, (R)AN) network element, and a core network element.

### 1. Terminal device

The terminal device may also be referred to as a terminal. The terminal device in embodiments of this application may be a passive terminal device or a semi-passive terminal device. The terminal device in embodiments of this application may also be referred to as a passive (passive) terminal device. The terminal device in embodiments of this application may be, for example, a tag or user equipment (User Equipment, UE). The terminal device may be widely used in various scenarios, for example, an internet of things (Internet Of Things, IOT), device-to-device (Device-to-Device, D2D) communication, vehicle-to-everything (Vehicle-to-Everything, V2X) communication, machine-type communication (Machine-Type Communication, MTC), an internet of things (Internet Of Things, IOT), virtual reality, augmented reality, industrial control, autonomous driving, telemedicine, a smart grid, smart furniture, smart office, a smart wearable device, smart transportation, and a smart city. A specific technology and a specific device form that are used for the terminal device are not limited in embodiments of this application. To describe the solutions in embodiments of this application more clearly, in some embodiments of this application, an example in which the terminal device is a tag is used for description.

2. (Radio) access network ((radio) access network, (R)AN) device: configured to provide a network access function for an authorized terminal device in a specific area, and can use transmission tunnels with different quality based on levels, service requirements, and the like of terminal devices.

The access network device may be a base station (Base Station), an evolved base station (Evolved NodeB, eNodeB), a transmission reception point (Transmission Reception Point, TRP), a next generation base station (Next Generation NodeB, gNB) in a 5G mobile communication system, a next generation base station in a 6th generation (6th Generation, 6G) mobile communication system, a base station in a future mobile communication system, an access node in a Wi-Fi system, or the like, or may be a module or unit that completes some functions of a base station, for example, may be a central unit (Central Unit, CU), or may be a distributed unit (Distributed Unit, DU). The CU herein completes functions of a radio resource control protocol and a packet data convergence protocol (Packet Data Convergence Protocol, PDCP) of the base station, and may further complete a function of a service data adaptation protocol (Service Data Adaptation Protocol, SDAP). The DU completes functions of a radio link control layer and a medium access control (Medium Access Control, MAC) layer of the base station, and may further complete functions of some or all physical layers. For specific descriptions of the foregoing protocol layers, refer to related technical specifications of a 3rd generation partnership project (3rd Generation Partnership Project, 3GPP). The access network device may be a macro base station, or may be a micro base station or an indoor base station, or may be a relay node, a donor node, or the like. A specific technology and a specific device form used for the access network device are not limited in embodiments of this application. For ease of description, for example, the following access network device is a base station.

The base station and the terminal device each may be fixed or may be mobile. The base station and the terminal device each may be deployed on land, including indoor deployment, outdoor deployment, or handheld or vehicular deployment, may be deployed one a water surface, or may be deployed on an airplane, in a balloon, or on an artificial satellite in air. Application scenarios of the base station and the terminal device are not limited in embodiments of this application.

3. User plane network element: configured to perform packet routing and forwarding, quality of service (quality of service, QoS) processing on user plane data, and the like.

As shown in FIG. 3a, in a 5G communication system, the user plane network element may be a user plane function (user plane function, UPF) network element, and may include an intermediate user plane function (intermediate user plane function, I-UPF) network element and an anchor user plane function (PDU Session anchor user plane function, PSA-UPF) network element. In a future communication system, the user plane network element may still be the UPF network element, or may have another name. This is not limited in this application.

4. Data network (data network, DN) 115: configured to provide a network for data transmission.

In a future communication system, the data network may still be a DN, or may have another name. This is not limited in this application.

In a 5G communication system, after accessing a network, a terminal device may establish a protocol data unit (protocol data unit, PDU) session, access a DN by using the PDU session, and may interact with an application function network element (the application function network element is, for example, an application server) deployed in the DN. As shown in FIG. 3a, based on different DNs accessed by a user, the network may select, as a PDU session anchor (PDU Session Anchor, PSA) according to a network policy, a UPF that accesses the DN, and access the application function network element through an N6 interface of the PSA.

5. Access and mobility management network element: mainly configured to perform mobility management, access management, and the like, and may be configured to implement other functions, for example, lawful interception and access authorization/authentication, other than session management in functions of a mobility management network element (mobility management entity, MME).

As shown in FIG. 3a, in a 5G communication system, the access management network element may be an access and mobility management function (access and mobility management function, AMF) network element. In a future communication system, the access management network element may still be the AMF network element, or may have another name. This is not limited in this application.

6. Session management network element: mainly configured to: manage a session, assign and manage an internet protocol (internet protocol, IP) address of a terminal device, select an endpoint that can manage a plane function and policy control and charging function interface of the terminal device, notify downlink data, and the like.

As shown in FIG. 3a, in a 5G communication system, the session management network element may be a session management function (session management function, SMF) network element, and may include an intermediate session management function (intermediate session management function, I-SMF) network element and an anchor session management function (anchor session management function, A-SMF) network element. In a future communication system, the session management network element may still be the SMF network element, or may have another name. This is not limited in this application.

7. Policy control network element: configured to: provide guidance on a unified policy framework for network behavior, provide policy rule information for a control plane function network element (for example, an AMF or SMF network element), and the like.

In a 4G communication system, the policy control network element may be a policy and charging rules function (policy and charging rules function, PCRF) network element. As shown in FIG. 3a, in a 5G communication system, the policy control network element may be a policy control function (policy control function, PCF) network element. In a future communication system, the policy control network element may still be the PCF network element, or may have another name. This is not limited in this application.

8. Authentication service network element: configured to: perform service authentication, generate a key to implement two-way authentication on a terminal device, and support a unified authentication framework.

As shown in FIG. 3a, in a 5G communication system, the authentication service network element may be an authentication server function (authentication server function, AUSF) network element. In a future communication system, the authentication server function network element may still be the AUSF network element, or may have another name. This is not limited in this application.

9. Data management network element: configured to: process an identifier of a terminal device, and perform access authentication, registration, mobility management, and the like.

As shown in FIG. 3a, in a 5G communication system, the data management network element may be a unified data management (unified data management, UDM) network element or a unified data repository (unified data repository, UDR) network element. In a future communication system, the unified data management may still be the UDM network element or the UDR network element, or may have another name. This is not limited in this application.

The UDM network element or the UDR network element in embodiments of this application may be a user database, and may be used as a single logical repository for storing user data.

10. Application function network element: The application function network element may interact with a 5G system by using the application function network element, and is configured to access a network exposure function network element, interact with a policy framework to perform policy control, or the like.

As shown in FIG. 3a, in a 5G communication system, the application function network element may be an application function, AF network element. In a future communication system, the application function network element may still be the AF network element, or may have another name. This is not limited in this application.

11. Network exposure function network element: configured to provide for a customized function of network exposure.

As shown in FIG. 3a, in a 5G communication system, the network exposure function network element may be a network exposure function (network exposure function, NEF) network element. In a future communication system, the network exposure function network element may still be the NEF network element, or may have another name. This is not limited in this application.

The 5G communication system may further expose, by using the NEF network element, a capability supported by 5GC to an external application function network element, for example, provide a small data transmission capability.

It may be understood that the foregoing network element or function may be a network element in a hardware device, a software function running on dedicated hardware, or a virtualized function instantiated on a platform (for example, a cloud platform). One or more services may be obtained through division of the foregoing network element or function. Further, a service that exists independent of a network function may further occur. In this application, an instance of the foregoing function, an instance of a service included in the foregoing function, or an instance of the service that exists independent of the network function may be referred to as a service instance.

Further, the AF network element may be referred to as an AF for short, the NEF network element may be referred to as a NEF for short, and the AMF network element may be referred to as an AMF for short. In other words, in the following descriptions in this application, the AF may be replaced with the application function network element, the NEF may be replaced with the network exposure function network element, and the AMF may be replaced with the access and mobility management network element.

It should be understood that FIG. 3a shows an interaction relationship between network function entities and a corresponding interface. For example, the UE and the AMF may interact with each other through an N1 interface. The access network device and the AMF may interact with each other through an N2 interface. The access network device and the UPF may interact with each other through an N3 interface. The UPF and the DN may interact with each other through an N6 interface. The UPF and the SMF may interact with each other through an N4 interface. The AMF and the PCF may interact with each other through an N15 interface. The AMF and the SMF may interact with each other through an N11 interface. The SMF and the PCF may interact with each other through an N7 interface. The PCF and the AF may interact with each other through an N5 interface. The AMF and the AUSF may interact with each other through an N12 interface. The AMF and the UDM may interact with each other through an N8 interface. The SMF and the UDM may interact with each other through an N10 interface. The AUSF and the UDM may interact with each other through an N13 interface. Interaction between other network function entities is similar. Details are not described again.

It may be understood that the foregoing network element or function may be a network element in a hardware device, a software function running on dedicated hardware, or a virtualized function instantiated on a platform (for example, a cloud platform). The one or more services may be obtained through division of the foregoing network element or function. Further, a service that exists independent of the network function may further occur. In this application, the instance of the foregoing function, the instance of the service included in the foregoing function, or the instance of the service that exists independent of the network function may be referred to as a service instance.

It should be noted that embodiments of this application are not limited to the foregoing system architecture, and may alternatively be applied to another future communication system, for example, a 6th generation communication (6th generation, 6G) system architecture. In addition, in embodiments of this application, names of the foregoing used network elements may change while functions of the network elements may remain the same in a future communication system.

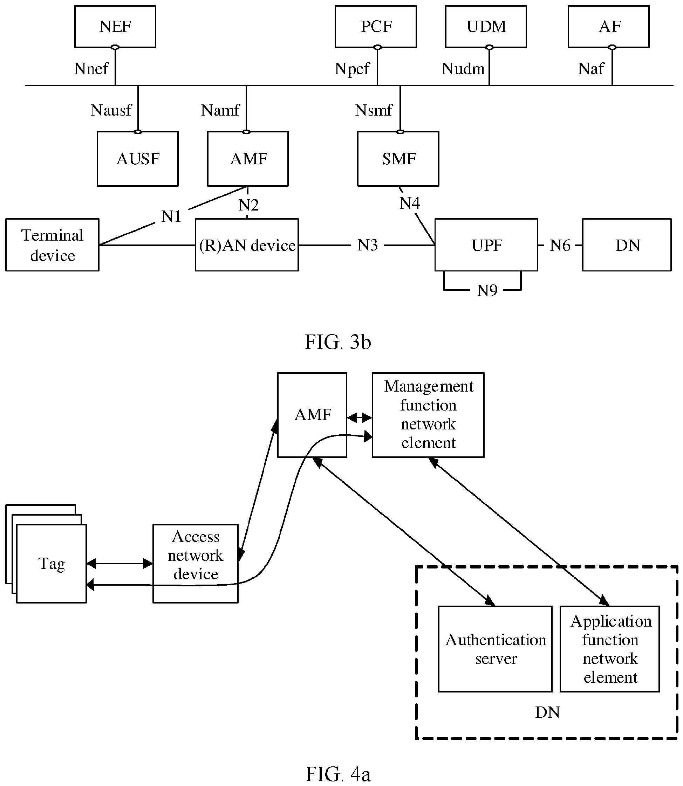

It should be noted that some interfaces in the communication system shown in FIG. 3a may be implemented in a service-orientated interface manner. 3b shows an example of a schematic diagram of an architecture of another 5G communication system. Some interfaces in FIG. 3b may be implemented in the service-orientated interface manner. For example, in FIG. 3b, an NSSF provides an Nnssf interface externally, and a NEF provides an Nnef interface externally. Another network element is similar. Details are not described again. In FIG. 3b, Nnssf, Nausf, Nnef, Npcf, Nudm, Naf, Namf, Nsmf, N1, N2, N3, N4, N6, and N9 are interface sequence numbers. For meanings of these interface sequence numbers, refer to meanings defined in a 3GPP standard protocol. This is not limited herein.

Based on the foregoing content, FIG. 4a shows an example of a schematic diagram of an architecture of a communication system to which an embodiment of this application is applicable. As shown in FIG. 4a, in this embodiment of this application, a tag is used as a new terminal device type, and accesses a cellular network (for example, accesses the network shown in 3a) through an air interface of the cellular network. An access network device performs a target operation (for example, a read operation/write operation) on the tag under control of a core network element.

As shown in FIG. 4a, the communication system may include a terminal device. In FIG. 4a, an example in which the terminal device is a tag is used for description. The terminal device in this embodiment of this application is not limited to the tag.

As shown in FIG. 4a, the communication system includes the access network device. The access network device may have a function of a reader. The access network device may perform the target operation on the tag.

As shown in FIG. 4a, the communication system includes a management function network element. The management function network element may be deployed in a core network. As shown in FIG. 4a, the management function network element may be a newly added network element.

The management function network element may communicate with an application function network element. The management function network element and the access network device may also communicate with each other. For example, the management function network element and the access network device may communicate with each other by using an AMF. The management function network element may receive a command from the application function network element, and perform the target operation on the tag by using the access network device.

As shown in FIG. 4a, the communication system may further include the application function network element. The application function network element may send, to the management function network element, a related command of an operation that needs to be performed on the tag.

It should be understood that the application function network element in this embodiment of this application may also be referred to as a back-end application system, and may be provided by a third party (namely, a third party other than an operator and a user). An AF in a 5G communication system may be used as an interface for the application function network element to access the core network. However, during actual application, the application function network element may be provided by a network operator, or may be provided by the third party. In a possible implementation, an authentication server and the application function network element in this embodiment of this application may be deployed in DNs shown in FIG. 3a and FIG. 3b.

As shown in FIG. 4a, the communication system may further include the authentication server. The authentication server may be configured to perform authentication on the terminal device. In a possible implementation, the authentication server and the AMF may communicate with each other. The AMF may trigger an authentication procedure between the terminal device and the authentication server. In addition, there is an interface between the terminal device and the management function network element, and the interface is for interaction between the terminal device and the management function network element.

FIG. 4a merely shows an example of a possible implementation. For descriptions of related network elements in FIG. 4a, refer to the descriptions in FIG. 3a and FIG. 3b. Details are not described herein again.

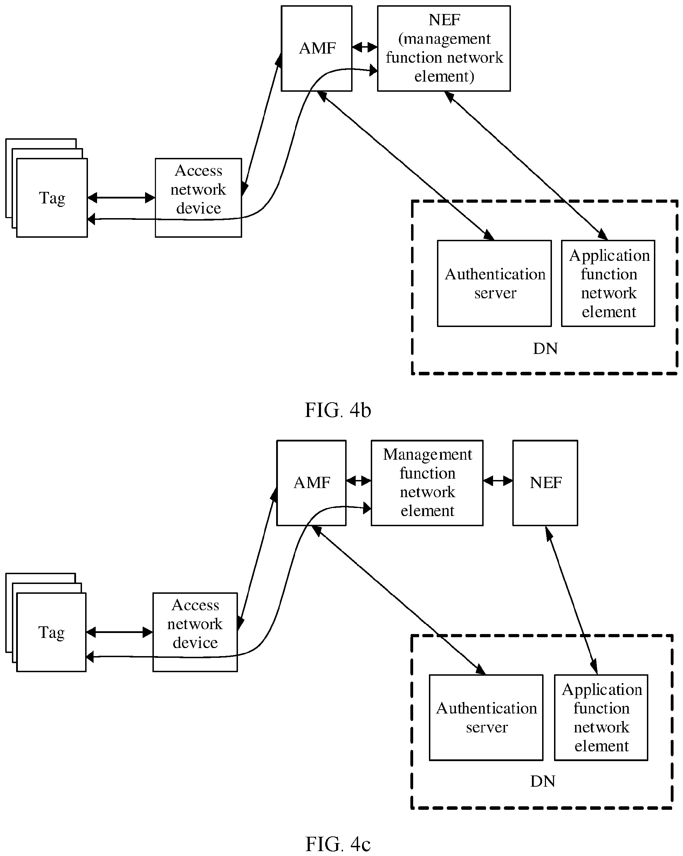

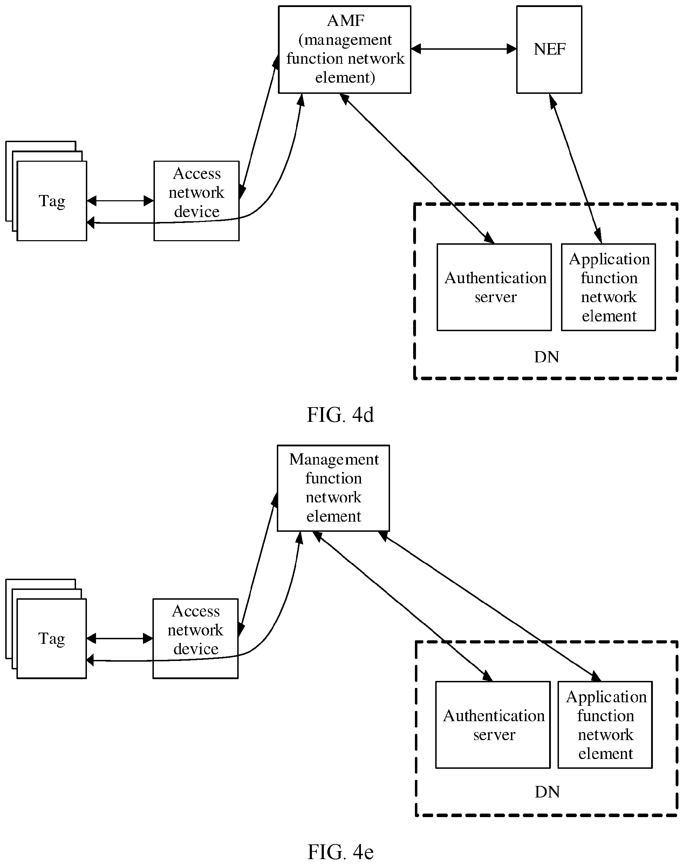

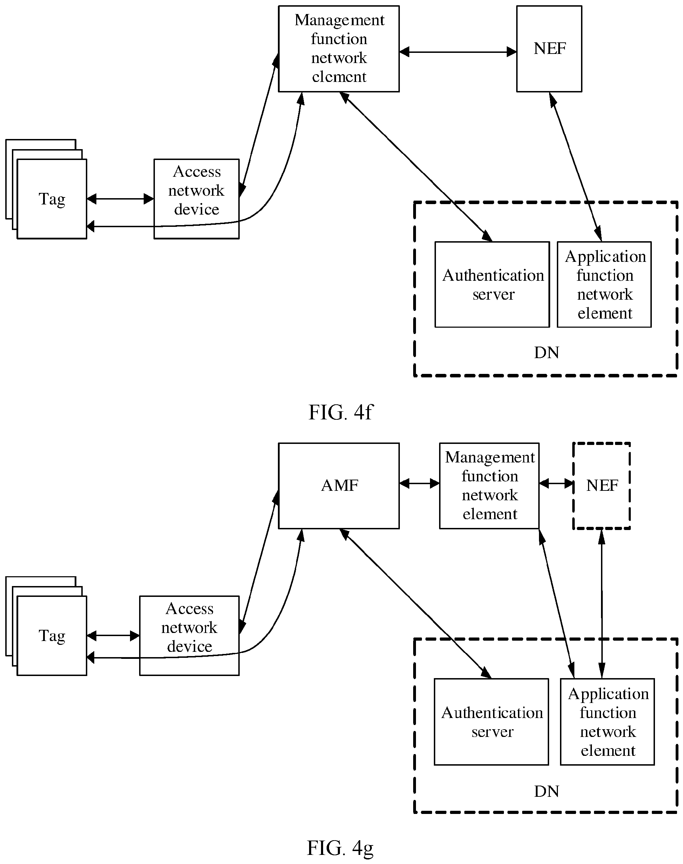

In a possible implementation, the management function network element may alternatively be implemented in another form. FIG. 4b, FIG. 4c, FIG. 4d, FIG. 4e, FIG. 4f, and FIG. 4g show examples of schematic diagrams of architectures of other six possible communication systems.

Different from that in FIG. 4a, in FIG. 4b, a management function network element may be a NEF, or may be a unit, module, or chip in a NEF. In FIG. 4b, it may also be understood that the NEF supports a function of a management function network element. The management function network element in the NEF and an application function network element may communicate with each other. In addition, in FIG. 4b, there is an interface between a terminal device and the NEF, and the interface is for interaction between the terminal device and the NEF.

Different from that in FIG. 4a, in FIG. 4c, a management function network element may communicate with an AMF, the management function network element and a NEF may communicate with each other, and in FIG. 4c, a management function network element and an application function network element may communicate with each other by using a NEF network element. The NEF and the application function network element may communicate with each other. The NEF may implement mapping from external information to internal information, for example, mapping indication information of a target area based on geographical location information to 3GPP location information. This content is described in detail later, and is not described herein. As shown in FIG. 4c, the management function network element may be a newly added network element. During specific implementation, the management function network element may alternatively exist in another form. This is not limited in embodiments of this application. In addition, in FIG. 4c, there is an interface between a terminal device and the management function network element, and the interface is for interaction between the terminal device and the management function network element.

Different from that in FIG. 4a, in FIG. 4d, a management function network element may be an AMF, or may be a unit, module, or chip in an AMF. In FIG. 4d, it may also be understood that the AMF supports a function of a management function network element. The AMF and the NEF may communicate with each other. In addition, in FIG. 4d, there is an interface between a terminal device and the AMF, and the interface is for interaction between the terminal device and the AMF.

Different from that in FIG. 4a, in FIG. 4e, a management function network element is an independent network element, and may directly interact with an access network device, an application function network element, and an authentication server, and the management function network element may implement mapping from external information to internal information. As shown in FIG. 4e, the management function network element may be a newly added network element. During specific implementation, the management function network element may alternatively exist in another form. This is not limited in embodiments of this application. In addition, in FIG. 4e, there is an interface between a terminal device and the management function network element, and the interface is for interaction between the terminal device and the management function network element.

Different from that in FIG. 4a, in FIG. 4f, a management function network element directly interacts with an access network device, the management function network element may communicate with a NEF, and the management function network element and an authentication server may communicate with each other. In FIG. 4f, the management function network element and an application function network element may communicate with each other by using the NEF network element. The NEF and the application function network element may communicate with each other. The NEF may implement mapping from external information to internal information, for example, mapping area information based on geographic information to 3GPP location information. As shown in FIG. 4f, the management function network element may be a newly added network element. During specific implementation, the management function network element may alternatively exist in another form. This is not limited in embodiments of this application. In addition, in FIG. 4f, there is an interface between a terminal device and the management function network element, and the interface is for interaction between the terminal device and the management function network element.

Different from that in FIG. 4a, in FIG. 4g, a management function network element interacts with an access network device by using an AMF, the management function network element and a NEF may communicate with each other, and the AMF and an authentication server may communicate with each other. In FIG. 4g, the management function network element and an application function network element may communicate with each other by using the NEF network element. The NEF and the application function network element may communicate with each other. The NEF may implement mapping from external information to internal information, for example, mapping area information based on geographic information to 3GPP location information. As shown in FIG. 4g, the management function network element may be a newly added network element. During specific implementation, the management function network element may alternatively exist in another form. This is not limited in embodiments of this application. In addition, in FIG. 4g, there is an interface between a terminal device and the AMF, and the interface is for interaction between the terminal device and the AMF.

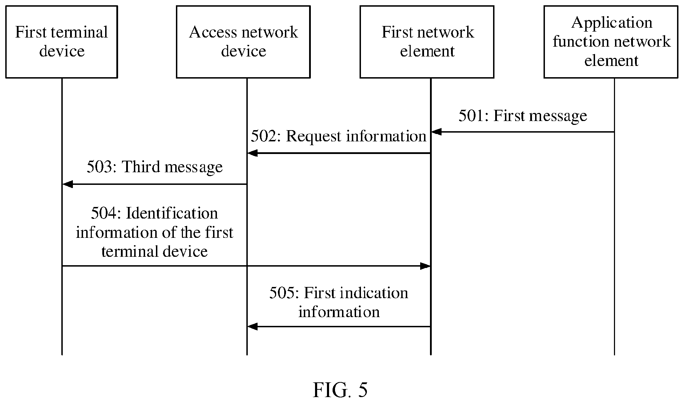

Based on the foregoing content, FIG. 5 shows an example of a schematic flowchart of a communication method according to an embodiment of this application.

The method flowchart shown in FIG. 5 may be performed by an application function network element, a first network element, an access network device, and a terminal device.

The application function network element may be the application function network element in FIG. 4a, FIG. 4b, FIG. 4c, FIG. 4d, FIG. 4e, or FIG. 4f.

The first network element may be the first network element in FIG. 2. The first network element may alternatively be an AMF or a unit, module, or chip in an AMF network element. For example, the first network element is the AMF in FIG. 4a, FIG. 4b, FIG. 4c, FIG. 4d, or FIG. 4g or a unit, module, or chip in the AMF. For another example, the first network element may be a unit, module, or chip that supports a function of a management function network element and that is in the AMF network element.

The first network element may alternatively be a management function network element in embodiments of this application or a unit, module, or a chip in the management function network element, for example, the management function network element in FIG. 4a, FIG. 4c, FIG. 4e, FIG. 4f, or FIG. 4g.

The first network element may alternatively be a NEF network element or a unit, module, or chip in a NEF network element. For example, the first network element may be the NEF network element in FIG. 4b or a unit, module, or chip that supports a function of a management function network element and that is in the NEF network element.

The access network device may be the access network device in FIG. 4a, FIG. 4b, FIG. 4c, FIG. 4d, FIG. 4e, FIG. 4f, or FIG. 4g, or may be the (R)AN device in FIG. 3a or FIG. 3b.

As shown in FIG. 5, the method includes the following steps.

Step 501: The application function network element sends a first message to the first network element, where the first message is for requesting to perform a target operation on one or more terminal devices.

Correspondingly, the first network element receives the first message.

A terminal device in the one or more terminal devices in this embodiment of this application may be a passive terminal device, and may be referred to as a passive terminal device. The passive terminal device is, for example, a passive terminal device or a semi-passive terminal device.

The target operation in this embodiment of this application may be any one or more operations performed on the terminal device.

In a possible implementation, the target operation may include a first operation and/or a second operation.

The first operation may be an operation of querying identification information of the terminal device.

The second operation may include at least one of the following content: a read (read) operation, a write (write) operation, an access (access) operation, a kill (kill) operation, a lock (lock) operation, a block write operation, a block erase operation, or the like.

For different implementations of the first network elements in FIG. 4a, FIG. 4b, FIG. 4c, FIG. 4d, FIG. 4e, FIG. 4f, and FIG. 4g, the first network element may receive the first message from the management function network element, the NEF, the application function network element, and the like. In the procedure shown in FIG. 5, an example in which the first network element receives the first message from the application function network element is used for presentation.

Before the application function network element sends the first message to the first network element, the application function network element sends a message to the application function network element. The message is for requesting the application function network element to send, to a 5G system, a request for performing the target operation on the one or more terminal devices.

Step 502: The first network element sends request information to the access network device, where the request information is for requesting to obtain the identification information of the one or more terminal devices.

Correspondingly, the access network device in the access network device, the access network device receives the request information from the first network element.

It should be noted that the first network element may determine one or more access network devices. In this embodiment of this application, one access network device is used as an example for description. A solution of another access network device is similar to that of the access network device. Details are not described again.

If the first network element is the management function network element or the NEF in FIG. 4a, FIG. 4b, or FIG. 4c, the first network element (the management function network element or the NEF) may first send the request information to the AMF. Then, the AMF sends the request information to the access network device. The AMF may process the request information and then send processed request information to the access network device, or send the request information to the access network device without processing the request information.

If the first network element is the management function network element or the NEF in FIG. 4a, FIG. 4b, or FIG. 4c, the first network element (the management function network element or the NEF) may further send both identification information of the access network device or indication information of a target area and the request information to the AMF, so that the AMF determines the access network device to which the request information is to be sent.

If the first network element is the management function network element or the NEF in FIG. 4a, FIG. 4b, or FIG. 4c, in a possible implementation, the first network element (the management function network element or the NEF) may encapsulate the request information into a message A and send the message A to the AMF. The AMF parses the request information, encapsulates the request information into a message B, and then sends the message B to the access network device. In another possible implementation, the first network element (the management function network element or the NEF) may encapsulate the request information into a message C, then encapsulate the message C into a message D, and next, send the message D to the AMF. After receiving the message D, the AMF decapsulates the message C, and sends the message C to the access network device.

If the first network element is the AMF or the management function network element in FIG. 4d, FIG. 4e, FIG. 4f, or FIG. 4g, the first network element (the AMF or the management function network element) may directly send the request information to the access network device.

Step 503: The access network device sends a third message to a first terminal device, where the third message is for requesting to obtain the identification information of the one or more terminal devices.

The first terminal device is a terminal device in the one or more terminal devices. Correspondingly, the first terminal device receives the third message from the access network device.

Specifically, the access network device sends radio frequency information to a terminal device in a coverage area of the access network device, to provide an excitation signal for the terminal device in the coverage area of the access network device. In this way, the terminal device sends a signal to the access network device. In addition, the access network device performs a selection operation on the terminal device in the coverage area. One or more target terminal devices may be selected through the selection operation. Information about the target terminal device obtained through the selection operation is determined based on the request information, or is determined based on a local configuration. Further, the access network device may send the third message to the one or more selected target terminal devices, to trigger a random access procedure. Specifically, the third message is a query message. The one or more selected target terminal devices initiate the random access process, and one of the one or more terminal devices successfully performs random access. For example, the first terminal device successfully performs random access.

In a possible implementation, the first terminal device sends a first identifier to the access network device. The first identifier is randomly generated by the first terminal device. The first terminal device receives the first identifier from the access network device. The first identifier from the access network device indicates that random access of the first terminal device succeeds.

For example, a specific random access process may include the following.

The access network device includes a first random number in the third message, and the one or more selected terminal devices locally set a second random number based on the first random number. If a second random number set by a terminal device is 0, the terminal device sends a third random number to the access network device. If the access network device can correctly receive the third random number, the access network device sends the third random number to the terminal device. When the terminal device receives the third random number, the terminal device determines that random access succeeds. The third random number may be the first identifier.

Step 504: The first terminal device sends identification information of the first terminal device to the first network element.

Correspondingly, the first network element receives the identification information of the first terminal device from the first terminal device. After determining that the first terminal device performs random access, the first terminal device sends the identification information of the first terminal device to the first network element.

In a possible implementation, if the first network element is the AMF or the management function network element in FIG. 4d, FIG. 4e, or FIG. 4f, in step 504, the first terminal device may send a fourth message to the access network device, and encapsulate a second message into the fourth message. The second message includes the identification information of the first terminal device. After receiving the fourth message, the access network device decapsulates the second message, encapsulates the second message into an eighth message, and sends the eighth message to the first network element. The first network element decapsulates the eighth message to obtain the second message, and obtains the identification information of the first terminal device from the second message. The foregoing step 504 may be understood as follows: The access network device transmits the identification information of the first terminal device in a message transparent transmission manner.

In another possible implementation, if the first network element is the management function network element or the NEF in FIG. 4a, FIG. 4b, or FIG. 4c, in step 504, the first terminal device may send a fourth message to the access network device, and encapsulate a second message into the fourth message. The second message includes the identification information of the first terminal device. After receiving the fourth message, the access network device decapsulates the fourth message to obtain the second message, then encapsulates the second message into an eighth message, and sends the eighth message to the AMF. After receiving the eighth message, the AMF decapsulates the eighth message to obtain the second message, encapsulates the second message into a ninth message, and further sends the ninth message to the first network element (the management function network element or the NEF). The first network element decapsulates the ninth message to obtain the second message.

Step 504 may be understood as follows: The access network device and the AMF transmit the identification information of the first terminal device in the message transparent transmission manner.

Step 505: The first network element sends first indication information to the access network device, where the first indication information indicates at least one of the following content: indicating that the target operation performed on the first terminal device is completed, indicating to query identification information of a next terminal device, or indicating to perform a next random access procedure.

Correspondingly, the access network device receives the first indication information. The access network device sends a fifth message to the one or more terminal devices based on the first indication. The fifth message is for requesting to obtain the identification information of the one or more terminal devices.

If the first network element is the management function network element or the NEF in FIG. 4a, FIG. 4b, or FIG. 4c, the first network element (the management function network element or the NEF) may first send the first indication information to the AMF. Then, the AMF sends the first indication information to the access network device. The AMF may process the first indication and then send processed first indication to the access network device, or send the request information to the access network device without processing the request information.

If the first network element is the management function network element or the NEF in FIG. 4a, FIG. 4b, or FIG. 4c, in a possible implementation, the first network element (the management function network element or the NEF) may encapsulate the first indication information into a message E and send the message E to the AMF. The AMF parses the first indication information, encapsulates the first indication information into a message F, and then sends the message F to the access network device. In another possible implementation, the first network element (the management function network element or the NEF) may encapsulate the first indication information into a message G, then encapsulate the message G into a message H, and next, send the message H to the AMF. After receiving the message H, the AMF decapsulates the message G, and sends the message G to the access network device.

If the first network element is the AMF or the management function network element in FIG. 4d, FIG. 4e, FIG. 4f, or FIG. 4g, the first network element (the AMF or the management function network element) may directly send the first indication information to the access network device.

Because a distance between the access network device and the terminal device can be longer, when passive or semi-passive terminal devices are deployed on a large scale, management of the passive or semi-passive terminal devices can be improved by using the access network device. In this embodiment of this application, the user only needs to initiate a request to an operator network, and then can count the terminal device in a large range. This reduces deployment costs, and improves counting efficiency.

In a possible implementation, the first message in step 501 further includes terminal device indication information. The request information in step 502 further includes the terminal device indication information. In this way, the access network device can determine a terminal device on which the target operation needs to be performed.

There may be a plurality of specific forms of the terminal device indication information. The following enumerates several possible existing forms. The several forms enumerated below may be used independently or in combination. For example, the terminal device indication information may include an identifier value area of the terminal device, application identification information, and type information of the terminal device. A specific combination form is flexible. This is not limited in embodiments of this application.

Manner 1: The terminal device indication information includes a terminal device identifier value interval.

The terminal device in the one or more terminal devices in this embodiment of this application may be a terminal device corresponding to an identifier in the terminal device identifier value interval.

For example, if the identifier value interval is 0001 to 0098, the one or more terminal devices may be some or all of all terminal devices whose identifiers fall with the interval 0001 to 0098.

Manner 2: The terminal device indication information includes a terminal device identifier list.

The terminal device identifier list may include an identifier of one or more terminal devices that is presented in a list form. The terminal device in the one or more terminal devices in this embodiment of this application may be a terminal device corresponding to the identifier included in the terminal device identifier list.

For example, if the terminal device identifier list is 0001, 0002, 0005, and 0006, the one or more terminal devices may be some or all of four terminal devices whose identifiers are 0001, 0002, 0005, and 0006 respectively.

Manner 3: The terminal device indication information includes one or more terminal device group identifiers.

One terminal device may be put into one or more terminal device groups. One terminal device group may include one or more terminal devices. Each terminal device group may have one terminal device group identifier. A group identifier of one terminal device may correspond to one or more terminal devices. The terminal device in the one or more terminal devices in this embodiment of this application is a terminal device included in a terminal device group corresponding to the terminal device group identifier.

For example, if the terminal device group identifier is a group 0111, the one or more terminal devices may be some or all of all terminal devices whose group identifier is the group 0111.

Manner 4: The terminal device indication information includes user identification information.

One terminal device may correspond to one or more pieces of user identification information. For example, one terminal device belongs to one enterprise. The user identification information may be information that can uniquely identify the enterprise, for example, may be information like an identifier of the enterprise. The terminal device in the one or more terminal devices in the embodiments of this application may be a terminal device corresponding to the user identification information.

Manner 5: The terminal device indication information includes application identification information.

The application identification information may be identification information of an application corresponding to the application function network element in step 501. When the terminal device indication information included in the first message includes the application identification information, it may indicate that the application function network element needs to perform the target operation on a terminal device with the application corresponding to the application function network element. The terminal device with the application corresponding to the application function network element may be understood as a terminal device managed by the application function network element, a terminal device on which the application corresponding to the application function network element is installed, or the like.

The terminal device in the one or more terminal devices in the embodiments of this application may be the terminal device corresponding to the application corresponding to the application identification information.

For example, in step 502, the first network element sends the request information to the one or more access network devices. All terminal device that can be found by the one or more access network devices are identified as a set 1. All terminal devices whose application identification information is the application identification information included in the terminal device indication information and that are in the set 1 are identified as a set 2. In this case, the one or more terminal devices may be some or all terminal devices in the set 2.

Manner 6: The terminal device indication information includes indication information indicating any found terminal device.

In Manner 6, in a possible implementation, the first message may include an information element of a Boolean type. For example, when the information element is carried in the first message and is set to "true", it indicates that an operation may be performed on any terminal device in all terminal devices that can be found by the one or more access network devices. It may also be understood that the terminal device in the one or more terminal devices in this embodiment of this application may be the any terminal device in the terminal device found by the access network device. The one or more terminal devices are some or all of all the terminal devices that can be found by the one or more access network devices.

Manner 7: The terminal device indication information includes the type information of the terminal device.

In Manner 7, the type information of the terminal device may indicate a type of a terminal device that needs to be counted. For example, the type information of the terminal device may include a passive terminal device and/or a semi-passive terminal device. In this case, the access network device may determine, based on the type information of the terminal device, that the target operation needs to be performed on the passive terminal device and/or the semi-passive terminal device.

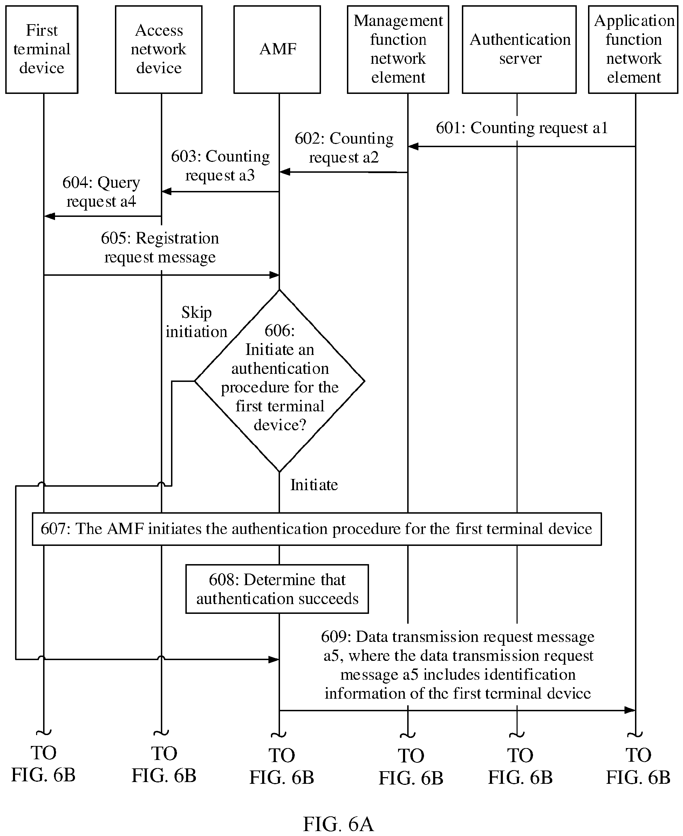

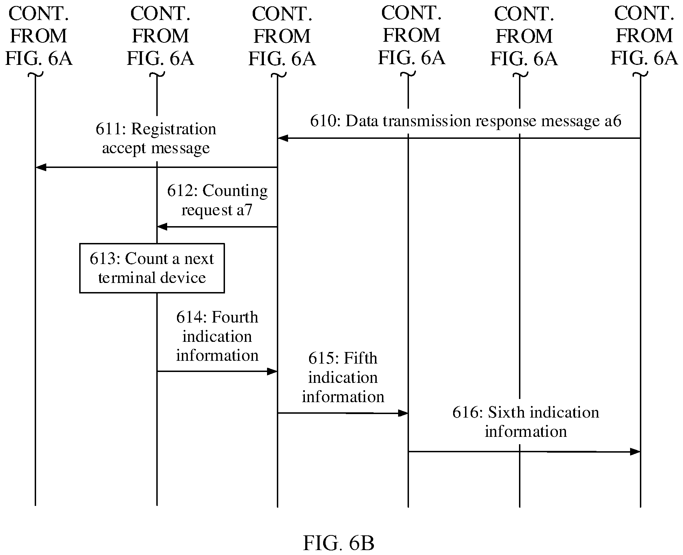

The following describes in detail the communication method in FIG. 5 in the foregoing embodiment with reference to FIG. 6A and FIG. 6B in a specific embodiment.

FIG. 6A and FIG. 6B show an example of a schematic flowchart of another possible communication method by using an example in which a first network element is an AMF or a unit, module, or chip in an AMF network element.

In the solution shown in FIG. 6A and FIG. 6B, the first network element may be the AMF in FIG. 4a, FIG. 4b, FIG. 4c, FIG. 4d, or FIG. 4g or a unit in the AMF network element.

For execution bodies in FIG. 6A and FIG. 6B, refer to related descriptions of those in FIG. 5. Details are not described herein again.

As shown in FIG. 6A and FIG. 6B, the method includes the following steps.

Step 601: An application function network element sends a counting request a1 to a management function network element.

Correspondingly, the management function network element receives the counting request a1.

For the architecture of the network system shown in FIG. 4g, the management function network element may receive the counting request a1 from the NEF or the application function network element. In this procedure, an example in which the management function network element receives the counting request a1 from the application function network element is used for presenting the application function network element.

The counting request a1 may include at least one of the following content: terminal device indication information, indication information of a target area, or application identification information.

For related content of the terminal device indication information in the counting request a1, refer to the descriptions of the foregoing content. Details are not described herein again. The application identification information may be identification information of an application corresponding to the application function network element, and is for identifying an application that initiates counting. For related content, refer to the foregoing related descriptions. Details are not described herein again. It should be noted that, if the terminal device indication information includes the application identification information, the counting request a1 may not need to repeatedly carry the application identification information.

The target area mentioned in this embodiment of this application is an area in which counting needs to be performed on a terminal device. The indication information of the target area may be geographical location information, municipal location information (for example, a city A), or 3GPP location information (for example, a tracking area (tracking area, TA) list or a cell (Cell) list). For example, if the indication information of the target area is the city A, it indicates that the application function network element requests to perform a target operation on a terminal device in the city A.

In another possible implementation, an application identifier may also indicate the target area. For example, if a terminal device corresponding to an application identifier is deployed in a first area and a second area, a target area indicated by the application identifier may be the first area and the second area.

In a possible implementation, the target operation includes a first operation. The first operation is an operation of requesting to query terminal device identification information for one or more terminal devices.

For example, when the counting request a1 does not include second indication information, it may be determined that the target operation includes the first operation and does not include a second operation, that is, it is determined that the counting request a1 is for requesting to perform the operation of querying the terminal device identification information for the one or more terminal devices.

For another example, the counting request a1 may carry first indication information. The first indication information indicates the first operation. For example, the first indication information may indicate an operation of requesting to query the terminal device identification information for the one or more terminal devices.

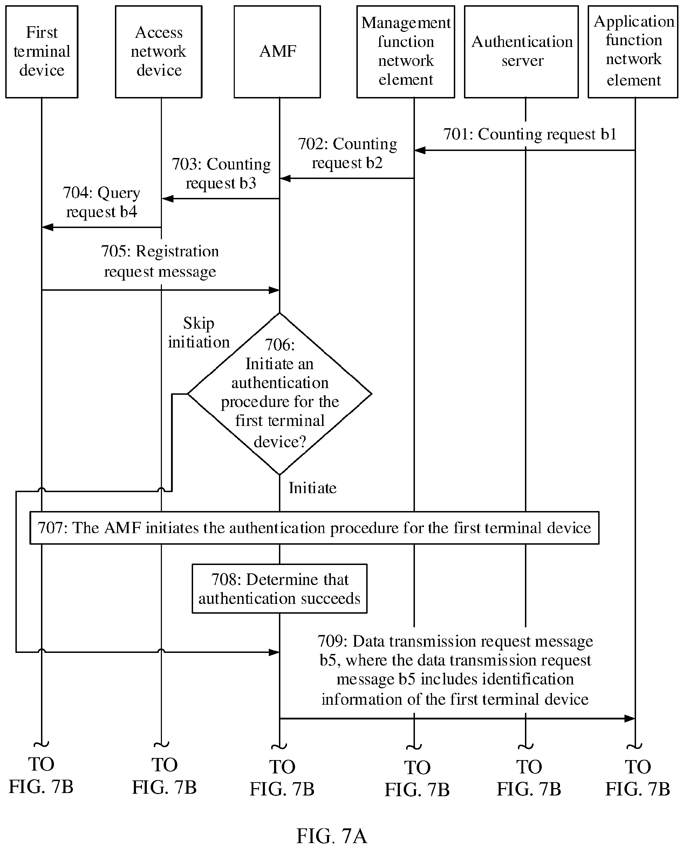

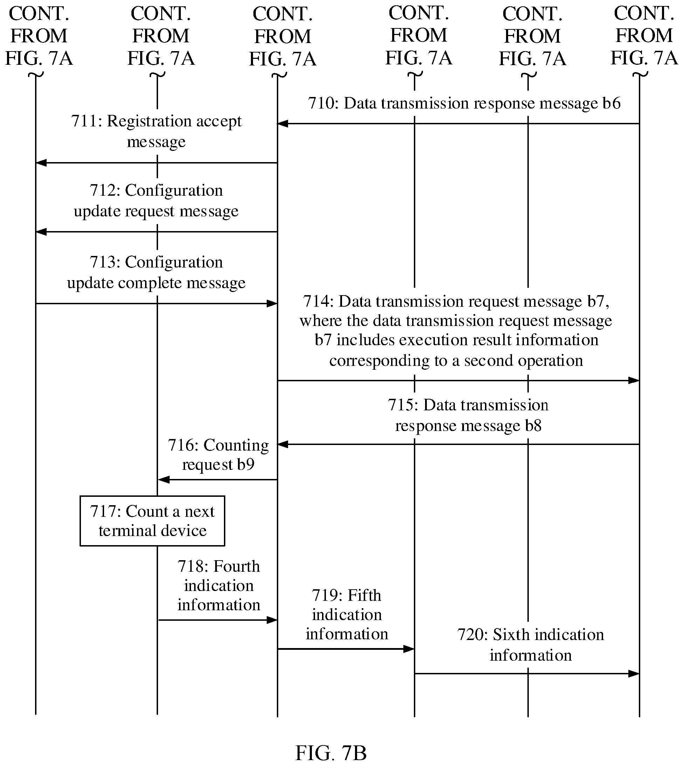

In FIG. 6A and FIG. 6B, an example in which the counting request a1 is for requesting to perform the operation of querying the terminal device identification information for the one or more terminal devices and not to perform the second operation on the one or more terminal devices is used for description. In other words, an example in which the target operation includes the first operation but does not include the second operation is used for description. A case in which the application function network element requests to perform the second operation on the one or more terminal devices is subsequently described by using FIG. 7A and FIG. 7B, and is not described herein.

In a possible implementation, the application function network element determines to perform authentication on the one or more terminals, and may include a first authentication random number in a first message. The first authentication random number is for performing authentication on the one or more terminal devices. The application function network element may obtain the first authentication random number by interacting with an authentication server.

Step 602: The management function network element sends a counting request a2 to the AMF.

Correspondingly, the AMF receives the counting request a2.

When the first network element is the AMF or the unit, module, or chip in the AMF, the first network element may receive the first message from the management function network element. The counting request a2 may be a possible implementation of the first message.

In step 602, the management function network element may determine one or more AMFs or one or more access network devices based on at least one piece of content such as the terminal device indication information, the indication information of the target area, or the application identification information included in the counting request a1. The management function network element sends the counting request a2 to each determined AMF or access network device.

In a possible implementation (1), the management function network element may determine the access network device based on the indication information of the target area. If the indication information of the target area included in the counting request a1 includes non-3GPP location information such as the geographical location information and the municipal location information (for example, the city A), the management function network element may map the indication information of the target area to the 3GPP location information. For example, the management function network element maps the municipal location information to the tracking area (tracking area, TA) list or the cell (Cell) list (indication information of the target area obtained after mapping may be referred to as mapped indication information of the target area, or referred to as updated indication information of the target area). In this way, the one or more access network devices in the target area are determined, and one or more AMFs that may interact with the one or more access network devices are determined.

Similarly, the management function network element may determine the access network device based on the identification information of the application. If the counting request a1 includes the identification information of the application, the management function network element may determine the 3GPP location information based on an area in which a terminal device corresponding to the application is deployed. For example, the management function network element may determine, based on a tracking area (tracking area, TA) list or a cell (Cell) list corresponding to the area in which the terminal device corresponding to the application is deployed, one or more access network devices, or may determine one or more AMFs that may interact with the one or more access network devices.

The one or more AMFs in this embodiment of this application may interact with an AMF that interacts with the access network device in the target area. For each access network device, the management function network element includes an identifier of the access network device in a message a2. In this embodiment of this application, in subsequent content, one AMF is used as an example for description. A solution performed by another AMF is similar to that performed by the AMF. Details are not described again.

The counting request a2 in this embodiment of this application may include at least one of the following content: terminal device indication information, indication information of the target area, or application identification information.

It should be noted that, when the indication information of the target area carried in the counting request a1 is the 3GPP location information, the indication information of the target area carried in the counting request a2 and the indication information of the target area carried in the counting request a1 may be same information. When the indication information of the target area carried in the counting request a1 is the non-3GPP location information (for example, the municipal location information), the indication information of the target area carried in the counting request a2 may be the 3GPP location information corresponding to the indication information of the target area carried in the counting request a1 (which may be referred to as the mapped indication information of the target area, or referred to as the updated indication information of the target area).

In another possible implementation (2), when determining a plurality of AMFs based on the counting request a1, the management function network element may carry, based on areas managed by different AMFs, indication information of target areas corresponding to the AMFs in the counting request a2 sent to the AMFs. For example, the indication information of the target area indicates a cell a and a cell b, where the cell a is managed by an AMF 1, and the cell b is managed by an AMF 2. In this case, the management function network element may carry indication information of the cell a in the counting request a2 sent to the AMF 1, and carry indication information of the cell b in the counting request a2 sent to the AMF 2.

For related content of the terminal device indication information in the counting request a2, refer to the descriptions of the foregoing content. Details are not described herein again.

In a possible implementation, if the management function network element receives the first authentication random number, the management function network element sends the first authentication random number to the AMF.

Step 603: The AMF sends a counting request a3 to the one or more access network devices.

Correspondingly, the access network device receives the counting request a3.

In a possible implementation, if the counting request a2 is sent in the implementation (1) in step 602, the AMF may send the counting request a3 to the corresponding access network device based on the identifier of the access network device identifier in the counting request a2.

In another possible embodiment, if the counting request a2 is sent in the implementation (2) in step 602, the AMF may send the counting request a3 to an access network device in a coverage range of the target area based on the received indication information of the target area. The following uses one access network device as an example for description. A solution performed by another access network device is similar to a solution performed by the access network device. Details are not described again.

When the counting request a2 includes the terminal device indication information, the counting request a3 may include terminal device indication information. In this way, the access network device may obtain through filtering a terminal device that needs to be counted.

When the counting request a2 includes the indication information of the target area, the counting request a3 may include indication information of the target area. For example, the counting request a3 includes indication information of the target area corresponding to the access network device.

In a possible implementation, if the AMF receives the first authentication random number and the AMF determines to perform authentication on the one or more terminals, the AMF includes the first authentication random number in request information (for example, the counting request a3) sent to the access network device. Alternatively, the AMF does not perform determining temporarily, and always sends the first authentication random number to the access network device.

Step 604: The access network device sends a query request a4 to the one or more terminal devices. The query request a4 is for requesting to obtain identification information of the one or more terminal devices. A first terminal device successfully performs random access.

The query request a4 in this embodiment of this application may be an implementation form of the third message.

In step 604, after receiving the counting request a3, the access network device may send radio frequency information to a terminal device in a coverage area of the access network device, to provide an excitation signal for the terminal device in the coverage area of the access network device. In this way, the terminal device is in a working state, and has a capability of sending a signal to the access network device. The access network device performs a selection operation on the terminal device in the coverage area (for example, may send a selection message to the terminal device in the coverage area, where the selection message is for selecting one or more target terminal devices). The one or more target terminal devices may be selected through the selection operation. Information about the target terminal device obtained through the selection operation may be determined based on the terminal device indication information received in the counting request a3, or determined based on a local configuration. Further, the access network device may send a query request a4 to the one or more selected target terminal devices, to trigger a random access procedure. The one or more selected target terminal devices initiate a random access process, and one of the one or more selected target terminal devices, for example, the first terminal device, successfully performs random access. Further, the first terminal device performs a subsequent step 605.

Specifically, the query request a4 (a third message) may be a query message. The one or more selected target terminal devices initiate the random access process, and one of the one or more selected terminal devices, namely, the first terminal device in this embodiment of this application, successfully performs random access. A specific random access process may include the following.

The access network device includes a first random number in the third message, and the one or more selected terminal devices locally set a second random number based on the first random number. If a second random number set by a terminal device is 0, the terminal device sends a third random number to the access network device. If the access network device can correctly receive the third random number, the access network device sends the third random number to the terminal device. When the terminal device receives the third random number, the terminal device determines that random access succeeds.

In a possible implementation, if the access network device receives the first authentication random number, the access network device includes the first authentication random number in the selection message.

Step 605: The first terminal device sends a registration request message to the AMF, where the registration request message includes identification information of the first terminal device.

In a possible implementation, the first terminal device may send a fourth message to the access network device, and encapsulate the registration request message into the fourth message. The registration request message includes the identification information of the first terminal device. After receiving the fourth message, the access network device decapsulates the fourth message to obtain the registration request message, then encapsulates the registration request message into an eighth message, and next, sends the eighth message to the first network element. The first network element decapsulates the eighth message to obtain the registration request message. Step 605 may be understood as follows: The access network device transmits the identification information of the first terminal device in a message transparent transmission manner.

In a possible implementation, the registration request message further includes a type, for example, a passive terminal or a semi-passive terminal, of the first terminal device.

In a possible implementation, if the first terminal device receives the first authentication random number, the first terminal device encrypts the first authentication random number by using a configured key, to generate a first ciphertext, and sends the first ciphertext and the identification information of the first terminal device to the AMF. In this application, the first ciphertext may also be understood as being obtained after digital signature is performed on the first authentication random number.

In another possible implementation, if the first terminal device determines to perform authentication on a network accessed by the first terminal device, the first terminal device generates a second authentication random number, and sends the second authentication random number to the AMF.

In a possible implementation, after receiving the registration request message, the AMF may determine whether an authentication procedure needs to be initiated. When the authentication procedure needs to be performed, after successfully authenticating the first terminal device, the AMF accepts registration of the first terminal device, and returns the identification information of the first terminal device to the application function network element, to count the first terminal device.

In a possible implementation, the AMF may further determine, based on the type of the first terminal device, whether the authentication procedure needs to be initiated. For example, a passive terminal does not need to be authenticated, and a semi-passive terminal needs to be authenticated.

In a possible implementation, the AMF may alternatively determine, based on whether the first authentication random number and/or the second authentication random number are/is received, whether the authentication procedure needs to be initiated. For example, when receiving the first authentication random number and/or the second authentication random number, the AMF determines that the authentication procedure needs to be initiated. When the AMF does not receive the first authentication random number and the second authentication random number, the AMF determines that the authentication procedure does not need to be initiated.

In another possible implementation, the AMF may not perform a step of determining whether to initiate an authentication procedure, but may accept registration of the first terminal device after accepting registration request message, and return the identification information of the first terminal device to the application function network element, to count the first terminal device. In FIG. 6A and FIG. 6B, an example in which the AMF determines whether to initiate the authentication procedure is used for description.

Step 606: The AMF determines whether to initiate the authentication procedure for the first terminal device.

When determining that the authentication procedure needs to be initiated, the AMF performs step 607.

In a possible implementation, after the AMF receives the first ciphertext, the AMF sends a first authentication request message to the authentication server. The first authentication request message includes the identification information of the first terminal device and the first ciphertext. It may also be understood that, when the first authentication request message includes the first ciphertext, it may indicate that the first authentication request message is for requesting to perform authentication on the first terminal device. If the authentication server decrypts the first ciphertext based on the configured key and then determines that a decrypted first ciphertext is the first authentication random number, authentication succeeds. The authentication server sends an authentication success indication to the AMF. In this embodiment, if the AMF determines, in step 603, that the authentication procedure needs to be performed, it may be determined that the step is performed by default.

In a possible implementation, when the AMF receives the second authentication random number, the AMF sends a first authentication request message to the authentication server. The first authentication request message includes the identification information of the first terminal device and the second authentication random number. It may also be understood that, when the first authentication request message includes the second authentication random number, it may indicate that the first authentication request message is for requesting to perform authentication on the network accessed by the first terminal device. The authentication server encrypts the second authentication random number based on a configured key, to generate a second ciphertext, and sends the second ciphertext to the AMF. Then, the AMF sends the second ciphertext to the first terminal device. The first terminal device decrypts the second ciphertext based on the configured key and then determines that a decrypted second ciphertext is the second random number. In this case, authentication succeeds. The first terminal device sends an authentication success indication to the AMF.

In another possible implementation, the AMF may include both the first ciphertext and the second authentication random in a first authentication request message. In this case, it may be understood as that the first authentication request message is for requesting to perform authentication on the first terminal device, and is also for requesting to perform authentication on a network accessed by the first terminal device. For related descriptions, refer to the foregoing content. Details are not described again.

When determining that the authentication procedure does not need to be initiated, the AMF may perform step 609.

In a possible implementation, the AMF may determine, based on content included in the counting request a2, whether the authentication procedure for the first terminal device needs to be initiated.

For example, when the counting request a2 may include address information of the authentication server, the AMF determines that a terminal device in one or more terminal devices on which the counting request a2 is for requesting to perform counting needs to be authenticated, and that a network accessed by the terminal device in the one or more terminal devices on which that the counting request a2 is for requesting to perform counting needs to be authenticated.

For another example, when the counting request a2 may include address information of the authentication server, the AMF determines that a terminal device in one or more terminal devices on which the counting request a2 is for requesting to perform counting needs to be authenticated. For another example, when the counting request a2 may include address information of the authentication server, the AMF determines that a network accessed by a terminal device in one or more terminal devices on which the counting request a2 is for requesting to perform counting needs to be authenticated.

For another example, the counting request a2 may include third indication information. The third indication information indicates to perform authentication on the first terminal device and/or perform authentication on the network accessed by the first terminal device. For example, the counting request a2 may include an information element of a Boolean type, and when the information element is set to "true", it indicates that authentication needs to be performed on the first terminal device, and/or authentication needs to be performed on the network accessed by the first terminal device. In this case, the AMF may determine, based on the third indication information, that a terminal device in one or more terminal devices on which the counting request a2 is for requesting to perform counting needs to be authenticated, and/or an access network device accessed by a terminal device in one or more terminal devices on which the counting request a2 is for requesting to perform counting needs to be authenticated.

It should be noted that, when the counting request a2 includes the address information of the authentication server, the AMF may determine the address information of the authentication server from the counting request a2. The address information of the authentication server in the counting request a2 may be obtained by the management function network element from the counting request a1. The address information of the authentication server in the counting request a2 may alternatively be determined by the management function network element based on preconfigured information. The preconfigured information may be preconfigured in the management function network element, or may be obtained by the management function network element from another place in which the preconfigured information is stored. For example, the preconfigured information may be a correspondence (the correspondence may be stored in subscription information of the application identifier) between application identification information and the address information of the authentication server. The management function network element determines the address information of the authentication server based on the correspondence. For another example, the preconfigured information may be address information of the one or more authentication servers (the address information of the one or more authentication servers may be stored in subscription information of the application identifier). The management function network element selects one piece of the address information to perform current authentication.

In another possible implementation, the AMF may determine whether the authentication procedure for the first terminal device needs to be initiated, without depending on an address information of the authentication server and/or third indication information in the counting request a2. In this case, the counting request a2 may not include the address information of the authentication server, and may not include the third indication information.

For example, a correspondence between an application identifier of an application function network element that initiates counting, whether authentication performed on the terminal device needs to be initiated, and whether authentication performed on a network accessed by the terminal device needs to be initiated may be preset. The AMF may determine, based on the correspondence, whether authentication needs to be performed on the first terminal device and/or whether authentication needs to be performed on the network accessed by the terminal device.

For another example, a rule may be preset: If the second operation needs to be performed during current counting of the terminal device, authentication performed on the terminal device needs to be initiated; or if the second operation (for example, an operation of querying terminal device identification information for the terminal device) does not need to be performed during current counting of the terminal device, authentication performed on the terminal device does not need to be initiated. In this way, the AMF may determine, according to the preset rule, whether to perform authentication on the first terminal device and/or whether to perform authentication on the network accessed by the terminal device.

When the counting request a2 does not include address information of the authentication server, the AMF may determine the address information of the authentication server based on preconfigured information. The preconfigured information may be preconfigured in the AMF, or may be obtained by the AMF from another place in which the preconfigured information is stored. For example, the preconfigured information may be a correspondence (the correspondence may be stored in subscription information of the application identifier) between application identification information and the address information of the authentication server. The AMF determines the address information of the authentication server based on the correspondence. For another example, the preconfigured information may be address information of the one or more authentication servers (the address information of the one or more authentication servers may be stored in subscription information of the application identifier). The AMF selects one piece of the address information to perform current authentication.

Step 607: The AMF initiates the authentication procedure for the first terminal device.

Step 608: The AMF determines that authentication succeeds.

For an authentication process in step 607 and step 608, several possible examples are enumerated in this embodiment of this application.

For example, the AMF sends the first authentication request message to the authentication server. The first authentication request message is for requesting to perform authentication on the first terminal device. After the authentication server successfully authenticates the first terminal device, the authentication server sends a first authentication success response to the AMF. Correspondingly, the AMF may receive the first authentication success response from the authentication server. The first authentication success response message indicates that the authentication server successfully authenticates the first terminal device.

For another example, the AMF sends the first authentication request message to the authentication server. The first authentication request message is for requesting the first terminal device to authenticate the network accessed by the first terminal device. When determining that the first authentication request message is for requesting the first terminal device to authenticate the network accessed by the first terminal device, the authentication server returns a verification parameter of the first terminal device to the AMF. For example, the authentication server may feed back a first authentication success response message to the AMF. Correspondingly, the AMF may receive the first authentication success response message from the authentication server. The first authentication success response message carries the verification parameter. The AMF sends the verification parameter to the first terminal device by using a second authentication request. The second authentication request carries the verification parameter, and the second authentication request is for requesting the first terminal device to authenticate the network accessed by the first terminal device. The first terminal device returns a second authentication success response message to the AMF after succeeding in authentication based on the verification parameter. The second authentication success response message indicates that the first terminal device successfully authenticates the network accessed by the first terminal device.

For another example, the AMF sends the first authentication request message to the authentication server. The first authentication request message is for requesting to perform authentication on the first terminal device and perform authentication on the network accessed by the first terminal device. In one aspect, the authentication server authenticates the first terminal device when determining that the first authentication request message is for requesting to perform authentication server on the first terminal device. In another aspect, when determining that the first authentication request message is for requesting the first terminal device to authenticate the network accessed by the first terminal device, the authentication server determines that the verification parameter of the first terminal device needs to be returned to the AMF. In this case, the authentication server feeds back a first authentication success response message to the AMF. Correspondingly, the AMF may receive the first authentication success response message from the authentication server. The first authentication success response message indicates that the authentication server successfully authenticates the first terminal device, and the first authentication success response message carries the verification parameter. Further, the AMF sends the verification parameter to the first terminal device by using a second authentication request. The second authentication request carries the verification parameter, and the second authentication request is for requesting the first terminal device to authenticate the network accessed by the first terminal device. The first terminal device returns a second authentication success response message to the AMF after succeeding in authentication based on the verification parameter. The second authentication success response message indicates that the first terminal device successfully authenticates the network accessed by the first terminal device.

An example of step 606 to step 608 is a possible implementation. During specific implementation, step 606 to step 608 may not be performed.

Step 609: The AMF sends a data transmission request message as to the application function network element, where the data transmission request message as includes the identification information of the first terminal device.

Correspondingly, the application function network element receives the data transmission request message a5.

In this embodiment of this application, the AMF and the application function network element may communicate with each other by using the management function network element, or may communicate with each other by using the NEF.

Step 610: The application function network element sends a data transmission response message a6 to the AMF, where the data transmission response message a6 indicates that the application function network element receives the identification information of the first terminal device.

Step 611: The AMF sends a registration accept message to the first terminal device.

The registration accept message indicates that the first terminal device is successfully registered. Step 611 is an optional step. In a possible implementation, the AMF encapsulates the registration accept message into a message X and sends the message X to the access network device. The access network device decapsulates the message X to obtain the registration accept message, encapsulates the registration accept message into a message Y, and sends the message Y to the first terminal device.

Step 612: The AMF sends a counting request a7 to the access network device, where the counting request a7 includes the first indication information, and the first indication information indicates at least one of the following content: indicating that the target operation performed on the first terminal device is completed, indicating to query identification information of a next terminal device, or indicating to perform a next random access procedure.

Correspondingly, the access network device receives the counting request a7.

In a possible implementation, if the AMF determines, based on the counting request a2 in step 602, that the target operation is the operation of requesting to query the terminal device identification information for the one or more terminal devices, after receiving the identification information of the first terminal device, the AMF may determine that the target operation performed on the first terminal device is completed.

Step 613: The access network device counts the next terminal device.

After receiving the first indication information, the access network device determines that counting a current terminal device is completed, and may continue to count the next terminal device, that is, query identification information of the next terminal device. For differentiation, the next terminal device may be referred to as a second terminal device. The access network device sends a fifth message to the one or more selected target terminal devices. The fifth message is for requesting to obtain the identification information of the one or more terminal devices. Specifically, the fifth message is a query repeat message. After receiving the fifth message, the first terminal device exits a counting process, that is, no longer responds to an operation request for the one or more selected target terminal devices. After receiving the fifth message, other selected one or more target terminal devices initiate a random access process. One of the other selected one or more target terminal devices, namely, the second terminal device in this embodiment, successfully performs random access. A specific random access process may include the following.

The other selected one or more target terminal devices subtract 1 from the previously set second random number. If a second random number of a terminal device is subtracted to 0, the terminal device sends a fourth random number to the access network device. If the access network device can correctly receive the fourth random number, the access network device sends the fourth random number to the terminal device. When the terminal device receives the fourth random number, the terminal device determines that random access succeeds. After the second terminal device successfully performs random access, the second terminal device sends identification information of the second terminal device to the AMF. For a processing process of the network device for the second terminal device, refer to a processing process for the first terminal device. For example, step 605 to step 613 are a possible processing process. Details are not described again in this embodiment of this application.

Step 614: After the access network device determines that identification information of a terminal device that corresponds to the access network device and that is in the one or more terminal devices is obtained, the access network device sends fourth indication information to the AMF, where the fourth indication information may indicate that the identification information of the terminal device that corresponds to the access network device and that in the one or more terminal devices is obtained or the target operation is completed.

Correspondingly, the AMF receives the fourth indication information from the access network device.

In a possible implementation, in step 614, the access network device may send the fourth indication information to the AMF when the access network device determines that the access network device completes the target operation (or completes counting) for all terminal devices on which the counting request a1 is for requesting to perform counting and that can be found by the access network device. The fourth indication information may further indicate that, for current counting initiated by the application function network element, the access network device completes counting for the terminal device that can be found by the access network device.

In a possible implementation, after performing step 613, if the access network device does not receive, within configured duration, a random access request message initiated by any terminal device, the access network device determines that counting (or querying or the target operation) performed on a terminal device that is in a coverage range of the access network device and that is in the one or more terminal devices is completed.

Step 615: The AMF sends fifth indication information to the management function network element, where the fifth indication information may indicate that obtaining identification information of a terminal device in the one or more terminal devices is completed or that the target operation is completed.

The AMF may receive fourth indication information from the one or more access network devices, and each access network device corresponds to one piece of fourth indication information. After receiving the fourth indication information corresponding to all the access network devices (namely, all the access network devices that receive the counting request a3) corresponding to the AMF, the AMF may send the fifth indication information to the management function network element. The fifth indication information may indicate that obtaining identification information of a terminal device that corresponds to the AMF and that is in the one or more terminal devices is completed or that the target operation is completed. Alternatively, the fifth indication information may indicate that, for this operation request initiated by the management function network element, the AMF completes performing an operation on a terminal device that can be found by the one or more access network devices and that is managed by the AMF.

Step 616: The management function network element sends sixth indication information to the application function network element, where the sixth indication information indicates that the identification information of the terminal device in the one or more terminal devices is obtained or the target operation is completed.

The management function network element may receive fifth indication information from the one or more AMFs, and each AMF corresponds to one piece of fifth indication information. After receiving the fifth indication information corresponding to all the AMFs, the management function network element may send the sixth indication information to the application function network element. The sixth indication information may indicate that obtaining the identification information of the one or more terminal devices is completed. Alternatively, the sixth indication information may indicate that current counting initiated by the application function network element is completed.

In step 614 and step 615, if the access network device transparently transmits the fourth indication information to the management function network element by using the AMF, or the access network device directly sends the fourth indication information to the management function network element, and then, the management function network element sends the sixth indication information to the application function network element, the management function network element may receive the fourth indication information from the one or more access network devices, and each access network device corresponds to one piece of fourth indication information. After receiving the fourth indication information corresponding to all the access network devices, the management function network element may send the sixth indication information to the application function network element. The sixth indication information may indicate that obtaining the identification information of the terminal device in the one or more terminal devices is completed. Alternatively, the sixth indication information may indicate that performing an operation on all terminal devices that the application function network element requests to operate is completed.

It can be learned from the solution shown in FIG. 6A and FIG. 6B that the application function network element can count a passive terminal device (for example, the first terminal device) by using a core network element and an access network element, and can further trigger a registration procedure of the passive terminal device, to initiate an authentication procedure for the passive terminal device. In addition, the AMF sends the identification information of the first terminal device to the application function network element only after authentication succeeds, to improve accuracy of a counting result. In addition, after determining that counting of one terminal device ends, the AMF triggers the access network device to count a next terminal device. In this way, the access network device can count the terminal device in a more orderly manner.

In this embodiment of this application, the AMF may separately report information corresponding to a plurality of terminal devices to the application function network element, or may report information corresponding to a plurality of terminal devices to the application function network element by using one piece of signaling.

For example, in the solution shown in FIG. 6A and FIG. 6B, after receiving the identification information of the first terminal device, the AMF may feed back the identification information of the first terminal device to the application function network element in step 609. Similarly, after receiving the identification information of the second terminal device, the AMF may also feed back the identification information of the second terminal device to the application function network element.

For another example, after receiving identification information of the plurality of terminal devices, the AMF may feed back the identification information of the plurality of terminal devices to the application function network element by using one piece of signaling. This can reduce signaling interaction between the AMF and the application function network element.

For still another example, after receiving identification information of all terminal devices that need to be counted by the AMF, the AMF may feed back the obtained identification information of all the terminal devices to the application function network element by using the piece of signaling (which may be referred to as a sixth message for differentiation).

The following further describes the communication methods in FIG. 5 and FIG. 6A and FIG. 6B in the foregoing embodiments with reference to FIG. 7A and FIG. 7B in a specific embodiment. FIG. 7A and FIG. 7B show an example of a schematic flowchart of still another communication method by using an example in which a first network element is an AMF or a unit, module, or chip in an AMF network element. In the solution shown in FIG. 7A and FIG. 7B, the first network element may be the AMF in FIG. 4a, FIG. 4b, FIG. 4c, FIG. 4d, or FIG. 4g or a unit in the AMF network element.

A difference between FIG. 7A and FIG. 7B and FIG. 6A and FIG. 6B lies in that, in FIG. 6A and FIG. 6B, an example in which the counting request a1 sent by the application function network element is for requesting to perform the operation of querying the terminal device identification information for the one or more terminal devices and not to perform the second operation on the one or more terminal devices is used for description. However, in FIG. 7A and FIG. 7B, a counting request b 1 sent by an application function network element includes second indication information. The second indication information indicates to perform a second operation on one or more terminal devices.

As shown in FIG. 7A and FIG. 7B, the method includes the following steps.

Step 701: The application function network element sends the counting request b1 to the management function network element.

Correspondingly, the management function network element receives the counting request b 1.

For the architecture of the network system shown in FIG. 4g, the management function network element may receive the counting request b 1 from the NEF or the application function network element. In this procedure, an example in which the management function network element receives the counting request b 1 from the application function network element is used for description.

The counting request b1 includes the second indication information. The second indication information indicates to perform the second operation on the one or more terminal devices. It should be noted that, in the solution shown in FIG. 7A and FIG. 7B, the second operation may be all or some operations in a target operation.

When the second operation includes a read operation, the counting request b1 may further include to-be-read area information of a storage area of the terminal device, for example, may include information such as a to-be-read start word address of the storage area of the terminal device and a quantity of to-be-read words. The counting request b1 may be for requesting to perform a same read operation on all the terminal devices, or separately perform different read operations on different terminal devices. For example, the read operation is performed on both a first terminal device and a second terminal device, but a quantity of to-be-read words of the first terminal device is different from a quantity of to-be-read words of the second terminal device.

When the second operation includes a write operation, the counting request b1 may further include data to be written into the storage area of the terminal device, and may further include area information to be written into the storage area of the terminal device, for example, may include information like a start word address to be written into the storage area of the terminal device. The counting request b1 may be for requesting to perform a same write operation on all the terminal devices, or separately perform different write operations on different terminal devices. For example, the write operation is performed on both a first terminal device and a second terminal device, but to-be-written data of the first terminal device is different from to-be-written data of the second terminal device.

In a possible implementation, for any two terminal devices, for example, the first terminal device and the second terminal device, in all of the one or more terminal devices on which the counting request is for requesting to perform counting, the counting request b1 may be for requesting to perform a same operation on the first terminal device and the second terminal device, or requesting to perform different operations on the first terminal device and the second terminal device. It may also be understood as follows: For each of the one or more terminal devices on which the counting request is for requesting to perform counting, the counting request b1 is for requesting to perform a second operation corresponding to the terminal device on the terminal device. Two second operations corresponding to any two terminal devices may be the same, or may be different. For example, the counting request b1 may be for requesting to perform a read operation on the first terminal device and not to perform a write operation, and the counting request b 1 is for requesting to perform a write operation on the second terminal device and not to perform a read operation.

It should be noted that the counting request b1 may be further for requesting to query terminal device identification information for the one or more terminal devices. For example, the counting request b1 includes first indication information, and the first indication information indicates to perform an operation of querying the terminal device identification information for the one or more terminal devices. Optionally, the counting request b1 may not include the first indication information.

The counting request b1 may include at least one of the following content: terminal device indication information, indication information of a target area, or application identification information. For related content of the counting request b1, refer to the related content of the foregoing counting request a1. Details are not described again.

Step 702: The management function network element sends a counting request b2 to the AMF.

Correspondingly, the AMF receives the counting request b2.

When the first network element is the AMF or the unit, a module, or a chip in the AMF, the first network element may receive a first message from the management function network element. The counting request b2 may be a possible implementation of the first message.

In a possible implementation, the counting request b2 may include the second indication information.

It should be noted that the counting request b2 may be further for requesting to query the terminal device identification information for the one or more terminal devices. For example, the counting request b2 includes the first indication information, and the first indication information indicates to perform the operation of querying the terminal device identification information for the one or more terminal devices. Optionally, the counting request b2 may not include the first indication information. For content of the counting request b2, refer to the related content of the counting request a2. Details are not described again.

The counting request b2 may include at least one of the following content: terminal device indication information, indication information of a target area, or application identification information. For related content of the counting request b2, refer to the related content of the foregoing counting request a2. Details are not described again.

Step 703: The AMF sends a counting request b3 to one or more access network devices.

Correspondingly, the access network device receives the counting request b3.

For related content of the counting request b3, refer to the related content of the foregoing counting request a3. Details are not described again. For related content of step 703, refer to the related content of step 603. Details are not described again.

Step 704: The access network device sends a query request b4 to the first terminal device. The query request b4 is for requesting to obtain the identification information of the one or more terminal devices.

The query request b4 in this embodiment of this application may be an implementation form of the third message.

For related content of the query request b4, refer to the related content of the query request a4. Details are not described again. For related content of step 704, refer to the related content of step 604. Details are not described again.

Step 705: The first terminal device sends a registration request message to the AMF, where the registration request message includes identification information of the first terminal device.

For related content of step 705, refer to the related content of step 605. Details are not described again.

Step 706: The AMF determines whether to initiate an authentication procedure for the first terminal device.

When determining that the authentication procedure needs to be initiated, the AMF performs step 707.

When determining that the authentication procedure does not need to be initiated, the AMF performs step 709.

For related content of step 706, refer to the related content of step 606. Details are not described again.

Step 707: The AMF initiates the authentication procedure for the first terminal device.

For related content of step 707, refer to the related content of step 607. Details are not described again.

Step 708: The AMF determines that authentication succeeds.

For related content of step 708, refer to the related content of step 608. Details are not described again.

An example of step 706 to step 708 is a possible implementation. During specific implementation, step 706 to step 708 may not be performed.

Step 709: The AMF sends a data transmission request message b5 to the application function network element, where the data transmission request message b5 includes the identification information of the first terminal device.

For related content of the data transmission request message b5, refer to the related content of the foregoing data transmission request message a5. Details are not described herein again.

For related content of step 709, refer to the related content of step 609. Details are not described again.

Step 710: The application function network element sends a data transmission response message b6 to the AMF, where the data transmission response message b6 indicates that the application function network element receives the identification information of the first terminal device.

For related content of the data transmission response message b6, refer to the related content of the foregoing data transmission response message a6. Details are not described herein again. For related content of step 710, refer to the related content of step 610. Details are not described again.

Step 711: The AMF sends a registration accept message to the first terminal device.

The registration accept message indicates that the first terminal device is successfully registered.

For related content of step 711, refer to the related content of step 611. Details are not described again.

Step 712: The AMF sends a configuration update request message to the first terminal device, where the configuration update request message includes the second indication information, and the second indication information indicates to perform the second operation on the one or more terminal devices. The AMF determines, based on the fact that the target operation in the counting request in step 702 is the second operation, to perform the second operation on the first terminal device.

Correspondingly, the first terminal device receives the configuration update request message.

In a possible implementation, the AMF sends the configuration update request message to the first terminal device by using the access network device. For example, the AMF encapsulates the update request message into a message I. When receiving the message I from the AMF, the access network device decapsulates the message I to obtain the configuration update request message, then encapsulates the configuration update request message into a message J, and sends the message J to the first terminal device. In other words, the access network device transparently transmits the configuration update request message. During specific implementation, the AMF may alternatively send the second indication information to the first terminal device in another manner. For example, the AMF sends the second indication information to the access network device, the access network device receives the second indication information from the AMF, and the access network device sends the second indication information to the first terminal device.

Step 713: The first terminal device sends a configuration update complete message to the AMF, where the configuration update complete message includes execution result information corresponding to the second operation.

In step 713, after receiving the configuration update request message, the first terminal device may perform the second operation, obtain the execution result information corresponding to the second operation, and then send the configuration update complete message to the AMF.

When the second operation includes the read operation, the execution result information corresponding to the second operation may include read data. In a possible implementation, the read data included in the execution result information corresponding to the second operation may be encrypted, for example, may be encrypted by using a key. There are a plurality of manners of obtaining the key. For example, another apparatus may send the key to the first terminal device. In a possible implementation, in the authentication procedure for the first terminal device, an authentication server sends the key to the first terminal device. Correspondingly, the first terminal device receives the key from the authentication server. The authentication server may directly send the key to the first terminal device, or may send the key by using another apparatus. For example, the authentication server sends the key to the AMF. Correspondingly, the AMF receives the key from the authentication server, and further, the AMF sends the key to the first terminal device. In another possible implementation, the key may be preconfigured on a first device side.

When the second operation includes the write operation, the execution result information corresponding to the second operation may include indication information indicating that the write operation performed on the first terminal device is completed.

When the second operation includes an access operation, the execution result information corresponding to the second operation may include indication information indicating that the access operation performed on the first terminal device is completed.

When the second operation includes a kill operation, the execution result information corresponding to the second operation may include indication information indicating that the kill operation performed on the first terminal device is completed.

When the second operation includes a lock operation, the execution result information corresponding to the second operation may include indication information indicating that the lock operation performed on the first terminal device is completed.

When the second operation includes a block write operation, the execution result information corresponding to the second operation may include indication information indicating that the block write operation performed on the first terminal device is completed.

When the second operation includes a block erase operation, the execution result information corresponding to the second operation may include indication information indicating that the block erase operation performed on the first terminal device is completed.

In a possible implementation, the first terminal device sends the configuration update complete message to the AMF by using the access network device. For example, the first terminal device encapsulates the configuration update complete message into a message K and sends the message K to the access network device. After receiving the message K from the first terminal device, the access network device decapsulates the message K to obtain the configuration update complete message, then encapsulates the configuration update complete message into a message L, and then sends the message L to the AMF. In other words, the access network device transparently transmits the configuration update complete message. During specific implementation, the first terminal device may alternatively send, to the AMF in another manner, the execution result information corresponding to the second operation. For example, the first terminal device sends, to the access network device, the execution result information corresponding to the second operation. The access network device receives, from the first terminal device, the execution result information corresponding to the second operation. The access network device sends, to the first network element, the execution result information corresponding to the second operation.

In a possible implementation, the AMF may further include a second operation indication in step 711, and does not perform step 712. The first terminal device returns an execution result of the second operation in step 713.

Step 714: The AMF sends a data transmission request message b7 to the application function network element, where the data transmission request message b7 includes an execution result information corresponding to the second operation.

Correspondingly, the application function network element receives the data transmission request message b7.

The execution result information corresponding to the second operation included in step 714 is the execution result information corresponding to the second operation carried in the configuration update complete message in step 713.

In a possible implementation, the data transmission request message b7 may further include the identification information of the first terminal device, to identify that the execution result information corresponding to the second operation is obtained after the second operation is performed on the first terminal device. Further, the data transmission request message b7 includes the identification information of the first terminal device. Therefore, in a possible implementation, step 709 and step 710 may be canceled. To be specific, the AMF does not need to feed back the identification information of the first terminal device to the application function network element before step 714, and may feed back both the identification information of the first terminal device and the execution result information corresponding to the second operation to the application function network element in step 714.

Step 715: The application function network element sends a data transmission response message b8 to the AMF, where the data transmission response message b8 indicates that the application function network element successfully receives the data transmission request message b7.

In a possible implementation, when the second operation does not include the read operation, for example, the second operation includes the write operation and the lock operation, step 714 and step 715 may not be performed either. To be specific, the AMF may not feed back, to the application function network element either, the execution result information corresponding to the second operation.

Step 716: The AMF sends a counting request b9 to the access network device, where the counting request b9 includes the first indication information, and the first indication information indicates at least one of the following content: indicating that the target operation performed on the first terminal device is completed, indicating to query identification information of a next terminal device, or indicating to perform a next random access procedure.

Correspondingly, the access network device receives the counting request b9.

For related content of the counting request b9, refer to the related content of the counting request a7. Details are not described again. For related content of step 716, refer to the related content of step 612. Details are not described again. Different from that in step 612, after sending, to the application function network element, the identification information of the first terminal device and the execution result information corresponding to the second operation, the AMF performs step 716 to send the first indication information to the access network device. However, in the solution shown in FIG. 6A and FIG. 6B, the execution result information of the second operation does not need to be fed back to the application function network element. Therefore, after sending the identification information of the first terminal device to the application function network element, the AMF performs step 612 to send the first indication information to the access network device.

Step 717: The access network device counts the next terminal device.

For related content of step 717, refer to the related content of step 613. Details are not described again.

Step 718: The access network device sends fourth indication information to the AMF.

Correspondingly, the AMF receives the fourth indication information from the access network device.

For related content of step 718, refer to the related content of step 614. A difference between step 718 and step 614 lies in that: in FIG. 7A and FIG. 7B, the fourth indication information is sent after the access network device determines that the second operation is performed on all terminal devices that can be found. Other content is not described again.

Step 719: The AMF sends fifth indication information to the management function network element.

For related content of step 719, refer to the related content of step 615. Details are not described again.

Step 720: The management function network element sends sixth indication information to the application function network element, where the sixth indication information indicates that identification information of a terminal device in the one or more terminal devices is obtained or the target operation is completed.

For related content of step 720, refer to the related content of step 616. Details are not described again. It can be learned from the solution shown in FIG. 7A and FIG. 7B that the application function network element can count a passive terminal device (for example, the first terminal device) by using a core network element and an access network element, and can further perform the second operation in addition to the operation of querying the terminal device identification information, to implement more complex management for the terminal device. In addition, when the second operation includes the read operation, the key can be further transmitted to the first terminal device in the authentication process, to encrypt the read data, so as to improve data security.

In this embodiment of this application, the AMF may separately report information corresponding to a plurality of terminal devices to the application function network element, or may report information corresponding to a plurality of terminal devices to the application function network element by using one piece of signaling.

For example, in the solution shown in FIG. 7A and FIG. 7B, after receiving the identification information of the first terminal device and the execution result information obtained by performing the second operation on the first terminal device, the AMF may feed back, to the application function network element in step 709, the identification information of the first terminal device and the execution result information corresponding to the first terminal device. Similarly, after receiving identification information of the second terminal device and execution result information corresponding to the second terminal device, the AMF may also feed back, to the application function network element, the identification information of the second terminal device and the execution result information corresponding to the second terminal device.

For another example, after receiving the identification information of the plurality of terminal devices and execution result information corresponding to the plurality of terminal devices, the AMF may feed back, to the application function network element by using one piece of signaling, the identification information of the plurality of terminal devices and the execution result information corresponding to the plurality of terminal devices. This can reduce signaling interaction between the AMF and the application function network element.

For still another example, after receiving identification information of all terminal devices that need to be counted by the AMF and execution result information corresponding to all the terminal devices, the AMF may feed back, to the application function network element by using the piece of signaling (which may be referred to as a seventh message for differentiation), the obtained identification information of all the terminal devices and the obtained execution result information corresponding to all the terminal devices.

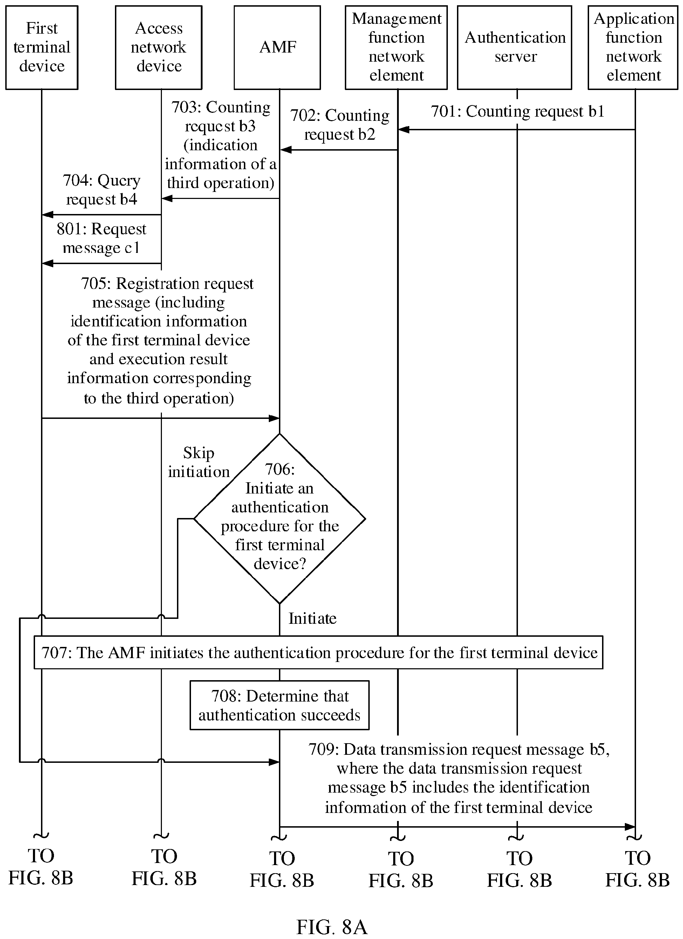

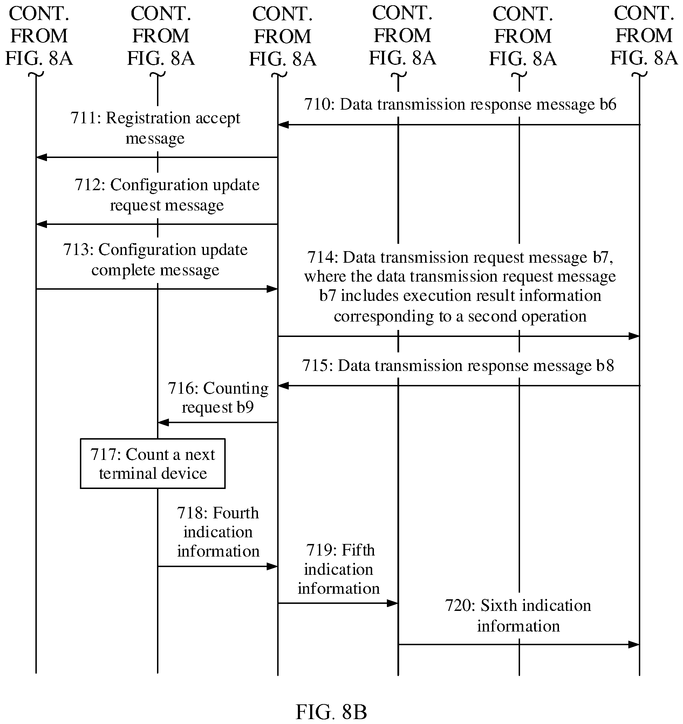

The following further describes the communication method in FIG. 7A and FIG. 7B in the foregoing embodiment with reference to FIG. 8A and FIG. 8B in a specific embodiment. FIG. 8A and FIG. 8B show an example of a schematic flowchart of still another communication method. For related content of a first network element in FIG. 8A and FIG. 8B, refer to the descriptions of the first network element in FIG. 7A and FIG. 7B. Details are not described herein again.

Compared with FIG. 7A and FIG. 7B, FIG. 8A and FIG. 8B have the following differences.

A target operation which is requested by a counting request b 1 in step 701 in FIG. 8A and FIG. 8B to be performed on one or more terminal devices includes a third operation, and the counting request b1 includes indication information indicating the third operation. The third operation may be all or some operations in the target operation. The third operation may be several preset operations. For example, the third operation includes at least one of the following content: a read operation, a write operation, an access operation, a kill operation, a lock operation, a block write operation, or a block erase operation. In a possible implementation, the third operation may be the read operation.

The target operation which is requested by a counting request b2 in step 702 in FIG. 8A and FIG. 8B to be performed on the one or more terminal devices includes the third operation, and the counting request b2 includes indication information indicating the third operation.

The target operation which is requested by a counting request b3 in step 703 in FIG. 8A and FIG. 8B to be performed on the one or more terminal devices includes the third operation, and the counting request b3 includes indication information indicating the third operation.

After step 704 in FIG. 8A and FIG. 8B, an access network device may perform step 801.

Step 801: An access network device sends a request message c1 to a first terminal device, where the request message c1 is for requesting to perform the third operation on the first terminal device. The request message c1 includes the indication information indicating the third operation.

In step 705 in FIG. 8A and FIG. 8B, after receiving the request message c1, the first terminal device may carry, in a sent registration request message, execution result information corresponding to the third operation.

For example, if the third operation is the read operation, the execution result information corresponding to the third operation is read data. For a specific example of the third operation and an example of an execution result corresponding to the third operation, refer to the related content of the second operation. Details are not described herein again.

For step 706 to step 720 in FIG. 8A and FIG. 8B, refer to the related content in FIG. 7A and FIG. 7B. Details are not described herein again.

It should be noted that, in the solution shown in FIG. 8A and FIG. 8B,
when the target operation alternatively includes the third operation and the second operation, the second operation is some operations in the target operation, and the third operation is some operations in the target operation. Any operation in the second operation is different from any operation in the third operation. For example, if the target operation includes the read operation and the write operation, the third operation may be the read operation, and the second operation may be the write operation.

It may also be understood that the counting request b 1 is for requesting to perform the target operation on the one or more terminal devices, and the target operation includes a plurality of operations. In a possible implementation, all operations in the target operation are requested, by using the solution in FIG. 7A and FIG. 7B, to be performed on the first terminal device in step 711. In another possible implementation, the target operation may be divided into two parts that are separately requested to be performed on the first terminal device. For example, if the target operation is divided into the third operation and the second operation, a request message c1 may be sent to the first terminal device in step 801. The request message c1 is for requesting to perform the third operation on the first terminal device. Then, the second operation is requested, in step 712, to be performed on the first terminal device.

When the target operation alternatively includes the third operation and the second operation, if an AMF needs to feed back the execution result information of the third operation to an application function network element, the AMF may feed back the execution result information of the third operation to the application function network element after step 705. For example, a data transmission request message b5 in step 709 may carry the execution result information of the third operation. A data transmission request message b7 in step 714 may alternatively carry the execution result information of the third operation.

When the target operation includes the third operation but does not include the second operation, step 712 to step 715 in FIG. 8A and FIG. 8B do not need to be performed. In this case, if an AMF needs to feed back the execution result information of the third operation to an application function network element, the AMF may feed back the execution result information of the third operation to the application function network element after step 705. For example, a data transmission request message b5 in step 709 may carry the execution result information of the third operation.

It can be learned from the solution shown in FIG. 8A and FIG. 8B that the third operation may be first performed on the first terminal device before the first terminal device is authenticated, to increase a speed of obtaining the execution result information corresponding to the third operation. In another aspect, when the target operation includes the third operation and the second operation, the third operation may be performed on the first terminal device before authentication, and the second operation is performed on the first terminal device after authentication, to distribute a workload of the first terminal device.

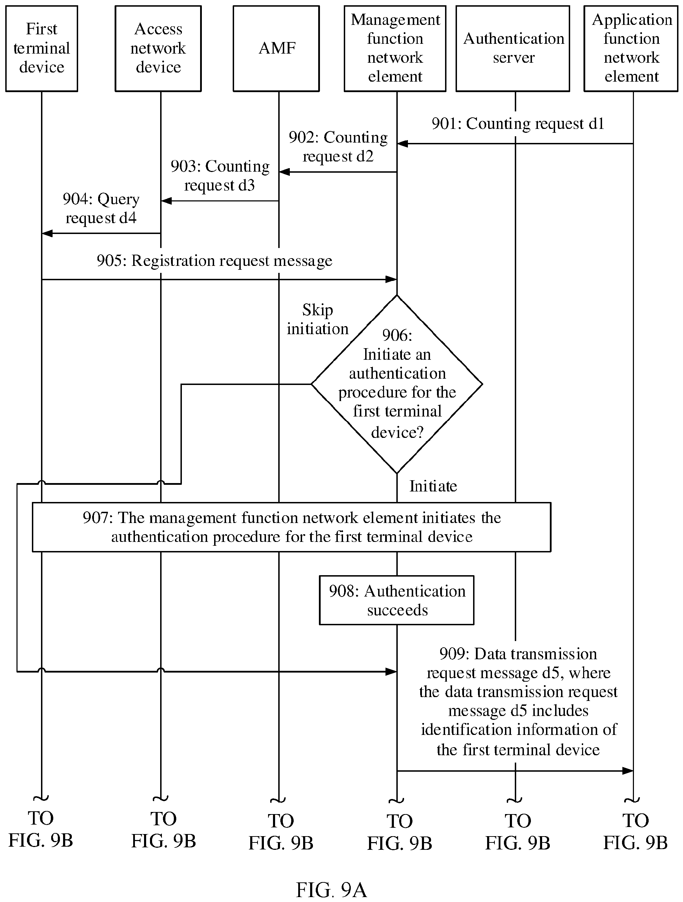

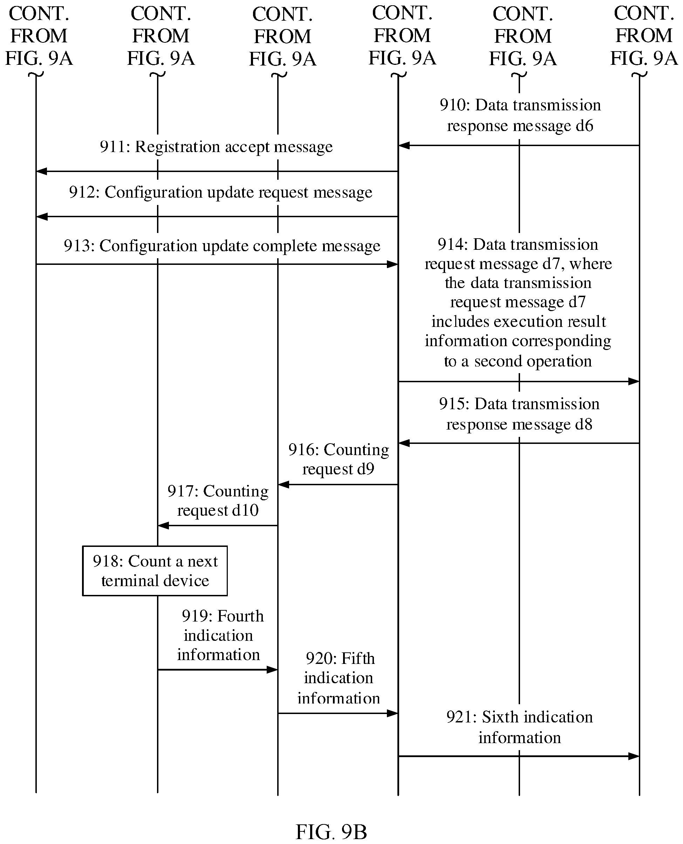

The following further describes the communication methods in FIG. 5, FIG. 6A and FIG. 6B, FIG. 7A and FIG. 7B, and FIG. 8A and FIG. 8B in the foregoing embodiments with reference to FIG. 9A and FIG. 9B in a specific embodiment. FIG. 9 A and FIG. 9B show an example of a schematic flowchart of still another communication method.

In FIG. 9A and FIG. 9B, an example in which a first network element is a management function network element, for example, the management function network element in FIG. 4a, FIG. 4c, FIG. 4e, FIG. 4f, or FIG. 4g, or a unit, module, or chip in a management function network element is used for description.

The first network element may alternatively be a NEF network element or a unit, module, or chip in a NEF network element. For example, the first network element may be the NEF network element in FIG. 4b or a unit, module, or chip that supports a function of a management function network element and that is in the NEF network element.

The management function network element shown in FIG. 9A and FIG. 9B may be the management function network element in FIG. 4a or FIG. 4c, or may be the NEF network element in FIG. 4b or a unit, module, or chip that supports a function of a management function network element and that is in the NEF network element in FIG. 4b. The management function network element in FIG. 9A and FIG. 9B may also be replaced with a NEF network element. For ease of description, an example in which the first network element is the management function network element is used in FIG. 9A and FIG. 9B for description. In the solution shown in FIG. 9A and FIG. 9B, the management function network element may also be replaced with the NEF network element.

As shown in FIG. 9A and FIG. 9B, the method includes the following steps.

Step 901: The application function network element sends a counting request d1 to the management function network element.

Correspondingly, the management function network element receives the counting request d1.

For the architecture of the network system shown in FIG. 4a, FIG. 4b, or FIG. 4c, the management function network element may receive the counting request d1 from the NEF or the application function network element. In this procedure, an example in which the management function network element receives the counting request d1 from the application function network element is used for description.

When the first network element is the management function network element or the unit, module, or chip in the management function network element, the first network element may receive a first message from the application function network element or the NEF network element. The counting request b 1 may be a possible implementation of the first message.

The counting request d1 may be the foregoing counting request a1, or may be the foregoing counting request b1. When the counting request d1 is the foregoing counting request a1, step 916 to step 921 do not need to be performed in the solution shown in FIG. 9A and FIG. 9B. For other related content of the counting request d1, refer to the foregoing related descriptions. Details are not described herein again. For related content of step 901, refer to the related content of step 601 and step 701. Details are not described herein again.

Step 902: The management function network element sends a counting request d2 to the AMF.

Correspondingly, the AMF receives the counting request d2.

When the first network element is the AMF, the first message in this embodiment of this application may be the counting request d2. The counting request d2 is for requesting to perform a target operation on one or more terminal devices.

The counting request d2 may be the foregoing counting request a2. For related content of the counting request d2, refer to the related content of the foregoing counting request a2. Details are not described again.

Step 903: The AMF sends a counting request d3 to one or more access network devices.

Correspondingly, the access network device receives the counting request d3.

For related content of the counting request d3, refer to the related content of the foregoing counting request a3. Details are not described again. For related content of step 903, refer to the related content of step 603. Details are not described again.

Step 904: The access network device sends a query request d4 to a first terminal device. The query request d4 is for requesting to obtain the identification information of the one or more terminal devices.

The query request d4 in this embodiment of this application may be an implementation form of the third message.

For related content of the query request d4, refer to the related content of the query request a4. Details are not described again. For related content of step 904, refer to the related content of step 604. Details are not described again.

Step 905: The first terminal device sends a registration request message to the management function network element, where the registration request message includes identification information of the first terminal device.

Specifically, the first terminal device may send a fourth message to the access network device, and encapsulate the registration request message into the fourth message. The registration request message includes the identification information of the first terminal device. After receiving the fourth message, the access network device decapsulates the fourth message to obtain the registration request message, decapsulates the registration request message into an eighth message, and then sends the eighth message to the AMF. The AMF decapsulates the eighth message to obtain the registration request message, encapsulates the registration request message into a ninth message, and sends the ninth message to the management function network element. The management function network element decapsulates the ninth message to obtain the registration request message. The foregoing step 905 may be understood as follows: The access network device and the AMF transmit the identification information of the first terminal device in a message transparent transmission manner.

Step 906: The management function network element determines whether to initiate an authentication procedure for the first terminal device.

When determining that the authentication procedure needs to be initiated, the management function network element performs step 907.

When determining that the authentication procedure does not need to be initiated, the management function network element performs step 909.

For related content of step 906, refer to the related content of step 606. Details are not described again.

Step 907: The management function network element initiates the authentication procedure for the first terminal device.

For content of step 907, refer to the related content of step 607. Details are not described again.

Step 908: The management function network element determines that authentication succeeds.

For related content of step 908, refer to the related content of step 608. Details are not described again.

An example of step 906 to step 908 is a possible implementation. During specific implementation, step 906 to step 908 may not be performed.

Step 909: The management function network element sends a data transmission request message d5 to the application function network element, where the data transmission request message d5 includes the identification information of the first terminal device.

For related content of the data transmission request message d5, refer to the related content of the data transmission request message a5. Details are not described herein again.

Step 910: The application function network element sends a data transmission response message d6 to the management function network element, where the data transmission response message d6 indicates that the application function network element receives the identification information of the first terminal device.

For related content of the data transmission response message d6, refer to the related descriptions of the data transmission response message a6. Details are not described herein again.

Step 911: The management function network element sends a registration accept message to the first terminal device. The registration accept message indicates that the first terminal device is successfully registered.

The management function network element encapsulates the registration accept message into a message Z and sends the message Z to the AMF. The AMF decapsulates Z to obtain the registration accept message, then encapsulates the registration accept message into a message X, and sends the message X to the access network device. The access network device decapsulates the message X to obtain the registration accept message, encapsulates the registration accept message into the message Y, and sends the message Y to the first terminal device.

Step 912: The management function network element sends a configuration update request message to the first terminal device, where the configuration update request message includes second indication information, and the second indication information indicates to perform the second operation on the one or more terminal devices.

Correspondingly, the first terminal device receives the configuration update request message.

The management function network element encapsulates the configuration update request message into the message Z and sends the message Z to the AMF. The AMF decapsulates Z to obtain the configuration update request message, then encapsulates the configuration update request message into the message X, and sends the message X to the access network device. The access network device decapsulates the message X to obtain the configuration update request message, encapsulates the configuration update request message into the message Y, and sends the message Y to the first terminal device.

Step 913: The first terminal device sends a configuration update complete message to the management function network element, where the configuration update complete message includes execution result information corresponding to the second operation.

Specifically, the first terminal device may send the fourth message to the access network device, and encapsulate the configuration update complete message into the fourth message. The configuration update complete message includes the execution result information. After receiving the fourth message, the access network device decapsulates the fourth message to obtain the configuration update complete message, encapsulates the configuration update complete message into the eighth message, and then sends the eighth message to the AMF. The AMF decapsulates the eighth message to obtain the configuration update complete message, then encapsulates the configuration update complete message into the ninth message, and sends the ninth message to the management function network element. The management function network element decapsulates the ninth message to obtain the configuration update complete message. The foregoing step 905 may be understood as follows: The access network device and the AMF transmit the execution result information of the first terminal device in the message transparent transmission manner.

Step 914: The management function network element sends a data transmission request message d7 to the application function network element, where the data transmission request message d7 includes the execution result information corresponding to the second operation.

Correspondingly, the application function network element receives the data transmission request message d7.

For related content of the data transmission request message d7, refer to the related content of the foregoing data transmission request message b7. Details are not described herein again.

Step 915: The application function network element sends a data transmission response message d8 to the management function network element, where the data transmission response message d8 indicates that the application function network element successfully receives the data transmission request message d7.

For related content of the data transmission response message d8, refer to the related content of the foregoing data transmission response message b8. Details are not described herein again.

Step 916: The management function network element sends a counting request d9 to the AMF, where the counting request d9 includes first indication information, and the first indication information indicates at least one of the following content: indicating to that the target operation performed on the first terminal device is completed, indicating to query identification information of a next terminal device, or indicating to perform a next random access procedure.

Correspondingly, the AMF receives the counting request d9 from the management function network element.

For related content of the counting request d9, refer to the related content of the counting request a7. Details are not described again.

Step 917: The AMF sends a counting request d10 to the access network device, where the counting request d10 includes the first indication information, and the first indication information indicates at least one of the following content: indicating that the target operation performed on the first terminal device is completed, indicating to query identification information of a next terminal device, or indicating to perform a next random access procedure.

Correspondingly, the access network device receives the counting request d10.

In a possible implementation, after receiving the counting request d9, the AMF may transparently transmit or forward the counting request d9 to the access network device. In this case, the counting request d9 may be the same as the counting request d10. In another possible implementation, the AMF may alternatively determine, after receiving the counting request d9, that the counting request d10 needs to be sent to the access network device.

Step 918: The access network device counts the next terminal device.

For related content of step 918, refer to the related content of step 613. Details are not described again.

Step 919: The access network device sends fourth indication information to the AMF.

Correspondingly, the AMF receives the fourth indication information from the access network device. For related content of the fourth indication information, refer to the foregoing descriptions. Details are not described herein again.

Step 920: The AMF sends fifth indication information to the management function network element.

Correspondingly, the management function network element receives the fifth indication information. For related content of the fifth indication information, refer to the foregoing descriptions. Details are not described herein again.

Step 921: The management function network element sends sixth indication information to the application function network element.

Correspondingly, the application function network element receives the sixth indication information. For related content of the sixth indication information, refer to the foregoing descriptions. Details are not described herein again.

It can be learned from the solution shown in FIG. 9A and FIG. 9B that an operation like initiating the authentication procedure for the first terminal device can be performed by the management function network element, and a series of operations of the AMF can be triggered by the management function network element. In some cases, the AMF may further undertake a function of transparently transmitting a message between the terminal device and the management function network element. This can reduce a workload of the AMF.

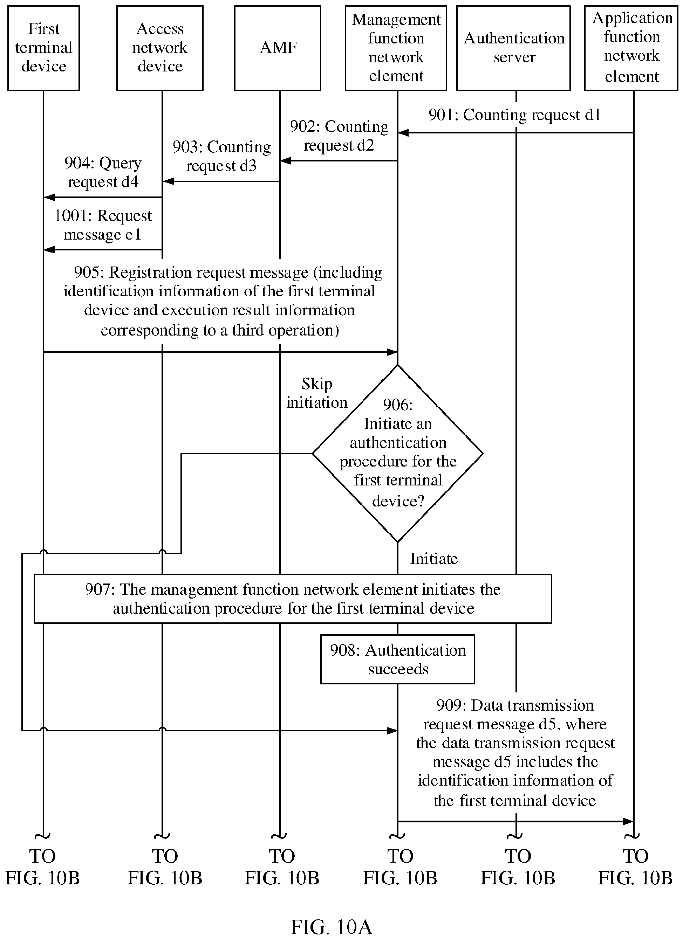

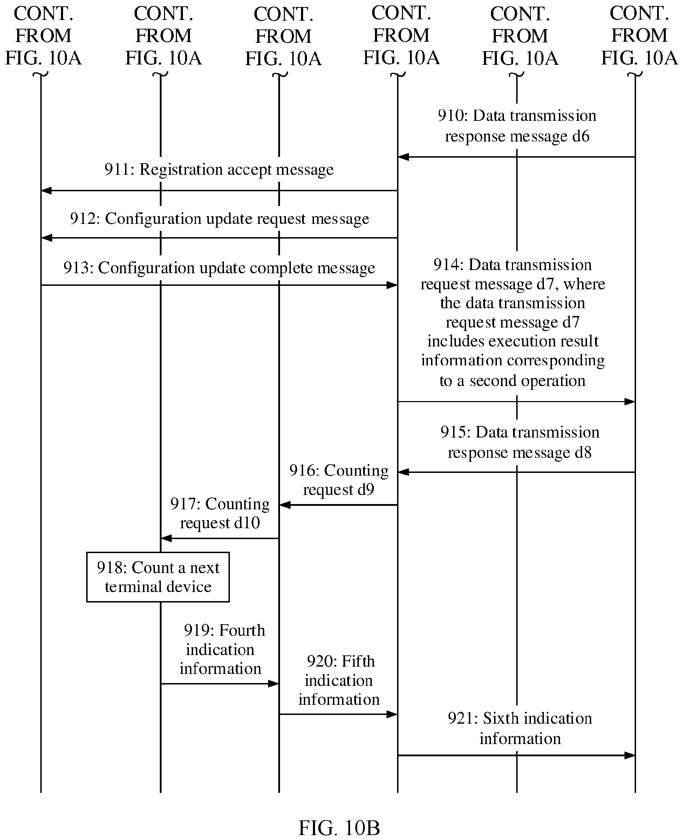

The following further describes the communication method in FIG. 9A and FIG. 9B in the foregoing embodiment with reference to FIG. 10A and FIG. 10B in a specific embodiment. FIG. 10A and FIG. 10B show an example of a schematic flowchart of still another communication method. Compared with FIG. 9A and FIG. 9B, FIG. 10A and FIG. 10B have the following differences.

A target operation that is requested by a counting request d1 in step 901 in FIG. 10A and FIG. 10B to be performed on one or more terminal devices includes a third operation, and the counting request d1 includes indication information indicating the third operation. For related content of the third operation, refer to the foregoing content. Details are not described herein again.

In the solution shown in FIG. 10A and FIG. 10B, for related content of a first network element, refer to the descriptions in FIG. 9A and FIG. 9B. Details are not described herein again.

The target operation that is requested by a counting request d2 in step 902 in FIG. 10A and FIG. 10B to be performed on the one or more terminal devices includes the third operation, and the counting request d2 includes the indication information indicating the third operation.

The target operation that is requested by a counting request d3 in step 903 in FIG. 10A and FIG. 10B to be performed on the one or more terminal devices includes the third operation, and the counting request d3 includes the indication information indicating the third operation.

After step 904 in FIG. 10A and FIG. 10B, an access network device may perform step 1001.

Step 1001: The access network device sends a request message e1 to a first terminal device, where the request message e1 is for requesting to perform the third operation on the first terminal device. The request message e1 includes the indication information indicating the third operation. For related content, refer to the foregoing step 801.

In step 905 in FIG. 10A and FIG. 10B, after receiving the request message e1, the first terminal device may carry, in a sent registration request message, execution result information corresponding to the third operation. For related content, refer to the foregoing step 705.

For step 906 to step 921 in FIG. 10A and FIG. 10B, refer to the related content in FIG. 9A and FIG. 9B. Details are not described herein again.

It should be noted that, in the solution shown in FIG. 10A and FIG. 10B,
when the target operation alternatively includes the third operation and a second operation, in a possible implementation, all operations in the target operation may be requested, in step 912 by using the solution in FIG. 9A and FIG. 9B, to be performed on the first terminal device. In another possible implementation, the target operation may be divided into two parts that are separately requested to be performed on the first terminal device. For example, if the target operation is divided into the third operation and the second operation, a request message e1 may be sent to the first terminal device in step 1001. The request message e1 is for requesting to perform the third operation on the first terminal device. Then, the second operation is requested, in step 912, to be performed on the first terminal device.

When the target operation alternatively includes the third operation and the second operation, if a management function network element needs to feed back the execution result information of the third operation to an application function network element, the management function network element may feed back the execution result information of the third operation to the application function network element after step 905. For example, a data transmission request message d5 in step 909 may carry the execution result information of the third operation. A data transmission request message d7 in step 914 may alternatively carry the execution result information of the third operation.

When the target operation includes the third operation but does not include the second operation, step 912 to step 915 in FIG. 10A and FIG. 10B do not need to be performed.

It can be learned from the solution shown in FIG. 10A and FIG. 10B that the third operation may be first performed on the first terminal device before the first terminal device is authenticated, to increase a speed of obtaining the execution result information corresponding to the third operation. In another aspect, when the target operation includes the third operation and the second operation, the third operation may be performed on the first terminal device before authentication, and the second operation is performed on the first terminal device after authentication, to distribute a workload of the first terminal device.

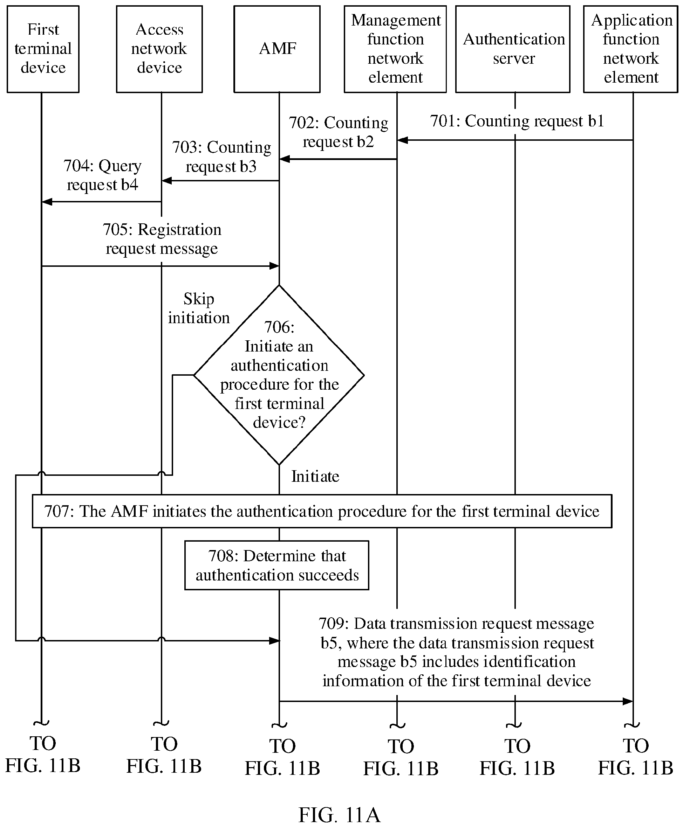

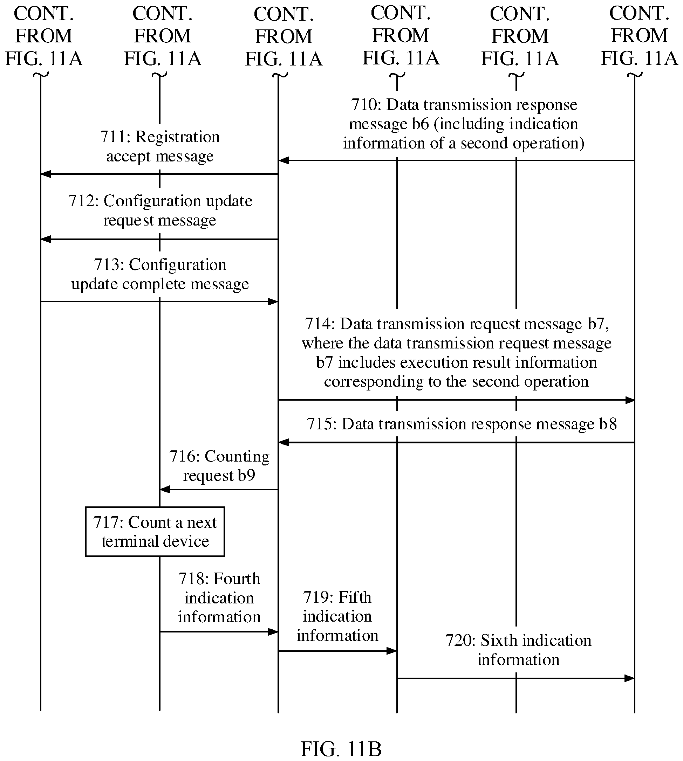

The following further describes the communication method in FIG. 7A and FIG. 7B in the foregoing embodiment with reference to FIG. 11A and FIG. 11B in a specific embodiment. FIG. 11A and FIG. 11B show an example of a schematic flowchart of still another communication method according to an embodiment of this application. In the solution shown in FIG. 11A and FIG. 11B, for related content of a first network element, refer to the descriptions in FIG. 7A and FIG. 7B. Details are not described herein again.

Compared with FIG. 7A and FIG. 7B, FIG. 11A and FIG. 11B have the following differences.

A counting request b 1 in step 701 in FIG. 11A and FIG. 11B may not carry an indication information of a second operation. An application function network element in FIG. 11A and FIG. 11B may carry the indication information of the second operation in a data transmission response message b6 in step 710. The data transmission response message b6 in step 710 in FIG. 11A and FIG. 11B may be further for requesting to perform the second operation on a first terminal device.

After receiving the indication information of the second operation in step 710, an AMF may trigger a subsequent step 712, to trigger the second operation to be performed on the first terminal device. It should be noted that the counting request b 1 in FIG. 11A and FIG. 11B may not carry the indication information of the second operation, and therefore a counting request b2 in FIG. 11A and FIG. 11B does not carry the indication information of the second operation either.

It can be learned from the solution in FIG. 11A and FIG. 11B that the application function network element can first initiate a request for querying an identifier of the first terminal device, and then, after subsequently finding the first terminal device, initiate a request for performing the second operation on the first terminal device. In this way, when second operations corresponding to two terminal devices are different, the application function network element may send, by using the data transmission response message, the indication information of the second operation corresponding to the first terminal device. Consequently, information that is originally carried in the counting request b1 may be divided into a plurality of pieces for sending, to implement load distribution.

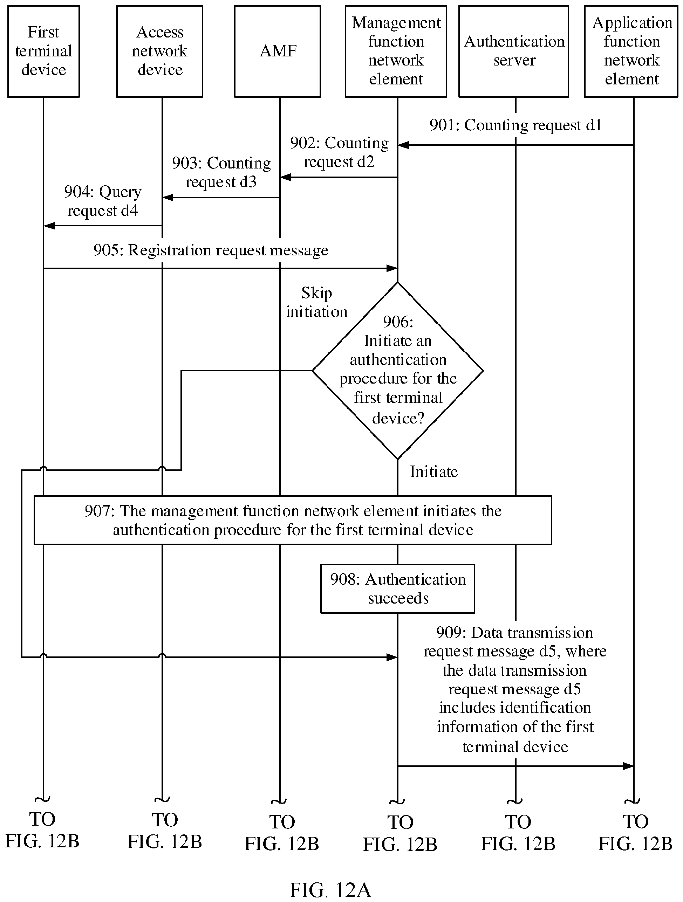

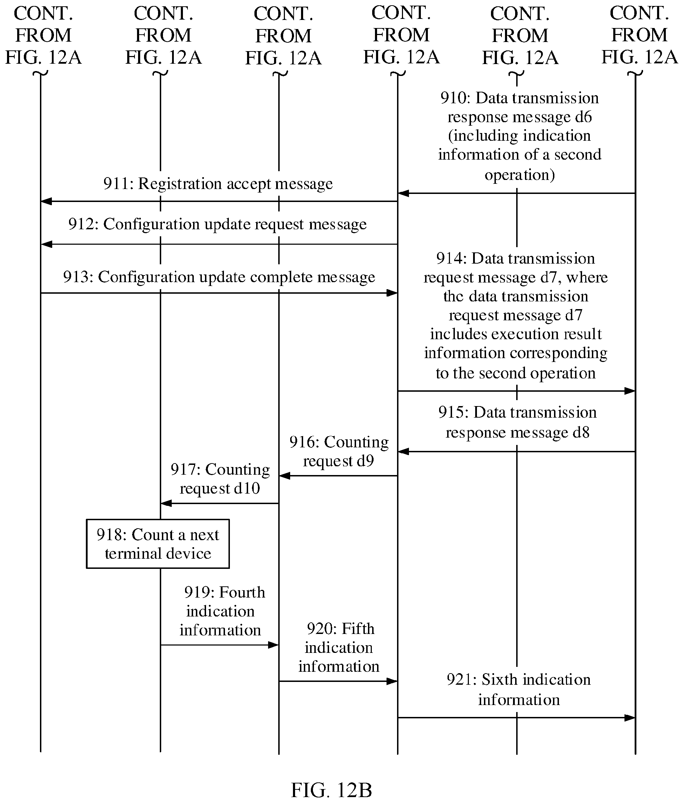

The following further describes the communication method in FIG. 9A and FIG. 9B in the foregoing embodiment with reference to FIG. 12A and FIG. 12B in a specific embodiment. FIG. 12A and FIG. 12B show an example of a schematic flowchart of still another communication method according to an embodiment of this application. In the solution shown in FIG. 12A and FIG. 12B, for related content of a first network element, refer to the descriptions in FIG. 9A and FIG. 9B. Details are not described herein again.

Compared with FIG. 9A and FIG. 9B, FIG. 12A and FIG. 12B have the following differences.

A counting request d1 in step 901 in FIG. 12A and FIG. 12B may not carry indication information of a second operation, and an application function network element may carry the indication information of the second operation to a data transmission response message d6 in step 910. The data transmission response message d6 in step 910 in FIG. 12A and FIG. 12B may be further for requesting to perform the second operation on a first terminal device.

After receiving the indication information of the second operation in step 910, a management function network element may trigger a subsequent step 912, to trigger the second operation to be performed on the first terminal device. It should be noted that the counting request d1 in FIG. 12A and FIG. 12B may not carry the indication information of the second operation, and therefore a counting request d2 in FIG. 12A and FIG. 12B does not carry the indication information of the second operation either.

It can be learned from the solution in FIG. 12A and FIG. 12B that the application function network element can first initiate a request for querying an identifier of the first terminal device, and then, after subsequently finding the first terminal device, initiate a request for performing the second operation on the first terminal device. In this way, when second operations corresponding to two terminal devices are different, the application function network element may send, by using the data transmission response message, the indication information of the second operation corresponding to the first terminal device. Consequently, information that is originally carried in the counting request d1 may be divided into a plurality of pieces for sending, to implement load distribution.

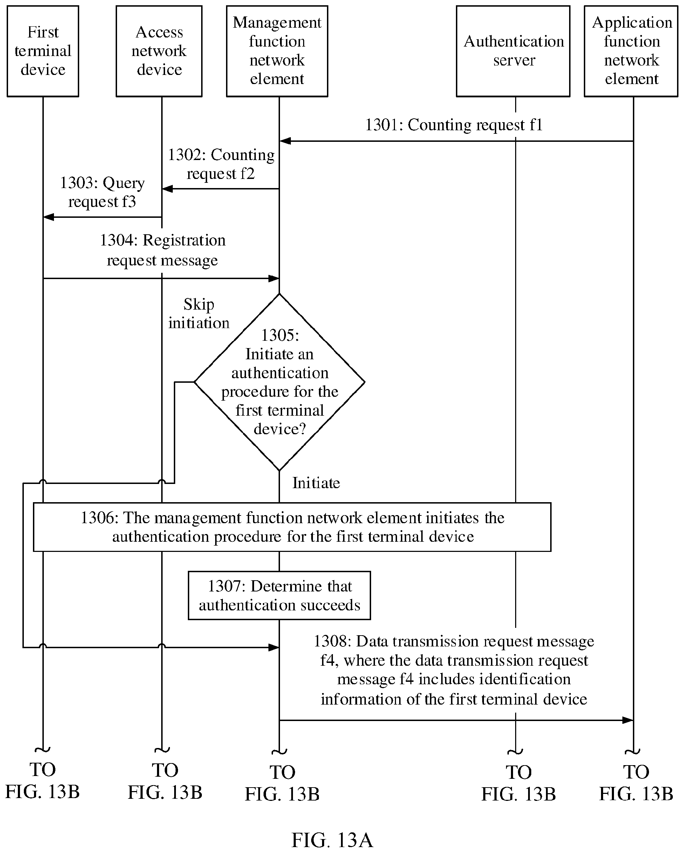

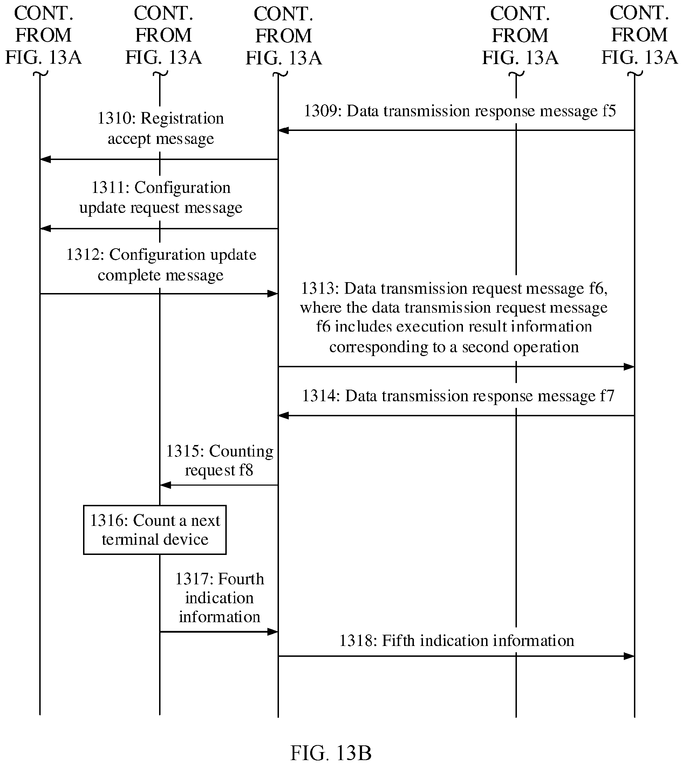

The following further describes the communication methods in FIG. 5, FIG. 6A and FIG. 6B, FIG. 7A and FIG. 7B, FIG. 8A and FIG. 8B, FIG. 9A and FIG. 9B, FIG. 10A and FIG. 10B, FIG. 11A and FIG. 11B, and FIG. 12A and FIG. 12B in the foregoing embodiments with reference to FIG. 13A and FIG. 13B in a specific embodiment. FIG. 13A and FIG. 13B show an example of a schematic flowchart of still another communication method.

A management function network element in FIG. 13A and FIG. 13B may be the management function network element in FIG. 4d, FIG. 4e, or FIG. 4f, or may be the AMF network element in FIG. 4d or a management function network element in the AMF network element.

When the management function network element in FIG. 13A and FIG. 13B may be the management function network element in FIG. 4d, FIG. 4e, or FIG. 4f, in the solution shown in FIG. 13A and FIG. 13B, an example in which a first network element may be a management function network element or a unit, module, or chip in a management function network element is used for description. For example, the first network element may be the management function network element in FIG. 4d, FIG. 4e, or FIG. 4f or a unit in the management function network element.

When the management function network element in FIG. 13 A and FIG. 13B is the AMF network element in FIG. 4d or the management function network element in the AMF network element, in the solution shown in FIG. 13A and FIG. 13B, the management function network element may be replaced with the AMF network element. When the management function network element in FIG. 13A and FIG. 13B is replaced with the AMF network element in FIG. 4d or the management function network element in the AMF network element, in the solution shown in FIG. 13A and FIG. 13B, the first network element may be the AMF network element or the management function network element in the AMF network element.

In FIG. 13A and FIG. 13B, an example in which the management function network element is the AMF in FIG. 4d, FIG. 4e, or FIG. 4f or the management function network element and the first network element is the management function network element is used for description.

As shown in FIG. 13A and FIG. 13B, the method includes the following steps.

Step 1301: The application function network element sends a counting request f1 to the management function network element.

Correspondingly, the management function network element receives the counting request f1.

For the architecture of the network system shown in FIG. 4d, FIG. 4e, or FIG. 4f, the management function network element may receive the counting request f1 from the NEF or the application function network element. In this procedure, an example in which the management function network element receives the counting request f1 from the application function network element is used for description.

When the first network element is the management function network element, a first message in this embodiment of this application may be the counting request f1. The counting request f1 is for requesting to perform a target operation on one or more terminal devices.

For related content of the counting request f1, refer to the related content of the foregoing counting request a1 or counting request b1. Details are not described again.

Step 1302: The management function network element sends a counting request f2 to one or more access network devices.

Correspondingly, the access network device receives the counting request f2.

In step 1302, the management function network element may determine the one or more access network devices based on at least one piece of content such as terminal device indication information, indication information of a target area, or application identification information included in the counting request f1. The management function network element sends the counting request f2 to each determined access network device.

A solution for determining the access network device based on information included in the counting request f1 is similar to a previous manner in which the management function network element determines the access network device based on information included in the counting request a1. Details are not described again.

The counting request f2 is similar to the counting request a3. Details are not described again.

Step 1303: The access network device sends a query request f3 to a first terminal device. The query request f3 is for requesting to obtain identification information of the one or more terminal devices.

The query request f3 in this embodiment of this application may be an implementation form of the third message.

For related content of the query request f3, refer to the related content of the query request a4. Details are not described again. For related content of step 1303, refer to the related content of step 604. Details are not described again.

Step 1304: The first terminal device sends a registration request message to the management function network element, where the registration request message includes identification information of the first terminal device.

For related content of step 1304, refer to the related content of step 605. Details are not described again.

Step 1305: The management function network element determines whether to initiate an authentication procedure for the first terminal device.

When determining that the authentication procedure needs to be initiated, the management function network element performs step 1306.

When determining that the authentication procedure does not need to be initiated, the management function network element performs step 1308.

For related content of step 1305, refer to the related content of step 606. Details are not described again.

Step 1306: The management function network element initiates the authentication procedure for the first terminal device.

For related content of step 1306, refer to the related content of step 607. Details are not described again.

Step 1307: The management function network element determines that authentication succeeds.

For related content of step 1307, refer to the related content of step 608. Details are not described again.

An example of step 1305 to step 1307 is a possible implementation. During specific implementation, step 1305 to step 1307 may not be performed.

Step 1308: The management function network element sends a data transmission request message f4 to the application function network element, where the data transmission request message f4 includes the identification information of the first terminal device.

For related content of the data transmission request message f4, refer to the related content of the foregoing data transmission request message a5. Details are not described herein again.

For related content of step 1308, refer to the related content of step 609. Details are not described again.

Step 1309: The application function network element sends a data transmission response message f5 to the management function network element, where the data transmission response message f5 indicates that the application function network element receives the identification information of the first terminal device.

For related content of the data transmission response message f5, refer to the related content of the foregoing data transmission response message a6. Details are not described herein again. For related content of step 1309, refer to the related content of step 610. Details are not described again.

Step 1310: The management function network element sends a registration accept message to the first terminal device.

The registration accept message indicates that the first terminal device is successfully registered.

For related content of step 1310, refer to the related content of step 611. Details are not described again.

Step 1311: The management function network element sends a configuration update request message to the first terminal device, where the configuration update request message includes second indication information, and the second indication information indicates to perform a second operation on the one or more terminal devices.

Correspondingly, the first terminal device receives the configuration update request message.

For related content of step 1311, refer to the related content of step 712. Details are not described again.

Step 1312: The first terminal device sends a configuration update complete message to the management function network element, where the configuration update complete message includes execution result information corresponding to the second operation.

In step 1312, after receiving the configuration update request message, the first terminal device may perform the second operation, obtain the execution result information corresponding to the second operation, and then send the configuration update complete message to the management function network element.

For related content of step 1312, refer to the related content of the foregoing step 713. Details are not described again.

Step 1313: The management function network element sends a data transmission request message f6 to the application function network element, where the data transmission request message f6 includes the execution result information corresponding to the second operation.

Correspondingly, the application function network element receives the data transmission request message f6.

For related content of step 1313, refer to the related content of the foregoing step 714. Details are not described again.

Step 1314: The application function network element sends a data transmission response message f7 to the management function network element, where the data transmission response message f7 indicates that the application function network element successfully receives the data transmission request message f6.

In a possible implementation, when the second operation does not include a read operation, for example, the second operation includes a write operation and a lock operation, step 1313 and step 1314 may not be performed either. To be specific, the management function network element may not feed back, to the application function network element either, the execution result information corresponding to the second operation.

Step 1315: The management function network element sends a counting request f8 to the access network device, where the counting request f8 includes first indication information, and the first indication information indicates at least one of the following content: indicating that the target operation performed on the first terminal device is completed, indicating to query identification information of a next terminal device, or indicating to perform a next random access procedure.

Correspondingly, the access network device receives the counting request f8.

For related content of step 1315, refer to the related content of the foregoing step 716. Details are not described again.

Step 1316: The access network device counts the next terminal device.

For related content of step 1316, refer to the related content of step 717. Details are not described again.

Step 1317: The access network device sends fourth indication information to the management function network element.

Correspondingly, the management function network element receives the fourth indication information from the access network device.

The fourth indication information may indicate that obtaining identification information of a terminal device that corresponds to the access network device and that are in the one or more terminal devices is completed or the target operation is completed. For related content of the fourth indication information, refer to the foregoing descriptions. Details are not described again.

Step 1318: The management function network element sends fifth indication information to the application function network element.

Correspondingly, the application function network element receives the fifth indication information.

The fifth indication information may indicate that obtaining the identification information of the terminal device in the one or more terminal devices is completed or the target operation is completed.

The management function network element may receive the fourth indication information from the one or more access network devices, and each access network device corresponds to one piece of fourth indication information. After receiving fourth indication information sent by a plurality of access network devices (which may be, for example, all access network devices in the target area) in the target area, the management function network element may send the fifth indication information to the application function network element. The fifth indication information may indicate that obtaining identification information of a terminal device that corresponds to the AMF and that is in the one or more terminal devices is completed or the target operation is completed. Alternatively, the fifth indication information may indicate that current counting initiated by the application function network element is completed.

It can be learned from the solution shown in FIG. 13A and FIG. 13B that the management function network element can directly communicate with the access network device, to simplify a solution procedure, so as to increase a processing speed of the solution.

In embodiments of this application, that a network element (for example, a network element A) receives information from another network element (for example, a network element B) may mean that the network element A directly receives the information from the network element B, or may mean that the network element A receives the information from the network element B by using another network element (for example, a network element C). When the network element A receives the information from the network element B by using the network element C, the network element C may transparently transmit the information, or may process the information, for example, carry the information in different messages for transmission, or screen the information, and send, to the network element A, only information obtained through screening. Similarly, in various embodiments of this application, that the network element A sends information to the network element B may mean that the network element A directly sends the information to the network element B, or may mean that the network element A sends the information to the network element B by using another network element (for example, the network element C).

The terms "system" and "network" may be used interchangeably in embodiments of this application. "At least one" means one or more, and "a plurality of" means two or more. The term "and/or" describes an association relationship between associated objects and indicates that three relationships may exist. For example, A and/or B may indicate the following cases: Only A exists, both A and B exist, and only B exists. A and B may be singular or plural. The character "/" generally indicates an "or" relationship between associated objects. "At least one of the following items (pieces)" or a similar expression thereof means any combination of these items, including any combination of singular items (pieces) or plural items (pieces). For example, at least one of a, b, or c may indicate: a, b, c, a and b, a and c, b and c, or a, b, and c, where a, b, and c may be singular or plural.

In addition, unless otherwise specified, ordinal numbers such as "first" and "second" mentioned in embodiments of this application are for distinguishing between a plurality of objects, but are not for limiting a sequence, a time sequence, priorities, or importance of the plurality of obj ects.

It should be noted that names of the foregoing messages are merely examples. With evolution of a communication technology, the name of any foregoing message may change. However, regardless of how the names of the messages change, provided that meanings of the messages are the same as those of the messages in this application, the messages fall within the protection scope of this application.

The foregoing mainly describes the solutions provided in this application from a perspective of interaction between the network elements. It may be understood that, to implement the foregoing functions, each network element includes a corresponding hardware structure and/or software module for executing each function. A person skilled in the art should easily be aware that, in combination with the examples described in embodiments disclosed in this specification, units and algorithm steps may be implemented by hardware or a combination of hardware and computer software in the present invention. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of the present invention.

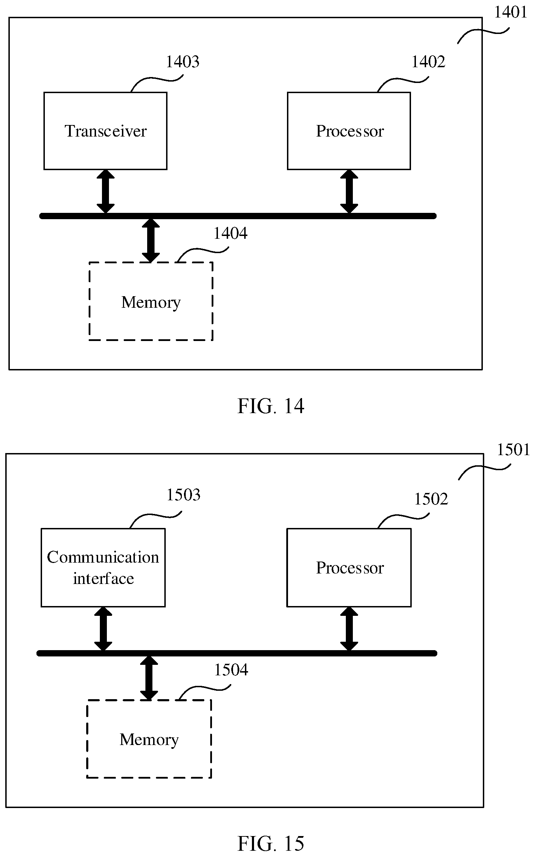

According to the foregoing method, FIG. 14 is a schematic diagram of a structure of a communication apparatus according to an embodiment of this application. As shown in FIG. 14, the communication apparatus may be a terminal device, a first network element, or an access network device, or may be a chip or a circuit, for example, a chip or a circuit that may be disposed in a terminal device, for another example, a chip or a circuit that may be disposed in a first network element, or for another example, a chip or a circuit that may be disposed in an access network device.

The communication apparatus 1401 includes a processor 1402 and a transceiver 1403.

Further, the communication apparatus 1401 may include a memory 1404. In the figure, the memory 1404 is in a dashed line box, which further indicates that the memory is optional.

Further, the communication apparatus 1401 may further include a bus system. The processor 1402, the memory 1404, and the transceiver 1403 may be connected through the bus system.

It should be understood that the processor 1402 may be a chip. For example, the processor 1402 may be a field programmable gate array (field programmable gate array, FPGA), an application-specific integrated circuit (application-specific integrated circuit, ASIC), a system on a chip (system on a chip, SoC), a central processing unit (central processing unit, CPU), a network processor (network processor, NP), a digital signal processor (digital signal processor, DSP), a microcontroller unit (microcontroller unit, MCU), a programmable logic device (programmable logic device, PLD), or another integrated chip.

In an implementation process, the steps in the foregoing method may be implemented by using a hardware integrated logic circuit in the processor 1402, or by using instructions in a form of software. The steps of the method disclosed with reference to embodiments of this application may be directly performed by a hardware processor, or may be performed by using a combination of hardware in the processor 1402 and a software module. The software module may be located in a mature storage medium in the art, for example, a random access memory, a flash memory, a read-only memory, a programmable read-only memory, electrically erasable programmable memory, or a register. The storage medium is located in the memory 1404. The processor 1402 reads information in the memory 1404, and completes the steps in the foregoing method in combination with hardware of the processor 1402.

It should be noted that the processor 1402 in this embodiment of this application may be an integrated circuit chip, and has a signal processing capability. In an implementation process, the steps in the foregoing method embodiment may be implemented by using a hardware integrated logic circuit in the processor, or by using instructions in a form of software. The processor may be a general-purpose processor, a digital signal processor (DSP), an application-specific integrated circuit (ASIC), a field programmable gate array (FPGA) or another programmable logic device, a discrete gate or a transistor logic device, or a discrete hardware component, and may implement or perform the methods, the steps, and logical block diagrams that are disclosed in embodiments of this application. The general-purpose processor may be a microprocessor, or the processor may be any conventional processor or the like. The steps of the method disclosed with reference to embodiments of this application may be directly performed and accomplished by a hardware decoding processor, or may be performed and accomplished by using a combination of hardware in a decoding processor and a software module. The software module may be located in a mature storage medium in the art, for example, a random access memory, a flash memory, a read-only memory, a programmable read-only memory, electrically erasable programmable memory, or a register. The storage medium is located in a memory. The processor reads information in the memory and completes the steps in the foregoing method in combination with the hardware of the processor.

It may be understood that the memory 1404 in this embodiment of this application may be a volatile memory or a non-volatile memory, or may include both a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (Random Access Memory, RAM), and is used as an external cache. By way of example but not limitation, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus dynamic random access memory (direct rambus RAM, DR RAM). It should be noted that the memory of the system and method described in this specification includes but is not limited to these memories and any memory of another proper type.

When the communication apparatus 1401 corresponds to the first network element in the foregoing method, the processor 1402 performs the following operations by using the transceiver 1403: receiving a first message, where the first message is for requesting to perform a target operation on one or more terminal devices; sending request information to an access network device, where the request information is for requesting to obtain identification information of the one or more terminal devices; and receiving a second message from a first terminal device, where the second message includes identification information of the first terminal device, and the first terminal device is a terminal device in the one or more terminal devices.

When the communication apparatus 1401 corresponds to the first network element in the foregoing method, in a possible implementation, the processor 1402 further performs the following operation by using the transceiver 1403: the target operation includes a first operation, and the first operation is an operation of querying terminal device identification information for the one or more terminal devices; sending first indication information to the access network device, where the first indication information indicates at least one of the following content: indicating that the target operation performed on the first terminal device is completed, indicating to query identification information of a next terminal device, or indicating to perform a next random access procedure.

When the communication apparatus 1401 corresponds to the first network element in the foregoing method, in a possible implementation, the processor 1402 further performs the following operations by using the transceiver 1403: obtaining second indication information, where the second indication information indicates to perform a second operation on the one or more terminal devices; and after receiving the second message from the first terminal device, and before sending the first indication information to the access network device, further including: sending the second indication information to the first terminal device; and receiving execution result information that corresponds to the second operation and that is from the first terminal device.

When the communication apparatus 1401 corresponds to the first network element in the foregoing method, in a possible implementation, the processor 1402 further performs the following operation by using the transceiver 1403: obtaining the second indication information from the first message, where the target operation includes the second operation; or receiving the second indication information after receiving the second message.

When the communication apparatus 1401 corresponds to the first network element in the foregoing method, in a possible implementation, the target operation includes a third operation. The request information further includes indication information of the third operation. The second message further includes execution result information corresponding to the third operation.

When the communication apparatus 1401 corresponds to the first network element in the foregoing method, in a possible implementation, the first message further includes indication information of a target area and/or application identification information. The access network device is an access network device in the target area. The processor 1402 further performs the following operation by using the transceiver 1403: determining the access network device based on the indication information of the target area and/or the application identification information.

When the communication apparatus 1401 corresponds to the first network element in the foregoing method, in a possible implementation, when the method is performed by an access and mobility management function network element, the processor 1402 further performs the following operation by using the transceiver 1403: sending a first authentication request message, where the first authentication request message is for requesting to perform authentication on the first terminal device, and/or perform authentication on a network accessed by the first terminal device.

When the communication apparatus 1401 corresponds to the first network element in the foregoing method, in a possible implementation, when the method is performed by a management function network element, the processor 1402 further performs the following operation by using the transceiver 1403: sending a second authentication request message to an access and mobility management function network element, where the second authentication request message is for requesting the access and mobility management function network element to initiate authentication to be performed on the first terminal device and/or authentication to be performed on the network accessed by the first terminal device.

When the communication apparatus 1401 corresponds to the first network element in the foregoing method, in a possible implementation, the first message further includes address information of an authentication server and/or third indication information. The third indication information indicates to perform authentication on the first terminal device and/or perform authentication on the network accessed by the first terminal device. The processor 1402 further performs the following operation by using the transceiver 1403: determining, based on the address information of the authentication server and/or the third indication information, to perform authentication on the first terminal device and/or to perform authentication on the network accessed by the first terminal device.

When the communication apparatus 1401 corresponds to the first network element in the foregoing method, in a possible implementation, the processor 1402 further performs the following operations by using the transceiver 1403: receiving an authentication success response message, where the authentication success response message indicates that the first terminal device is successfully authenticated, and/or the network accessed by the first terminal device is successfully authenticated; and sends the identification information of the first terminal device to the application function network element.

When the communication apparatus 1401 corresponds to the first network element in the foregoing method, in a possible implementation, the processor 1402 further performs the following operation by using the transceiver 1403: sending a sixth message to the application function network element, where the sixth message includes the identification information of the first terminal device and identification information of another terminal device in the one or more terminal devices.

When the communication apparatus 1401 corresponds to the first network element in the foregoing method, in a possible implementation, the target operation includes the second operation. The processor 1402 further performs the following operations by using the transceiver 1403: receiving an authentication success response message, where the authentication success response message indicates that the authentication server successfully authenticates the first terminal device, and/or successfully authenticates the network accessed by the first terminal device; sending the identification information of the first terminal device to the application function network element; and sending, to the application function network element, the execution result information obtained by performing the second operation on the first terminal device.

When the communication apparatus 1401 corresponds to the first network element in the foregoing method, in a possible implementation, the processor 1402 further performs the following operation by using the transceiver 1403: sending a seventh message to the application function network element, where the seventh message includes the identification information of the first terminal device, the execution result information obtained by performing the second operation on the first terminal device, the identification information of the another terminal device in the one or more terminal devices, and execution result information obtained by performing the second operation on the another terminal device in the one or more terminal devices.

When the communication apparatus 1401 corresponds to the first network element in the foregoing method, in a possible implementation, the second operation includes a read operation. The execution result information corresponding to the second operation includes data obtained after the read operation is performed. The processor 1402 further performs the following operations by using the transceiver 1403: receiving a key from the authentication server, and sending the key to the first terminal device, where the data in the execution result information that corresponds to the second operation and that is received from the first terminal device is encrypted by using the key.

When the communication apparatus 1401 corresponds to the first network element in the foregoing method, in a possible implementation, the processor 1402 further performs the following operations by using the transceiver 1403: receiving fourth indication information from the access network device, where the fourth indication information indicates that the target operation performed on a terminal device that corresponds to the access network device and that is in the one or more terminal devices is completed; and sending fifth indication information to the application function network element, where the fifth indication information indicates that the target operation performed on the one or more terminal devices is completed.

When the communication apparatus 1401 corresponds to the terminal device in the foregoing method, the processor 1402 performs the following operations by using the transceiver 1403: receiving a third message from an access network device, where the third message is for requesting to obtain identification information of one or more terminal devices; and sending a second message to a first network element, where the second message includes identification information of a first terminal device, and the first terminal device is a terminal device in the one or more terminal devices.

When the communication apparatus 1401 corresponds to the terminal device in the foregoing method, in a possible implementation, the processor 1402 further performs the following operations by using the transceiver 1403: receiving second indication information, where the second indication information indicates to perform a second operation on the one or more terminal devices; and sending execution result information corresponding to the second operation to the first network element.

When the communication apparatus 1401 corresponds to the terminal device in the foregoing method, in a possible implementation, the processor 1402 further performs the following operations by using the transceiver 1403: receiving a key from an authentication server, where the key is for encrypting to-be-sent information.

When the communication apparatus 1401 corresponds to the access network device in the foregoing method, the processor 1402 performs the following operations by using the transceiver 1403: receiving request information from a first network element, where the request information is for requesting to obtain identification information of one or more terminal devices; sending a third message to a first terminal device, where the third message is for requesting to obtain the identification information of the one or more terminal devices; receiving a fourth message from the first terminal device, where the fourth message includes identification information of the first terminal device, and the first terminal device is a terminal device in the one or more terminal devices; and sending an eighth message to the first network element, where the eighth message includes the identification information of the first terminal device.

When the communication apparatus 1401 corresponds to the access network device in the foregoing method, in a possible implementation, the processor 1402 further performs the following operations by using the transceiver 1403: receiving first indication information from the first network element, where the first indication information indicates at least one of the following content: indicating that a target operation performed on the first terminal device is completed, indicating to query identification information of a next terminal device, or indicating to perform a next random access procedure; and sending a fifth message to the one or more terminal devices, where the fifth message is for requesting to obtain the identification information of the one or more terminal devices.

When the communication apparatus 1401 corresponds to the access network device in the foregoing method, in a possible implementation, the processor 1402 further performs the following operations by using the transceiver 1403: receiving second indication information from the first network element, where the second indication information indicates to perform a second operation on the one or more terminal devices; sending the second indication information to the first terminal device; receiving execution result information that corresponds to the second operation and that is from the first terminal device; and sending execution result information corresponding to the second operation to the first network element.

When the communication apparatus 1401 corresponds to the access network device in the foregoing method, in a possible implementation, the processor 1402 further performs the following operation by using the transceiver 1403: sending fourth indication information to the first network element after it is determined that the target operation performed on a terminal device that corresponds to the access network device and that is in the one or more terminal devices, where the fourth indication information indicates that the target operation performed on the terminal device that corresponds to the access network device and that is in the one or more terminal devices is completed.

For a concept, an explanation, a detailed description, and another step with respect to the communication apparatus that are related to the technical solutions provided in embodiments of this application, refer to descriptions of the content in the foregoing method or another embodiment. Details are not described herein.

According to the foregoing method, FIG. 15 is a schematic diagram of a structure of a communication apparatus according to an embodiment of this application. As shown in FIG. 15, the communication apparatus 1501 may include a communication interface 1503 and a processor 1502. Further, the communication apparatus 1501 may include a memory 1504. In the figure, the memory 1504 is in a dashed line box, which further indicates that the memory is optional. The communication interface 1503 is configured to input and/or output information. The processor 1502 is configured to execute a computer program or instructions, to enable to the communication apparatus 1501 to implement the method of the first network element in the related solution in FIG. 5, FIG. 6A and FIG. 6B, FIG. 7A and FIG. 7B, FIG. 8A and FIG. 8B, FIG. 9A and FIG. 9B, FIG. 10A and FIG. 10B, FIG. 11A and FIG. 11B, FIG. 12A and FIG. 12B, or FIG. 13A and FIG. 13B, or to enable the communication apparatus 1501 to implement the method of the terminal device (for example, the first terminal device side) in the related solution in FIG. 5, FIG. 6A and FIG. 6B, FIG. 7A and FIG. 7B, FIG. 8A and FIG. 8B, FIG. 9A and FIG. 9B, FIG. 10A and FIG. 10B, FIG. 11A and FIG. 11B, FIG. 12A and FIG. 12B, or FIG. 13A and FIG. 13B, or to enable the communication apparatus 1501 to implement the method of the access network device in the related solution in FIG. 5, FIG. 6A and FIG. 6B, FIG. 7A and FIG. 7B, FIG. 8A and FIG. 8B, FIG. 9A and FIG. 9B, FIG. 10A and FIG. 10B, FIG. 11A and FIG. 11B, FIG. 12A and FIG. 12B, or FIG. 13A and FIG. 13B. In this embodiment of this application, the communication interface 1503 may implement the solution implemented by the transceiver 1403 in FIG. 14. The processor 1502 may implement the solution implemented by the processor 1402 in FIG. 14. The memory 1504 may implement the solution implemented by the memory 1404 in FIG. 14. Details are not described herein again.

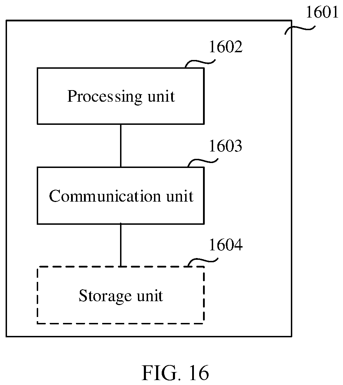

Based on the foregoing embodiments and a same concept, FIG. 16 is a schematic diagram of a communication apparatus according to an embodiment of this application. As shown in FIG. 16, the communication apparatus 1601 may be a terminal device or a network device, or may be a chip or a circuit, for example, a chip or a circuit that may be disposed in a terminal device or a network device.

The communication apparatus 1601 includes a processing unit 1602 and a communication unit 1603. Further, the communication apparatus 1601 may include a storage unit 1604, or may not include a storage unit 1604. In the figure, the storage unit 1604 is in a dashed line box, which further indicates that the memory is optional.

When the communication apparatus 1601 corresponds to the first network element in the foregoing method, the processing unit 1602 performs the following operations by using the communication unit 1603: receiving a first message, where the first message is for requesting to perform a target operation on one or more terminal devices; sending request information to an access network device, where the request information is for requesting to obtain identification information of the one or more terminal devices; and receiving a second message from a first terminal device, where the second message includes identification information of the first terminal device, and the first terminal device is a terminal device in the one or more terminal devices.

When the communication apparatus 1601 corresponds to the terminal device in the foregoing method, the processing unit 1602 performs the following operations by using the communication unit 1603: receiving a third message from an access network device, where the third message is for requesting to obtain identification information of one or more terminal devices; and sending a second message to a first network element, where the second message includes identification information of a first terminal device, and the first terminal device is a terminal device in the one or more terminal devices.

When the communication apparatus 1601 corresponds to the access network device in the foregoing method, the processing unit 1602 performs the following operations by using the communication unit 1603: receiving request information from a first network element, where the request information is for requesting to obtain identification information of one or more terminal devices; sending a third message to a first terminal device, where the third message is for requesting to obtain the identification information of the one or more terminal devices; receiving a fourth message from the first terminal device, where the fourth message includes identification information of the first terminal device, and the first terminal device is a terminal device in the one or more terminal devices; and sending an eighth message to the first network element, where the eighth message includes the identification information of the first terminal device.

For a concept, an explanation, a detailed description, and another step with respect to the communication apparatus that are related to the technical solutions provided in embodiments of this application, refer to descriptions of the content in the foregoing method or another embodiment. Details are not described herein.

It may be understood that, for a function of each unit in the communication apparatus 1601, refer to an implementation of a corresponding method embodiment. Details are not described herein again.

It should be understood that division into the units of the communication apparatus is merely logical function division. During actual implementation, all or some of the units may be integrated into a physical entity, or may be physically separated. In this embodiment of this application, the communication unit 1603 may be implemented by the transceiver 1403 in FIG. 14, and the processing unit 1602 may be implemented by the processor 1402 in FIG. 14.

According to the method provided in embodiments of this application, this application further provides a computer program product. The computer program product includes computer program code or instructions. When the computer program code or the instructions are run on a computer, the computer is enabled to perform the method in any one of the embodiments shown in FIG. 5, FIG. 6A and FIG. 6B, FIG. 7A and FIG. 7B, FIG. 8A and FIG. 8B, FIG. 9A and FIG. 9B, FIG. 10A and FIG. 10B, FIG. 11A and FIG. 11B, FIG. 12A and FIG. 12B, and FIG. 13A and FIG. 13B.

According to the method provided in embodiments of this application, this application further provides a computer-readable storage medium. The computer-readable medium stores program code. When the program code is run on a computer, the computer is enabled to perform the method in any one of the embodiments shown in FIG. 5, FIG. 6A and FIG. 6B, FIG. 7A and FIG. 7B, FIG. 8A and FIG. 8B, FIG. 9A and FIG. 9B, FIG. 10A and FIG. 10B, FIG. 11A and FIG. 11B, FIG. 12A and FIG. 12B, and FIG. 13Aand FIG. 13B.

According to the method provided in embodiments of this application, this application further provides a chip system. The chip system may include a processor. The processor is coupled to a memory, and may be configured to perform the method in any one of the embodiments shown in FIG. 5, FIG. 6A and FIG. 6B, FIG. 7A and FIG. 7B, FIG. 8A and FIG. 8B, FIG. 9A and FIG. 9B, FIG. 10A and FIG. 10B, FIG. 11A and FIG. 11B, FIG. 12A and FIG. 12B, and FIG. 13A and FIG. 13B. Optionally, the chip system further includes a memory. The memory is configured to store a computer program (which may also be referred to as code or instructions). The processor is configured to invoke the computer program from the memory and run the computer program, to enable a device, that is equipped with the chip system, to perform the method in the any one of the embodiments shown in FIG. 5, FIG. 6A and FIG. 6B, FIG. 7A and FIG. 7B, FIG. 8A and FIG. 8B, FIG. 9A and FIG. 9B, FIG. 10A and FIG. 10B, FIG. 11A and FIG. 11B, FIG. 12A and FIG. 12B, and FIG. 13A and FIG. 13B.

According to the method provided in embodiments of this application, this application further provides a system. The system includes one or more of the foregoing first network element and access network device.

Optionally, the system further includes a terminal device (for example, the first terminal device).

All or some of the foregoing embodiments may be implemented by using software, hardware, firmware, or any combination thereof. When software is used to implement the foregoing embodiments, all or some of the foregoing embodiments may be implemented in a form of a computer program product. The computer program product includes one or more computer instructions. When the computer instruction is loaded and executed on a computer, the procedure or functions according to embodiments of this application are all or partially generated. The computer may be a general-purpose computer, a dedicated computer, a computer network, or another programmable apparatus. The computer instruction may be stored in a computer-readable storage medium, or may be transmitted from a computer-readable storage medium to another computer-readable storage medium. For example, the computer instruction may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, for example, a server or a data center, integrating one or more usable media. The usable medium may be a magnetic medium (for example, a floppy disk, a hard disk, or a magnetic tape), an optical medium (for example, a high-density digital video disc (digital video disc, DVD)), a semiconductor medium (for example, a solid-state drive (solid-state drive, SSD)), or the like.

It should be noted that a part of this patent application document includes copyright-protected content. The copyright owner reserves the copyright except copies are made for the patent documents or the recorded content of the patent documents in the Patent Office.

The network device and the terminal device in the foregoing apparatus embodiments correspond to the network device or the terminal device in the method embodiments. A corresponding module or unit performs a corresponding step. For example, a communication unit (a transceiver) performs a receiving step or a sending step in the method embodiments, and a step other than the sending step and the receiving step may be performed by a processing unit (a processor). For a function of a specific unit, refer to a corresponding method embodiment. There may be one or more processors.

Terminologies such as "component", "module", and "system" used in this specification are for indicating computer-related entities, hardware, firmware, combinations of hardware and software, software, or software being executed. For example, a component may be but is not limited to a process that runs on a processor, a processor, an object, an executable file, an execution thread, a program, and/or a computer. As illustrated by using figures, both a computing device and an application that runs on the computing device may be components. One or more components may reside within a process and/or an execution thread, and the component may be located on one computer and/or distributed between two or more computers. In addition, these components may be executed from various computer-readable media that store various data structures. For example, the components may communicate by using a local process and/or a remote process and based on a signal having one or more data packets (for example, data from two components interacting with another component in a local system and/or a distributed system, and/or across a network, for example, the internet interacting with another system by using the signal).

A person of ordinary skill in the art may be aware that, in combination with illustrative logical blocks (illustrative logical blocks) described in embodiments disclosed in this specification and steps (steps) may be implemented by electronic hardware or a combination of computer software and electronic hardware. Whether these functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for convenience and brevity of description, for a detailed working process of the foregoing system, apparatus, and unit, refer to a corresponding process in the foregoing method embodiment. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

The units described as separate parts may or may not be physically separate, and parts displayed as units may or may not be physical units, that is, may be located in one position, or may be distributed on a plurality of network units. Some or all of the units may be selected based on an actual requirement to achieve the objectives of the solutions in embodiments.

In addition, functional units in embodiments of this application may be integrated into one processing unit, or each of the units may exist alone physically, or two or more units may be integrated into one unit. When functions are implemented in a form of a software functional unit and sold or used as an independent product, the functions may be stored in a computer-readable storage medium.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, wherein the method comprises:
receiving a first message, wherein the first message is for requesting to perform a target operation on one or more terminal devices;
sending request information to an access network device, wherein the request information is for requesting to obtain identification information of the one or more terminal devices;
receiving a second message from a first terminal device, wherein the second message comprises identification information of the first terminal device, and the first terminal device is a terminal device in the one or more terminal devices; and
sending first indication information to the access network device, wherein the first indication information indicates at least one of the following content: indicating that the target operation performed on the first terminal device is completed, indicating to query identification information of a next terminal device, or indicating to perform a next random access procedure.

2. The method according to claim 1, wherein the target operation comprises a first operation, and the first operation is an operation of querying terminal device identification information for the one or more terminal devices.

3. The method according to claim 1, wherein the method further comprises:
obtaining second indication information, wherein the second indication information indicates to perform a second operation on the one or more terminal devices; and
after the receiving a second message from a first terminal device and before the sending first indication information to the access network device, the method further comprises:
sending the second indication information to the first terminal device; and
receiving execution result information that corresponds to the second operation and that is from the first terminal device.

4. The method according to claim 3, wherein the obtaining second indication information comprises:
obtaining the second indication information from the first message, wherein the target operation comprises the second operation;
or
receiving the second indication information after the second message is received.

5. The method according to any one of claims 1 to 4, wherein the target operation comprises a third operation;
the request information further comprises indication information of the third operation; and
the second message further comprises execution result information corresponding to the third operation.

6. The method according to any one of claims 1 to 5, wherein the first message further comprises indication information of a target area and/or application identification information, and the access network device is an access network device in the target area; and
after the receiving a first message and before the sending request information to an access network device, the method further comprises:
determining the access network device based on the indication information of the target area and/or the application identification information.

7. The method according to any one of claims 1 to 6, wherein
after the receiving a second message from a first terminal device, the method further comprises:
sending a first authentication request message, wherein the first authentication request message is for requesting to perform authentication on the first terminal device, and/or is used by the first terminal device to perform authentication on a network accessed by the first terminal device.

8. The method according to claim 7, wherein the first message further comprises address information of an authentication server and/or third indication information, and the third indication information indicates to perform authentication on the first terminal device and/or perform authentication on the network accessed by the first terminal device; and
after the receiving a second message from a first terminal device, the method further comprises:
determining, based on the address information of the authentication server and/or the third indication information, to perform authentication on the first terminal device and/or to perform authentication on the network accessed by the first terminal device.

9. The method according to any one of claims 1 to 8, wherein after the sending first indication information to the access network device, the method further comprises:
sending, to an application function network element, the identification information of the first terminal device and identification information of another terminal device in the one or more terminal devices.

10. The method according to any one of claims 1 to 9, wherein after the sending first indication information to the access network device, the method further comprises:
sending, to the application function network element, the identification information of the first terminal device, the execution result information obtained by performing the second operation on the first terminal device, the identification information of the another terminal device in the one or more terminal devices, and execution result information obtained by performing the second operation on the another terminal device in the one or more terminal devices.

11. The method according to claim 10, wherein the second operation comprises a read operation, and the execution result information corresponding to the second operation comprises data obtained after the read operation is performed; and
before the sending, to the application function network element, the execution result information obtained by performing the second operation on the first terminal device, the method further comprises:
receiving a key from the authentication server; and
sending the key to the first terminal device, wherein the data in the execution result information that corresponds to the second operation and that is received from the first terminal device is encrypted by using the key.

12. The method according to any one of claims 1 to 11, wherein after the sending first indication information to the access network device, the method further comprises:
receiving fourth indication information from the access network device, wherein the fourth indication information indicates that the access network device completes the target operation performed on the one or more terminal devices.

13. The method according to any one of claims 1 to 12, wherein after the receiving fourth indication information from the first or more access network devices, the method further comprises:
sending fifth indication information to the application function network element, wherein the fifth indication information indicates that the target operation performed on the one or more terminal devices is completed.

14. A communication method, wherein the method comprises:
receiving, by a first terminal device, a third message from an access network device, wherein the third message is for requesting to obtain identification information of one or more terminal devices; and
sending, by the first terminal device, a registration request message to a first network element, wherein the registration request message comprises identification information of the first terminal device, and the first terminal device is a terminal device in the one or more terminal devices.

15. The method according to claim 14, wherein the method further comprises:
receiving second indication information, wherein the second indication information indicates to perform a second operation on the first terminal device; and
sending execution result information corresponding to the second operation to the first network element.

16. A communication method, wherein the method comprises:
receiving request information from a first network element, wherein the request information is for requesting to obtain identification information of one or more terminal devices;
sending a third message to the one or more terminal devices, wherein the third message is for requesting to obtain the identification information of the one or more terminal devices;
receiving a fourth message from a first terminal device, wherein the fourth message comprises identification information of the first terminal device, and the first terminal device is a terminal device in the one or more terminal devices; and
sending the identification information of the first terminal device to the first network element.

17. The method according to claim 16, wherein after the sending the identification information of the first terminal device to the first network element, the method further comprises:
receiving first indication information from the first network element, wherein the first indication information indicates at least one of the following content: indicating to that a target operation performed on the first terminal device is completed, indicating to query identification information of a next terminal device, or indicating to perform a next random access procedure; and
sending a fifth message to the one or more terminal devices, wherein the fifth message is for requesting to obtain the identification information of the one or more terminal devices.

18. The method according to claim 16 or 17, wherein after the receiving a fourth message from a first terminal device, the method further comprises:
after it is determined that the target operation performed on the one or more terminal devices is completed,
sending fourth indication information to the first network element, wherein the fourth indication information indicates that the target operation performed on the one or more terminal devices is completed.

19. A communication apparatus, comprising a communication unit and a processing unit, wherein
the communication unit is configured to input and/or output signaling or data; and
the processing unit is configured to perform, by using the communication unit, the method according to any one of claims 1 to 13, the method according to claim 14 or 15, or the method according to any one of claims 16 to 18.

20. A communication apparatus, comprising a communication interface and a processor, wherein
the communication interface is configured to input and/or output signaling or data; and
the processor is configured to execute a computer-executable program, so that the method according to any one of claims 1 to 13 is performed, the method according to claim 14 or 15 is performed, or the method according to any one of claims 16 to 18 is performed.

21. A communication apparatus, comprising a processor and a memory, wherein
the memory is configured to store a computer program or instructions; and
the processor is configured to execute a computer program or instructions stored in the memory, so that the method according to any one of claims 1 to 13 is performed, the method according to claim 14 or 15 is performed, or the method according to any one of claims 16 to 18 is performed.

22. A computer-readable storage medium, wherein the computer-readable storage medium stores computer-executable instructions, and when the computer-executable instructions are invoked by a computer, the method according to any one of claims 1 to 13 is performed, the method according to claim 14 or 15 is performed, or the method according to any one of claims 16 to 18 is performed.

23. A chip system, comprising a communication interface and a processor, wherein
the communication interface is configured to input and/or output signaling or data; and
the processor is configured to execute a computer-executable program, to enable a device, that is provided with the chip system, to perform the method according to any one of claims 1 to 13, perform the method according to claim 14 or 15, or perform the method according to any one of claims 16 to 18.

24. A communication system, comprising one or more of a communication apparatus configured to perform the method according to any one of claims 1 to 13 and a communication apparatus configured to perform the method according to any one of claims 16 to 18.
